Europäisches Patentamt

European Patent Office

Office européen des brevets

(19)

(11) EP 1 628 253 A1

(12) EUROPEAN PATENT APPLICATION
published in accordance with Art. 158(3) EPC

(43) Date of publication:
22.02.2006 Bulletin 2006/08

(51) Int Cl.:
*G06Q 10/00* (0000.00)

(21) Application number: 04731730.0

(22) Date of filing: 07.05.2004

(86) International application number:
PCT/JP2004/006487

(87) International publication number:
WO 2004/100035 (18.11.2004 Gazette 2004/47)

(84) Designated Contracting States:
DE FR GB IT

(30) Priority: 07.05.2003 JP 2003128792

(71) Applicant: TERASAWA, Takafumi
Okayama-shi, Okayama 700-0082 (JP)

(72) Inventor: TERASAWA, Takafumi
Okayama-shi, Okayama 700-0082 (JP)

(74) Representative: Mounteney, Simon James
Marks & Clerk
90 Long Acre
London WC2E 9RA (GB)

(54) SCHEDULE CREATION METHOD, SCHEDULE CREATION SYSTEM, UNEXPERIENCED SCHEDULE PREDICTION METHOD, AND LEANING SCHEDULE EVALUATION DISPLAY METHOD

(57) A schedule creating method capable of performing an analysis and a prediction with taking an individual attribute or quality of content into consideration by collecting an individual reaction according to a predetermined schedule, a method for predicting an individual reaction to an inexperienced schedule utilizing the above schedule, and a learning schedule assessment displaying method for displaying the results of the prediction are provided. A timing unit includes a presentation unit being a minimum term of generating the event relating the content, an event cycle unit being a predetermined term shorter than an interval being longer than the presentation unit of generating the event and being from a beginning of the event and till an occurrence of a next event, a condition unit being longer than the presentation unit and shorter than the event cycle unit, and a delay term for expressing a difference of starting points when a plurality of schedules are stared. By using the timing unit, a schedule in which an event relating to a specific content occurs.

FIG.5

**Description**

TECHNICAL FIELD

The present invention relates to a schedule creating method, a schedule generating system, an inexperienced schedule predicting method for predicting a future reaction or a most preferable schedule from personal reaction information obtained based on a schedule created in accordance with the schedule creating method, und a learning schedule assessment displaying system for displaying such as contents of the predicted reaction and schedule.

BACKGROUND ART

Grasping a general trend by collecting responses from individuals typically using questionnaires is widely performed employing multivariable analysis technique (i.e. an analysis method for, using a large amount of data having various characteristics, analyzing cross relationships and summarizing the characteristic of the data, and finding out a cause behind an event or a phenomenon, thereby predicting and classifying).

The multivariable analysis is used, for example, to estimate the attributes of people who like a commercial product by performing a survey on the product image using questionnaires. Also, in case of practice examinations for university entrance examinations, the multivariable analysis is used to estimate a personal score at a certain point of time by his or her relative position in a group.

However, the survey method using the multivariable analysis, which has been commonly performed, has one limitation.

That is, information available for this type of analysis is limited to data relating to the situation of a person at a certain point of time.

By nature, personal reactions largely change according to their experiences. For example, if a person has heard about or seen the certain commercial product just before answering the questionnaires, this person's images to the product should be largely different.

Further, taking up the case of the practice exams, the prediction of a score in the future for a student at C-level evaluation at a certain point of time naturally varies depending on whether this student has been at E-level or A-level at the previous practice exam.

In other words, in the data analysis based on the multivariable analysis that has been currently employed, the data indicating situations at a certain point of time is used. Accordingly, it is not possible to obtain accurate and precise results employing such an analysis, because the chronological changes are not sufficiently taken into consideration.

Further, information on "changes" of an individual from the past to the future has a great significance in understanding and predicting the human reactions. The contents of experiences people encounter or react and the pace of time in which the people encounter or react to the contents result in the differences in the individual experiences.

In addition, while analyses of reaction data that can be widely seen in these days focus on such as personal attributes and content qualities at a certain time, only a very few of these analyses consider the paces of encounter and changes in a chronological way.

In the meantime, there is a so-called longitudinal study among the methods of survey research. In the longitudinal study, a specific survey is carried out repeatedly and continuously for a certain period of time to observe changes in reactions of particular individuals.

However, the surveys in the longitudinal study are carried out based on a broad schedule such as once a month or once a year, and changes in reactions to an enormous amount of information we encounter daily and frequently are not considered in this type of analysis.

For one reason, it becomes difficult to assess the enormous amount of contents at constant intervals under the same condition, when evaluating the data at a predetermined interval such as once a month.

A case in which a person learns 1000 English words once a month is taken as an example. If the person learns these words once a month as in the conventional way, this person learns all of the 1000 words in one day, and repeats this a month later.

On the other hand, when studying English words requires to be repeated over an extended period of time, feelings of helplessness that "I cannot learn these words even though I've tried many times" or "I won't be able to learn these words anyway" grows larger, and this causes the person to give up the study in the end.

In other words, there has been a problem such that the person's motivation for the study becomes lower with certainty if the person cannot see an improvement and feel the sense of achievement in the study.

The present invention has been made in order to solve the foregoing problem. The present invention aims to provide a schedule creating method capable of collecting personal reactions in accordance with a predetermined schedule and analyzing and predicting with taking a personal attribute and a content quality into account, and an inexperienced schedule predicting method for predicting a personal reaction to an inexperienced schedule using the created schedule, and for providing the person with a guideline such as "how many times the study should be repeated before the improvement becomes visible" or "how the learning proceeds" and the most preferable schedule. The present invention also aims to provide a learning schedule assessment displaying method for displaying the result and such of this predicting method.

DISCLOSURE OF THE INVENTION

A schedule creating method according to the present invention includes a schedule condition for an occurrence of an event relating a content that is constituted by a timing condition including: a presentation unit configured to be a minimum term for the occurrence of the event relating the content; an interval configured to be longer than the presentation unit for the occurrence of the event and be a term from a beginning of the event to an occurrence of a next event; an event cycle unit configured to be a predetermined term shorter than the interval and distribute occurrences of the event; a condition unit configured to be longer than the presentation unit, be a term shorter than the event cycle unit, and arrange the presentation unit of the event uniformly; and a delay term configured to express a difference of starting points of schedules when a plurality of schedules are stared.

Further, in the schedule creating method according to the present invention, a schedule is constituted by: a basic unit having an interval to be a base in a case the event does not occur at a predetermined interval in a schedule, an event cycle unit, a condition unit, a delay term; and a sub unit having an interval when considering the interval to be the base as a minimum term for the event relating the content to occur, an event cycle unit, a condition unit, and a delay term.

An inexperienced schedule predicting method according to the present invention includes: providing a predetermined term equal to or longer than the presentation unit which is a shortest period for generating the event and shorter than the interval from a beginning of the event till an occurrence of a next event as an event cycle unit; using a schedule arranging a content so that a particular event relating each content is generated once in the event cycle unit; collecting reactions of experience to the content in time series; and predicting a future reaction pattern based on the collected reactions, in order to generate a schedule, of a set of one or more contents, in which events relating to all contents repeatedly occur at a predetermined timing.

Further, an inexperienced schedule predicting method according to the present invention includes: providing a predetermined term being longer than the presentation unit of generating the event and being from a beginning of the event to an occurrence of a next event as an event cycle unit; generating a schedule so that an event is generated once in the event cycle unit; cording an event occurrence an individual reaction to the event respectively in a plurality of relating events and collecting in time series; comparing reaction process pattern of another person extracted based on the final reaction result with an individual reaction process pattern; and providing a schedule of the other having a similar reaction process pattern as a future schedule of the individual, in order to use the schedule, of a set of one or more contents, in which a specific event repeatedly occur at a predetermined timing.

A learning schedule assessment displaying method for a learner's assessment displaying system in which a learner's terminal and a server for displaying a learning achievement in a website are connected via a network, the method includes: providing a predetermined term equal to or longer than the presentation unit which is a shortest period for generating the event and shorter than the interval from a beginning of the event till an occurrence of a next event as an event cycle unit; using a learning schedule arranging a content so that a particular event relating each content is generated once in the event cycle unit; assessing the learning achievement relating the content in time series; and displaying data relating the learning achievement, a learning content and a link of relating site corresponding to the learning achievement on the learner's terminal when the assessment of the learning achievement reaches a predetermined level, in order to generate a schedule, of a set of one or more contents, in which events relating to all contents repeatedly occur at a predetermined timing.

Further, a learning schedule assessment displaying method of a learner's assessment displaying system in which a learner's terminal and a server for displaying a learning achievement a website are connected via a network, the method includes: means for registering a searching word used by a learner with a classification according to learning ability levels of the learners; means for registering a site to which the learner visited in correspondence with the site to the registered searching word; and means for counting up a number of times for visiting a site when search is performed with a searching word same as the registered searching word and a cite same as the registered site is visited, wherein a search result is displayed in an order of larger number of visiting times on the learner's terminal.

According to the present invention, a great number of timing conditions can be expressed effectively. Particularly, since a table for a schedule condition, in which a uniform timing condition is generated repeatedly, can be generated automatically, it is possible to create as many schedule conditions as possible in advance, and to accumulate data of reaction to an event.

Further, a reaction pattern to an inexperienced schedule can be predicted using the accumulated reaction data. For example, the learner may obtain a guideline such as "how many times the study should be repeated before the improvement becomes visible" or "how the learning proceeds". Moreover, a complicated schedule may be expressed easily by constituting the schedule with a combination of schedules having different timing conditions.

Further, by displaying links to websites relating to a specific occupation or websites for qualification applications relating to the learning content according to an achievement of learning, it is possible to increase the motivation for leaning. Limiting the region for performing the information search according to the content of learning and individual attributes also makes it possible to return search results with high-accuracy.

BRIEF DESCRIPTION OF THE DRAWINGS

FIG. 1 is a diagram showing a definition of a schedule according to the present invention.
FIG. 2 is a diagram showing a definition of a schedule according to the present invention.
FIG. 3 is a diagram showing a definition of a schedule according to the present invention.
FIG. 4 is a diagram showing a uniform arrangement of a presentation condition and a homogenization of a condition unit and a presentation unit.
FIG. 5 is a diagram showing an example of a schedule condition including a schedule expressed with a basic unit and a sub-unit.

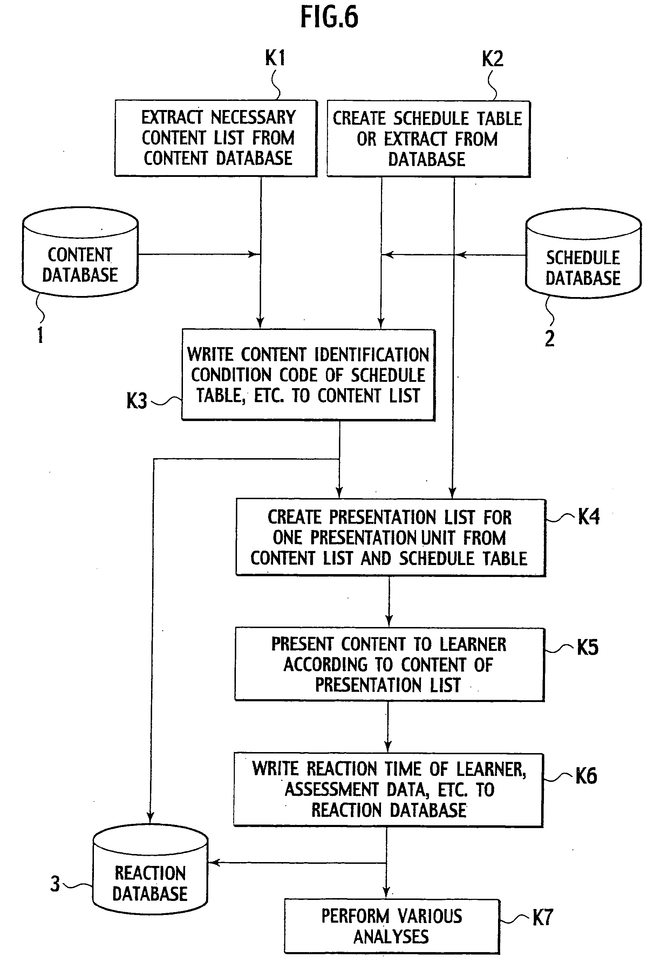

FIG. 6 is a flow chart showing a basic data generation when performing a schedule learning.
FIG. 7 is a diagram showing an example of a schedule table.
FIG. 8 is a diagram showing a timing condition and a content item allocation.
FIG. 9 is a diagram showing a timing condition and a content item allocation.
FIG. 10 is a diagram showing a timing condition and a content item allocation.
FIG. 11 is a diagram showing an outline of an item integrating all conditions and an estimated leaning time.
FIG. 12A is a diagram showing an example of a content list in a content database.
FIG. 12B is a diagram showing an example of a content list in a content database.
FIG. 13A is a diagram showing an example of a content list inputted a content identification condition code.
FIG. 13B is a diagram showing an example of a content list inputted a content identification condition code.
FIG. 14A is a diagram showing an example of a presentation list.
FIG. 14B is a diagram showing an example of a presentation list.
FIG. 15A is a diagram showing an example of a test record.
FIG. 15B is a diagram showing an example of a test record.
FIG. 16 is a diagram showing an example of a reaction database storing reactions.
FIG. 17 is a diagram showing a change of self evaluating value (overall mean).
FIG. 18A is a diagram showing a prediction function of self evaluating valued of three learners.
FIG. 18B is a diagram showing a prediction function of self evaluating valued of three learners.
FIG. 18C is a diagram showing a prediction function of self evaluating valued of three learners.
FIG. 19A is a diagram showing an example display for self assessment of learning level.
FIG. 19B is a diagram showing an example display for self assessment of learning level.
FIG. 20 is a diagram showing an achievement level of learning in different interval conditions.
FIG. 21 is a flow chart showing an operation for predicting a learning result.
FIG. 22 is an explanatory diagram of a description sample of a complicated schedule.
FIG. 23 is an explanatory diagram of a method for specifying a most preferable event schedule.
FIG. 24 is an explanatory diagram of an event schedule estimation method.
FIG. 25 is a schematic block diagram of a learning schedule assessment displaying system.
FIG. 26 is a sequential diagram of a learning schedule assessment displaying system.
FIG. 27 is a sequential diagram of a learning schedule assessment displaying system.
FIG. 28 is a diagram showing an example of a display of a link to a website related to learner's assessment.
FIG. 29 is a diagram showing an example of a display of a link to a website related to learner's assessment.
FIG. 30 is a diagram showing a database storing searching word or the like.
FIG. 31 is a flow chart showing an operation for displaying visited websites in a descending order of number of visiting times.

BEST MODE FOR CARRYING OUT THE INVENTION

Firstly, necessary structures for creating schedule will be explained, beginning with a schedule fixing method.

(Schedule Fixing Method)

A schedule fixing method is a method for collecting data in a unified timing and decrease the influence of timing factor so as to improve the prediction capability.

In many cases, it seems that the timing control can be easily performed. However, this involves a very serious problem in fixing a variation of the timings and collecting the reaction data. A case in which a reaction taking about five seconds per content is requested for 1000 contents per month is taken as an example. Simply put, this is a case in which reactions to 1000 contents are performed on one day, and then reactions to 1000 contents are performed again after one month later. In this case, the reaction must be continued for an hour and a half without rest on the day for the reactions. Therefore, the meaning of the reaction varies from the beginning to the end. Further, under the condition such that 1000 contents should be assessed five times per day, the individuals must assess the contents continuously for seven hours. This is simply impossible.

The present invention provides a schedule structuring method in which, in the above case, all of the events regarding a given content arise at predetermined intervals and the reaction in a day is completed within a few minuets even if there are 1000 or 2000 of contents, or the number of repetition is 5 or 10 times.

A solution of the problem is to provide a schedule in which an event cycle unit is set. Prior to explaining a scheduling method, a meaning of a schedule in the present invention will be made clear.

A schedule according to the present embodiment employs a schedule condition. The schedule condition is a condition indicating information about "when", "at what timing", "what kind of attribute" and "how presented". The schedule condition is composed of three conditions: timing condition, attribute condition, and presentation condition.

A timing condition represents a timing of event occurrence such as once a month or once in two weeks. The detail definition of the timing condition will be described later.

A period of an event cycle unit is a period for providing the contents and various conditions. Although the period of an event cycle unit does not always correspond to the period of an interval, the event cycle unit is shorter than the period of the interval.

According to the present embodiment, it is suggested that a factor of a schedule is incorporated into survey researches on learning. Further, a method for incorporating a schedule into survey researches, and a method for using data in the survey researches are suggested. When data is simply collected, only ordinary information is obtained. Therefore, a framework for analyzing data taking chronological changes into account is necessary.

(Measure to Incorporate Schedule Factor into Analysis)

In order to incorporate a schedule pattern into analysis, firstly, it is suggested to introduce an idea of an experimental design into a conventional inspection method.

It is not rational that a schedule capable of being assumed infinitely is defined as an initial target of analysis in order to consider the factor of the schedule. In fact, it is necessary to provide a limitation to a presentation schedule such as a content and collect the corresponding data to analyze. In other words, in order to incorporate the schedule pattern into analysis, it is necessary to provide a limitation to the presenting schedule. Accordingly a specific limiting method becomes important.

The problem cannot be solved only by setting a schedule. Particularly, in a case of collecting reactions to an event regarding the enormous amount of the contents in accordance with a predetermined schedule, there arises a serious problem that it is very difficult to control the schedule. When requesting the individuals for the reaction to the enormous amount of the contents, the individuals are required to react in accordance with the controlled schedule in their daily lives in order to collect each reaction in accordance with the specific schedule. However, it is impossible to ask the ordinary people for this because it is very difficult for them to be inspected to perform the reactions in accordance with a uniform and constant schedule.

Accordingly, even when the reactions are collected in free daily lives of the individuals, an outline is needed for analyzing the collected data by corresponding them to the predetermined schedule. A scheduling method, whereby the data can be collected and analyzed by corresponding the data to the constant schedule even when the individuals can react the contents without timing inhibition, is necessary.

According to a method which will be explained later, the factor of the schedule is incorporated into the analysis of the reaction data so that analysis and prediction with a high degree of accuracy can be realized.

Thereby, the analysis can be performed, in which the factor of the schedule is further considered in addition to various combinations between the attributes of the individuals and the contents such as the gender, the locality, the personality.

A specific way of collecting data to incorporate the cause of the schedule into the analysis will be described below. In the meantime, according to the following methods, the accuracy of analyses in consideration of the factor of the schedule becomes high by employing each method and those combinations. On the contrary, if they are not employed, the accuracy of analyses is lowered.

(1) Definition of Schedule

Firstly, it is necessary to grasp a meaning of a typical schedule strictly. Therefore, a schedule rising a prescribed event is divided into three, that is, a timing condition Ai, a presentation condition Bi, and a content attribute condition (a degree of difficulty or the like), as required. The timing condition Ai is defined by the minimum period rising the event referred to as a presentation unit and intervals from the start of a certain event till a next event arises. The presentation condition Bi represents a quality of the event. For example, in a case of the schedule having one learning day is followed by four rest days, one day is assumed as a minimum unit (a presentation unit) and a period of five days is assumed as an interval.

In the meantime, at first, it is necessary to define the minimum period (the presentation unit) rising the event. In a case of learning English words, a learner often studies for a number of days, and it is difficult to assume that the learner learns same words several hundred of times in one day. Accordingly, it is general that one day is defined as a presentation unit. However, in a case of a content such as a shooting game, in which the event in several seconds just before an event influences to the event whether or not to pull a trigger, it is also conceivable that one second is defined as a presentation unit and the timing impact is analyzed.

According to the example of English learning, three types of schedules are considered. One schedule is for learning one English word once a day and continuing the same for 10 days (here, referred to as schedule A); another schedule is for learning one English word five times on the first day and the sixth day (referred to as a schedule B); and another schedule is for learning one English word once on the first day and the sixth day, respectively (referred to as a schedule C).

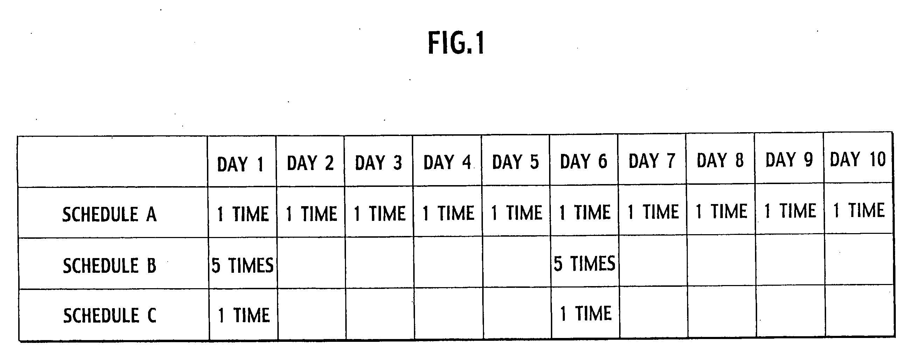

As shown in FIG. 1, in the schedule A, a learner studies once a day and continues the study for ten days, and in schedule B, a learner studies five times in the first day and the sixth day, respectively. Although the learners study ten times in total in both cases, the qualities of the respective learning schedules are clearly different from each other.

These schedules are considered, as follows, to be divided into two, namely, a timing condition (a timing with an interval of five days from an event occurrence to a next event occurrence in the schedule B) and a presentation condition (in this example, a dimension representing the number of learning (intensity of the learning)).

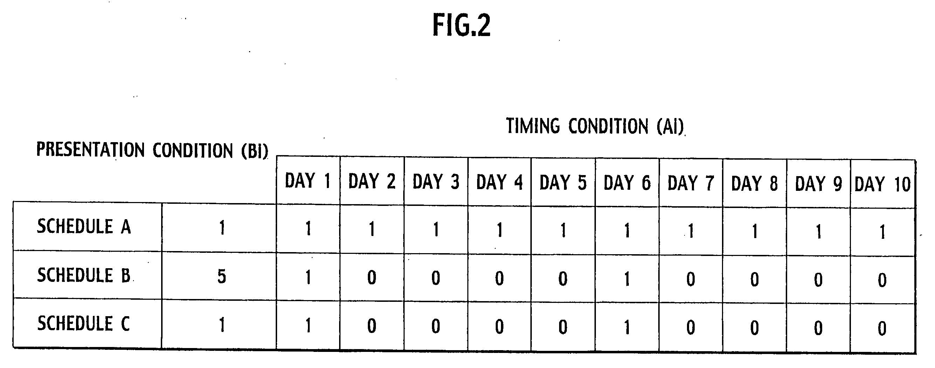

In other words, when the minimum period (the presentation unit) arising an event regarding a kind of English words is defined as one day, presence and absence of event occurrence in the minimum period in ten days are corresponded to "1" and "0" without reference to the number of repetition and the kinds of conditions. Accordingly, conditions of timing for the specific event occurrence during the period can be represented (coded). Specifically, as shown in FIG. 2, the schedule A is represented as (1, 1, 1, 1, 1, 1, 1, 1, 1, 1) and the schedules B and C are represented as (1, 0, 0, 0, 0, 1, 0, 0, 0, 0) . Although the schedules B and C are the same in the timing condition, they are different in the number of repetition and the dimension of the presentation condition. As the kinds of the presentation conditions, other than the number of repetition, various kinds such as a presenting time (for example, presentation for three seconds) and a process requested at the point when the presentation is carried out (the assessment in familiarity of English words, the self assessment of learning achievement or the like) may be considered. Variously representing methods may be considered, and, it is also possible to represent all of the events (that is, details of his or her experience) arising at an unspecified timing by combining a notation method of these presentation conditions and a notation method of the timing conditions.

As described above, according to the present embodiment, firstly, it is proposed that a minimum period for an event occurrence is defined as a presentation unit, and a condition that is conventionally called a schedule is divided into two independent dimensions, namely, a timing condition and a presentation condition to review their impacts. In the meantime, the attribute (difficulty) condition of a content may be considered as another dimension, if required.

(Setting Event Cycle Unit)

As an outline for controlling the timings for event occurrences regarding an enormous amount of the contents, it is suggested to assume an event cycle unit. If it is difficult to present the enormous amount of the contents as a whole, it is natural to distribute the contents within a predetermined period. This period is defined as an event cycle unit. It is a point that there is a limitation in setting the period.

In other words, in order to generate a schedule in which events for all contents are arisen repeatedly in a predetermined timing, it is necessary to arrange the contents so that a predetermined period is set shorter than a period of the shortest interval among the intervals that are set in the assumed period as an event cycle unit. Then, it is necessary to arrange specific events regarding respective contents to arise once in the event cycle unit.

Therefore, in this case, a timing unit is composed of elements of respective presentation unit, event cycle unit and interval.

For example, a case is considered, in which studying English words is performed for one year, namely. A learner studies at a timing of once in two months during the first half of the year, and then, studies at a timing of once a month during the later half of the year. In this case, in order to control the timing conditions, a period for distributing (arranging) the contents should be made one month at the maximum length since the minimum interval is one month. In the case of setting the event cycle unit longer than one month, the timing of event occurrence regarding the contents cannot be unified strictly.

In the meantime, it may be natural that all of the event cycle units are fixed starting from the first event occurrence to be considered and all event cycle units are the same in length.

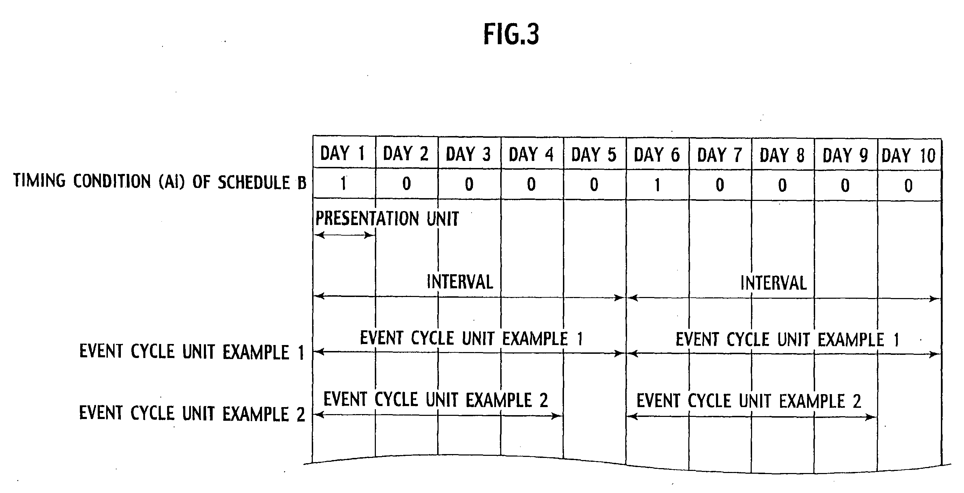

FIG. 3 shows two examples of the event cycle units capable of being set corresponding to the schedule B shown in FIG. 2. The method in the present embodiment arranges the content so that each content is presented once in each unit.

As shown in FIG. 3, a period from a presentation (learning or event) of given content (English words) to a next presentation is referred to as an interval; a period longer than the presentation unit and shorter than the interval is fixed as an event cycle unit mi; and its starting point is made corresponding to the starting point of the event occurrence timing (although they are not necessarily corresponding to each other, the start of an event cycle unit after the first event cycle unit is determined in the range from the starting point of the first event cycle to after the interval). In addition, it is defined that a given content arises once within one event cycle unit mi.

In one way of thinking, the event cycle unit mi may be assumed as the five times learning of the first day of the schedule B. In this case, an interval between the first and second learning (minutes, seconds, or the like) is defined as a minimum unit of one event cycle unit mi = a presentation unit (bi) (in other words, it is also necessary to clear what the minimum unit of the event cycle unit = the presentation unit is). Here, when reviewing a general learning event and its effect, as shown in FIG. 1, one day may be defined for a minimum unit of one event cycle unit mi = a presentation unit (bi).

Here, returning to FIG. 1, the explanation will be added.

In the schedules B and C shown in FIG. 1, one day is defined as a minimum unit (the presentation unit) bi of the event cycle unit mi. In the schedules B and C, the timing conditions Ai are identical but the presentation conditions Bi are different from each other.

In the meantime, as the presentation condition Bi, not only mere number of times but also variations such as a presentation time and a reaction method may be considered.

In other words, it is focused only that the schedule indicates how many days of interval the event is performed. When the events are represented by "1" or "0", "5" in the schedule B is merely indicated as "1". Since one content arises once within an event cycle unit, as shown in FIG. 2, "1" is set in the first day and the sixth day.

Accordingly, the timing condition Ai in the schedules A, B and C and the presentation conditions of the events in FIG. 1 can be coded, as shown in FIG. 2.

In such way, the timing conditions and the presentation conditions of the schedules A, B and C are coded.

In other words, a schedule (a learning standard schedule) may be represented as a matrix with 1 - 0 corresponding the timing condition Ai to a date (a time) with the presentation condition Bi of the event (the content) when one day is assumed as a presentation unit.

(2) Grouping of Contents

In order to define individual characteristics and general tendencies or to perform the accurate prediction, it is necessary to clarify a quality of the content requiring reactions such as assessment or the like. If changes of the reaction to each commodity and English words are a main interest, grouping is not necessary. However, for observing the reaction tendency of an individual, it is preferable that a central value of the reactions to a plurality of contents that is transmitted to the individual is taken.

In such case, for each combination of the timing condition Ai (a pattern of a rest interval of the study, etc.) and the presentation condition Bi (a number of times of learning, the strength of learning), a plurality of similar contents are prepared. This is grouping of the contents. For example, in case of English words, the contents items are unified based on a predetermined attribute (the attribute information is added) such as the words having the same level of a degree of difficulty, the required words in each grade in school. In the meantime, the degree of difficulty in this case is not only a general degree of difficulty but also may be a degree of difficulty corresponding to worthiness of the personal record to each content. Also, it may be what is reflected by a gap between personal reactions and reactions by experts to the contents.

In a questionnaire about a calculation of an area of a triangle, a questionnaire about a formula, "area = base $\times$ altitude / 2" and a calculation of multiplication and division may be unified. However, in this case, it is preferable that the details of the contents are divided into small pieces as possible. The data is taken corresponding small contents respectively to the presentation conditions and the timing conditions of the schedule. The reason is that a hierarchical relation between the questionnaires can be also reviewed to study which level of abilities of multiplication and division is required for the calculation of the area of the triangle.

Hereinafter, in order to make the terms clear, the explanation about the content items and the content groups will be complemented.

Content item: a group of the presentation contents of which reactions are expected (or they may be seen simply) . In case of English words, a pair of one English word and its Japanese translation is available. In case of addition in one digit, a calculation of "1 + 2 = ?" may be available. In addition, it is also possible to separate a calculation process as a content in a sentence questionnaire of mathematics. It is obvious that all of the contents that can be presented by the voice data and a video or the like are included. The minimum unit of the content item may be determined according to how to grasp the detail.

Content group: an assembly of similar content items. It is an assembly of the content items that are unified by the prescribed attributes such as the English words having the same level of a degree of difficulty, the English words required in each grade in school, and the English words necessary for learning a given unit.

In the meantime, as described above, the content item is generated (presented) only once in one event cycle unit of the timing condition (it is noted that what is generated "once" is not a presentation condition).

(Reason for Grouping Contents)

Grouping of the contents are performed because it is considered that the effects of a specific schedule vary depending on the contents. The effects of the schedule on the assembly of the contents having a plurality of attributes are more likely varies if the assembly of the contents is changed. In other words, the grouping of the contents intends to improve the accuracy of analysis by separating the factor of the content and the factor of the schedule as specifically as possible.

In the meantime, by homogenizing the contents and grouping them as specifically as possible, it is possible to predict a relation between different kinds of contents among the schedule and the reactions to respective content groups by means of the acquired data.

Taking the above calculation of the area of a triangle, if the contents are separated into three content groups, namely, a calculation of the area of a triangle; a questionnaire about a formula: "area = base × altitude / 2" and a calculation of multiplication and division. The records of respective content groups are collected according to various schedules. It should be possible to predict the optimum schedule for presenting the calculation of the area of the triangle to children with corresponding to the learning schedules of the formula, and the calculation of multiplication and division.

For example, it is possible to predict that "Unless the learner does not interpret the formula to some extent, the result of learning the triangle area cannot be expected so much. Therefore, when the formula is learned once a week, it is effective that the questionnaire of the triangle area is not presented till the fifth week, and, after that, the questionnaire is presented once in three days". In other words, it becomes possible that the content group of the questionnaire prompting memorization of the formula is separated as a combination of two schedule conditions, namely, a schedule such that the content group is presented once in three days till the first five weeks and then, it is presented once a week; and a schedule such that the content group of the questionnaire of the triangle area is not presented once during the first five weeks and then, it is presented once per three days so as to review the impact of the both schedules.

(3) Method for Determining Timing Conditions

While the kinds of the timing condition may be infinitely assumed, in order to make the impact of the period of the event to be easily understandable visually, it is effective to set the presentation condition having equal intervals such as once in ten days, or once a month.

Collection and analysis of the data corresponding to the schedule finally intends to have a prediction ability with respect to random schedules (the second object of the present embodiment). However, in order to do so, it is not effective that the random schedules are set to collect the data from the beginning (if the reaction data corresponding to a predetermined timing condition is available, there is no problem).

This is because that the accumulation of the data available to some extent is needed in order to analyze the data in consideration of the cause of the schedule and particularly to predict the schedule. Therefore, it is difficult to provide an advantageous prediction to the rater himself or herself by setting the complex and fine timing condition from the beginning and further, the accumulation of the data is impossible.

In order to provide data understandable to evaluator at an early stage, it is preferable that the above relatively simple timing condition is set at first to collect the data. Either way, it is preferable to set the timing condition and the presentation condition for deciding the event cycle unit according to the plan.

In order to make the impact of the period of the event in the timing condition to be easily understandable visually, it is effective to set firstly the presentation condition having equal intervals such as once in ten days, or once a month.

(4) Homogeneous Arrangement of Presentation Condition within Each Event Cycle Unit

In a specific event cycle unit, the presentation conditions to be considered are arranged homogeneously as specifically as possible in an event cycle unit, and then, the content items are allocated to the event cycle units.

The reason of homogeneously arranging the presentation conditions (e.g. the number of times of learning) is that there is a probability that the event does not arise at a predetermined pace in the event cycle unit and in this case, there is a large error upon estimating the impact of the former events in an evaluating event (a test) to be described later. This will be described in detail in a method for setting an evaluating event.

In case of learning of English words, when the items of specific presentation condition are unevenly disposed at the first and the last of a given event cycle unit, the timing conditions may be slightly different depending on the condition when the learner cannot learn because of ill or the like in the middle of the event cycle unit. In addition, as described later, upon setting the evaluating event at a shorter period than the event cycle unit and estimating the impact of the event as unifying the contents for each presentation condition, it is difficult to control strictly the period from the event for reviewing the impact till the evaluating event.

In order to prevent this, the presentation conditions are made homogeneous as specifically as possible within an event cycle unit. More specifically, it is effective to set a condition unit which will be described later.

(5) Method for Homogeneous Arrangement of Presentation Conditions

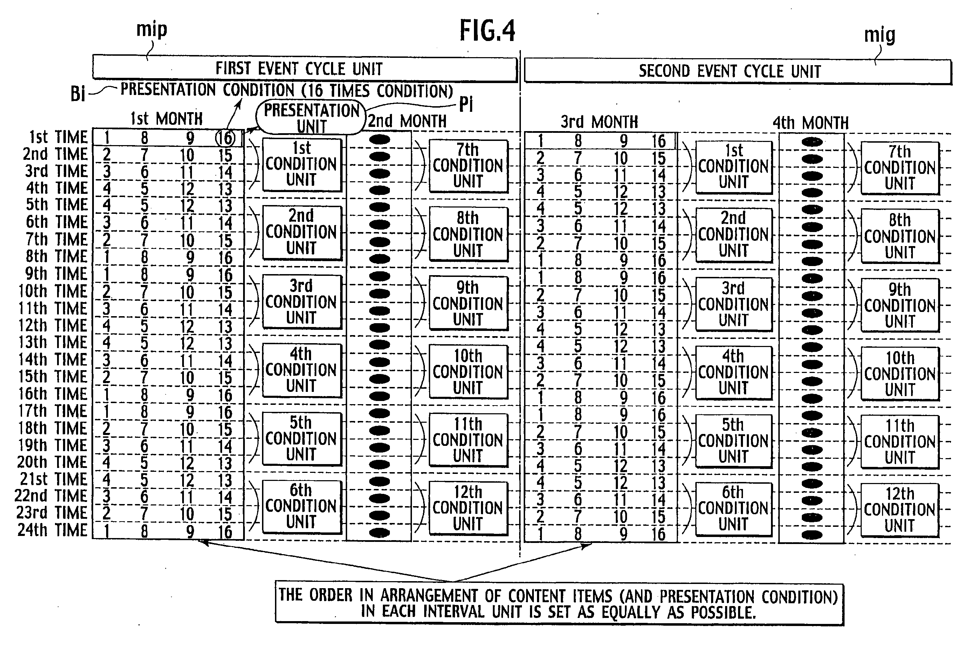

For a homogeneous arrangement, the following method can be used in addition to arranging the presentation conditions randomly. In other words, the event cycle unit is further separated into a predetermined period (referred to as a condition unit), and there are all presentation conditions (they are not content items) within this condition unit or there are the presentation condition and the attribute condition for relatively comparing the impacts of the event arising under a predetermined timing condition, these conditions are made to make an appearance once, respectively (see FIG. 4).

In this case, the timing condition is constituted by the presentation unit, the condition unit, the interval, and the event cycle unit.

FIG. 4 shows the conditions for repeating the event cycle unit of about two months (48 days), and 16 conditions are set, in which the number of times of presentation (the number of learning) is 16 as the presentation condition Bi. According to this example, a first event cycle unit mjp (48 days) is sectioned for each four days, and this data is separated into 12 condition units fi.

For example, for the first day, the conditions such that the numbers of times of learning are 1, 8, 9 and 16 are allocated; for the second day, the conditions such that the numbers of times of learning are 2, 7, 10 and 15 make an appearance, and all of 16 conditions make an appearance each once in a condition unit (four days).

In the same way, also in the second condition unit fi from the fifth day to the eighth day, all of sixteen conditions make an appearance each once. Hereinafter, in the same way, in once cycle (48 days), 12 condition units fi will be repeated.

In the meantime, the number of the content items to be allocated to one presentation condition Bi of each condition unit fi may not be the equal. In addition, in FIG. 4, the order of the combinations of the conditions during the first to fourth days and during the fifth to the eighth days are different, and this intends to make the influence of the order in which the presentation condition Bi makes an appearance less. The order in which the presentation condition Bi makes an appearance may be random or a counter balance method that is more strict than the other methods may be used.

(6) Fixing of Presentation Order of Content Items

In respective event cycle units, the order of presenting the content items is fixed, and the content items are arranged so that they are presented in the same order in any event cycle unit.

If the period when the specific content item is presented is different in each event cycle unit, an error may occur in the schedule condition (a generic term of the schedule condition, the presentation condition and the timing condition).

For example, even if the data is collected with the timing condition such that the event is repeated at one month interval, when the content item that is presented at the last day of the first event cycle unit is presented at the first day of a second event cycle unit miq, it becomes difficult to classify the reactions of this content item on the basis of the timing condition namely, repetition of the event cycle unit for one month.

By fixing the order of presentation of the content items within the event cycle unit, even if the presentations are not even within each unit, its impact can be relatively made small. (7) Homogenization of Each Presentation Unit

Here, a unit of the content items that are presented within the minimum unit of the event cycle unit is referred to as a presentation unit Pi. In the case of learning English words, the unit of the contents is like a unit of English words to be presented on a given day.

In order to make the qualities of the events to be required by each presentation unit Pi (a sum of the number of times of presentation and a sum of necessary times) equal as much as possible, the combination of presentation conditions Pi and the number of the content items or the combination of the schedule conditions are adjusted.

It is a matter of course that devices for variously adjusting the presentation unit is also effective, for example, making the presentation order within the presentation unit random or presenting the same contents temporally separated as specifically as possible.

This operation means that the event arising in this presentation unit Pi is not changed largely for each presentation unit Pi. For example, as shown in FIG. 4, in the case of requiring learning of one presentation unit Pi every day, if there are ten English words with the condition for the number of times of learning of sixteen times on a given day and there are ten words with this condition of once at the other day, the learning condition of each content item is far from being equal (naturally, the time required by leaning is different). In this case, upon estimating the impacts of respective events, it is not preferable that the impacts are estimated as simply segmented only by the timing condition, the presentation condition, and the attribute condition. In order to prevent this, in FIG. 4, as an example, the content items are allocated so that the sums of the number of times of learning (the presentation condition) within the presentation units are approximately equal. In the meantime, a specific method for allocating the number of times of learning or the like will be described later (refer to generation of a schedule table of a specific procedure (procedure 2)).

It is a matter of course that the content items can be adjusted not only by the presentation condition but also by the number of the content items to be allocated to each presentation condition and the combination of the different schedule conditions.

Even when the schedule condition is identical with the presentation condition, if the load of the reaction of a given presentation unit Pi is different from that of the other presentation unit, the meaning of the reaction within the presentation unit is different, so that it is necessary to exclude its probability as much as possible and the present embodiment provides a measure for this.

(8) Miniaturization of Presentation Unit

In order to collect the reaction data with respect to various combinations of the schedule condition, the presentation condition Bi, and the attribute of the content group or the like, it is preferable that the time reacting to one presentation unit is made shorter as much as possible (if it takes too long time, a predetermined presentation condition cannot be assured and the load of the person who reacts to the presentation unit becomes larger).

Therefore, methods to make the event cycle unit longer, to make the presentation conditions Bi per presentation unit Pi less by (5), and to make the number of the content items to be allocated to the presentation condition Bi less are effective.

If one content item is allocated to the presentation conditions Bi (once, eighth, ninth, sixteenth times) of the presentation unit Pi at the first day in FIG. 4, respectively, the total number of times of learning per day is not so many. It is a matter of course that the event cycle unit mi (mip, miq) and the condition unit fi may be generally made longer.

In the meantime, the standard for assessment of the individuals may change day by day. In order to consider this variation by analysis and exclude it, a method is needed, whereby the contents with a plurality of presentation conditions are prepared within the same presentation unit and the difference of the reactions to these contents is defined as a strict conditional difference.

(9) Method for Excluding Impact of Ordinary Encounter Experience and Defining General Tendency

As a distribution method of the content items to the presentation conditions that are arranged in (4), in addition to a method to randomly allocate the content items for each valuator, a counter balance method that has been used in a conventional experimental research may be available.

Among the content items to be presented according to the plan, there are many content items that the learner may encounter by accident in his or her daily lives. Although it is difficult to control these content items, it is effective that, in order to grasp a general tendency, the probabilities that the learner encounters a specific content item by accident in his or her daily lives are homogenized or randomized to take a central value of the data of plural learners upon analysis.

For example, taking English words as an example, a specific English word may be learned in a class of a senior high school or a private tutoring school. In such a case, if the uniform and identical English words are allocated to all of the evaluators who evaluate the records with a predetermined schedule, there is a probability that only the record of this specific English word may arise among the students of this senior high school and the private tutoring school, and this becomes a general tendency of this condition. This makes it impossible to use the data in this case as a general prediction. In order to improve the prediction ability, it is effective that these methods are incorporated.

(10) Method for Measuring Impact of Presentation and Method for Counting Data 1 (Gleaning Method)

As described above, various methods of the schedule condition of the event are described and all of them are considered to correspond to the counting method of the data. In other words, if the data is counted due to the method to be described below by using the above-described method, it is possible to collect the reactions controlling the timing condition, the presentation condition, and the attribute of the content or the like can be collected as the data.

Briefly speaking, the learner cannot react to all of the contents if there are a number of contents to be presented at once, so that in order to reduce the number of the contents, the above-described planning of the schedule intends to distribute the content items within the interval unit. If they are distributed at random, it becomes very difficult to control the impact of an event and this schedule serves to control the impact thereof.

According to counting of the data, the reactions to the distributed contents are gathered up little by little and when they are unified, a central value thereof is finally acquired.

As one of the specific methods for collecting data, a method such as "gleaning" may be considered. As an simple example, upon measuring the impact due to an experience of the event arising under the Ai timing condition, a schedule requiring assessment may be assumed with respect to the content items to be presented in the last event cycle unit (it is a matter of course that it is the same if the event for evaluation is set as the extension of the event in accordance with a predetermined schedule to measure the impact). Other than the schedule shown in FIG. 4, if an achievement degree of the learning of the word under the leaning condition that the word is presented once at the first day of the third month in the second event cycle is self-assessed, the reaction may include the impact of the learning event that the word is learned once two months ago. In the same way, if the reaction of the self-assessment is requested from the word of the learning condition of the sixteen times, the impact of the learning condition of the sixteen times two months ago may appear. When there is one content item to be allocated to each number of times of learning, if the same assessment event is continued during four days (one condition unit), the reaction data of one content item is collected to the presentation conditions with the number of times of 1 to 16. Further, if continuing it during two months, at a point of time when the second event cycle unit is terminated (at a point of time when the forth month is terminated), to each of the conditions of 1 to 16, the reactions are collected to the content item having the same twelve schedule conditions. By unifying these reactions, it is possible to acquire a central value of the reactions to the content items with the same schedule conditions.

Here, there is another meaning of setting the condition unit. In other words, according to the example shown in FIG. 4, when setting each learning number condition to three months to four months without setting the condition unit, a given repetition condition may be presented concentrated on the last of the fourth month. In this case, the reactions of the learner with respect to this learning number condition cannot be collected till the fourth month is completed. If the learner stops the learning at the third month, it is not possible to compare the impacts of the learning event at the first and second months for each learning number condition. On the contrary, if the condition unit is set, at a point of time when the fourth day of the third month is completed, at least one data can be acquired for each learning number condition. Thereby, at a point of time when the fourth day of the third month is completed, the learner can confirm the record of the learning of himself or herself again, and it is easy to hold interest of the learner by feed-backing the record.

Furthermore, by also setting the event cycle unit for evaluation before the schedule condition to be reviewed, and comparing the reactions to the first and last evaluating events, it is possible to strictly represent the impact of the experience of the event along a predetermined schedule condition during this time. Particularly, when a large individual difference is estimated in the experience regarding the content, this method makes it possible to review the record while excluding the individual difference.

According to the gleaning method, the schedule setting the event cycle unit is employed and the evaluating event is assumed in this event cycle unit among the above-described schedule structure methods.

(11) Measuring Method of Impact of Presentation and Counting Method of Data 2 (Timing Compensating Method)

The above-described data collecting method 1 has a difficulty such that the accurate data collection in accordance with a predetermined timing condition cannot be performed unless a period such as a predetermined event cycle unit (at least a condition unit) is provided. Generally, a test is conducted during a short period. In this case, the method to set the event cycle unit requires to cope with a difference of a temporal interval between the evaluating events such as the learning event and the test (hereinafter, referred to as a test) . For example, in FIG. 3, in the case that the learning is carried out at the first and second months, and its records are measured on a given day on and after three months, it is temporally difficult to test the learner by using all of the contents that are used during one or two months, so that it is needed to extract some contents and to structure test items. In such a case, if the test is conducted at the first day at the third month, for example, there is variation of 1 to 24 days in the interval from the learning to the test. Under this condition, structuring the test from the content learned at a fist half of the first month and the content learned at the last of the second month and comparing the records evenly, the impact of the difference in the interval between the learning and the test is included in the record and the strict comparison is difficult. In consideration of the difference in the interval of the learning and the test, two methods for accurate comparison are observed.

According to one of the two methods, in the case of extending the learning schedule as shown in FIG. 3 to the sixth month, conducting a test at the third month, the fifth month, and the seventh month, and comparing the records to repetition of the learning, a test is structured in such a manner that the day when the test is conducted is set at the same day in any month and the same number of contents are selected from the content items at the same period in the event cycle unit. For example, when conducting the test at the first day at the third month and the fifth month, the test items are structured by selecting one content from each of the content items of the presentation unit at the sixth day, the 12th day, the 18th day, and the 24th day in the first month. In this case, extracting the test items at the third and the fifth months in the same way, conducting the test, and taking a central value as unifying all of them, it is found that the record may appear, on which the difference of the period from the learning to the test have an impact at the same degree, in the record of the tests at the third and the fifth months. This is a method in which the counter balance method conventionally used in a filed of an experimental psychology is applied to the timing condition.

Although this method is effective for observing the effect of the learning for each month, it is difficult to compare the effects of the presentation condition by this method. For example, upon conducting the test at the first day at the third month, in the schedule that many of the words with the learning condition of the ten times are arranged at the beginning part of the first month, and many of the words with the learning condition of once are arranged at the last part of the first month, even if the word with the learning condition of the ten times and the word with the learning condition of once are tested and the records are compared, it is not possible to evaluate the impacts of the both conditions evenly. As a method for solving such a problem, there is a method to extract the same number of the condition items for relative comparison from the same condition unit to structure the test and to compare the reaction by the gross. Thereby, it can be regarded that the intervals of the learning and the test are equal in any presentation condition.

To extract the same number of the test items from the same condition unit has the same effect as the former method (applying the counter balance method to the timing condition) in meaning that the differences in the interval from the learning to the test are made even. Further, it is important that it is possible to compare the impacts of the learning with the plural presentation conditions with the cause of the interval of the test as compensating them with each other by using a characteristic of the condition unit such that one of all presentation conditions should be included. In other words, this is also an evaluating method, whereby it is only after the condition unit is set that the analysis becomes easy.

(12) Facing Up of Different Schedule Conditions

For example, as a structural example of the test in (11), when the test is conducted at the third, fifth, and seventh months, and the impact of a given scheduled event is continuously measured, the items used for the test has the impact of the event when it is tested. Accordingly, when observing how the result of learning is changed for each month, it is difficult to detect only the impact of the pure learning. In such case, there is no problem if a content is separately prepared for performing the test events in the same schedules (it is a matter of course that the different schedules are available) other than the content of performing the learning event in the schedule shown in FIG. 4 (the condition learning one day per two months), the both contents are arranged in parallel with each other, and they are made to experience the events to collect the data separately.

Thus, preparing a plurality of schedules and contents that are experienced by the individuals, it is sufficiently possible to arrange them during the same period in parallel and to perform them. Particularly, in the case of experiencing the same event by using the same kind of contents, the individual reacting can separately collect the reaction data to the plural schedules and analyze them without a consciousness that he or she is requested to react in the different schedules. Further, in this case, it is preferable that the different content items are used and the loads of the individuals within the presentation unit (in FIG. 4, during one day) are made equal in any presentation unit.

Particularly, this method is effective upon specifying a relation of the reaction to the event arising under the plural schedule conditions, and estimating a variation pattern of the reaction against the other schedule condition from among the variation pattern of the reaction against one schedule condition.

(13) Method for Structuring Timing Condition for Facing Up Different Schedules

When above prediction is performed, it is preferable that schedule conditions is previously prepared as many as possible and store data for reacting events. In this case, timing condition may be provided countlessly and timing condition need to be provided for each. For example, a number of timings can not be expressed when it is described such as "timing of once a week" or "timing of once a month". Further, a method for determining a minimum period of the presentation unit and expressing the timings by expression whether or not an event arises (expression with patterns of "0" and "1") may not useful when the entire period is long term.

Further, when a plurality of schedules are applied to a learner at the same time, it is not efficient to create each schedule table showing every-day learning conditions each time. Particularly, the following method can be used in order to automatically generating a table of schedule conditions which may be repeatedly occurred.

Considering a presentation unit as a minimum unit, timing unit is described with length of an event cycle unit (E), length of an interval (I), length of a condition unit (J), and length of delay (D).

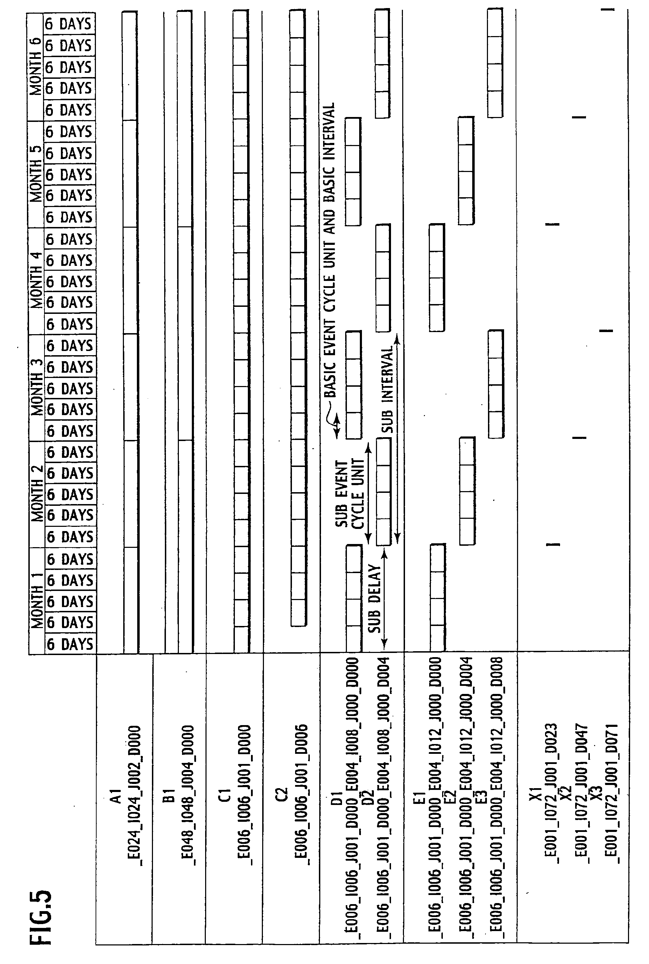

As shown in FIG. 5, for example, 1 week is composed of 6 days and 1 month is composed of 4 weeks, accordingly, 1 month is composed of 24 days. Each schedule is arranged to the months and days. In A1 schedule, "E024 I024 J002 D000" is shown and this represents that, based on one day as a basic presentation unit, an event cycle unit is one month, an interval is one month, length of condition unit is two days, length of delay from the beginning of learning day (the first day of the first month, in this case) to the beginning of the first A1 condition is 0 day (no delay).

The horizontal bars of the graph shown in the drawing represent a presentation of contents distributed in the interval unit (occurrence of an event).

Similarly, in B1 schedule, an event cycle unit is two month, an interval is two month, length of condition unit is four days, and length of delay from the beginning of learning day (the first day of the first month, in this case) to the beginning of the first B1 condition is 0 day.

As another example having delay time, C2 schedule is described as "E006 I006 J001 D006". This represents that an event cycle unit is six days, an interval is six days, length of condition unit is one day, and length of delay from the beginning of learning day to the beginning of the first C2 condition is 6 days.

The above example shows a schedule in which event arises every day. However, after a learner finished the first learning, he or she may be required to begin the second learning after a while. This type of scheduling example is shown as D1, D2, E1, E2, and E3.

For example, in D1 schedule is described as "E006 I006 J001 D000-E004 I008 J000 D000". The first half of the expression, that is, "E006 I006 J001 D000" is defined as a basic unit. The basic unit can be understood in the same way of the above expressions so that an event cycle unit (basic event cycle unit) is six days, an interval (basic interval) is six days, length condition unit (basic condition unit) is one day, and length of delay (basic delay) from the beginning of learning day to the beginning of the first D1 condition is 0 day.

On the other hand, the second half, that is, "E004 1008 J000 D000" is defined as a sub unit. The six day basic interval in the basic unit is considered as a presentation unit. In a sub unit, the schedule is restated in use of the six day presentation unit. When a basic interval is considered as a presentation unit, an interval, an event cycle unit, a condition unit and a delay in a sub unit is defined as a sub-interval, a sub event cycle unit, a sub condition unit, and a sub delay.

For example, when six day presentation unit is called a unit, the sub event cycle unit is four units, the sub interval is eight units, length of the sub condition unit is 0 unit, and sub delay from the beginning of learning day to the beginning of the first D1 condition is 0 unit.

In case of D2 schedule, there is delay of one month from the beginning of learning day to the beginning of the first D1 condition, one month event occurs in the second month, and then no event occurs in the third month. When it is considered that this cycle is repeated and six day basic interval is one presentation unit, the sub event cycle unit is four units, the sub interval is eight units, length of the condition unit is 0 unit, and length of the sub delay is four units. As just described, length of delay is expressed as a sub unit so that in the basic unit, it is expressed as "0".

Therefore, the schedule is represented as "E006 1006 J001 D000-E004 I008 J000 D004".

In the D2 schedule, the basic event cycle unit is six days, the basic interval is six days, length of the basic condition unit is one day, and length of delay from the beginning of learning day to the beginning of the first D2 condition is 0 day. Here, when the six day basic interval is considered as one presentation unit, the sub event cycle unit is four units, the sub interval is eight units, length of the sub condition unit is 0 unit, and length of the sub delay is four unit.

In E3 schedule, the basic cycle unit is six days, the basic interval is six days, length of the basic condition unit is one day, and length of the delay from the beginning of learning day to the beginning of the first E3 condition is 0 day. Here, when the six day basic interval is considered as one presentation unit, the sub event cycle unit is four units, the sub interval is twelve units, length of the sub condition unit is 0 unit, and length of the sub delay is eight units.

In E1, E2, and E3 schedules, the way of understanding the schedule condition is the same as the above.

As described above, when a schedule condition is composed of basic units and sub units, various conditions of schedule condition can be expressed efficiently. If it is developed, for example, by expanding a sub unit to a first sub unit, a second sub unit or the like, then a schedule condition can be expressed in multidimensional way in use of a basic unit, a first sub unit, a second sub unit or the like.

(14) Multivariate Analysis in Consideration of Presentation Schedule

The schedule is represented as the schedule that is added with the strength (the number of presentation in the learning unit) and the dimension of the combination of the content groups with the timing condition as an axis. In other words, by using the data acquired according to the above-described method, it is possible to incorporate the cause of the timing that is difficult to be controlled conventionally as the cause of the analysis such as an explanation variable in a multiple linear regression analysis.

The encounter condition when a content item with a given attribute is presented according to a predetermined timing under a predetermined presentation condition can be represented as a combination of an axis of the timing condition, its presentation condition and an axis of the content attribute.

It is possible to express the change of the reaction against the above-described encounter condition against the combination of the timing condition, the presentation condition, and the content attribute.

A flow of generating a content list (hereinafter, referred to as a presentation list) in which the contents to be allocated to the presentation unit in practice on the basis of the above-described schedule structure method or the like are rearranged in a predetermined order will be described below. In the meantime, in order to make this explanation understandable, taking the learning of English words as an example, this will be described below.

(Procedure 1) Preparation of Content Database

The content database 1 (also referred to as a content file) is used upon making a schedule table and making a presentation list in accordance with the schedule list. The content file stores a content Ci that is received from a server of a corporation via Internet or a storage medium (it is not always a content itself and the number of the content is available if this content is provided with an English word, a Japanese word, and a number).

In English words, this content Ci is added with the attribute data such as (1) a content of a pair of English words and Japanese words (a questionnaire and an answer are not always paired and a unit of sentences or a picture or a moving picture may be available), (2) an identification number capable of distinguishing a unit of the details, and if the content Ci can be used as the available information, (3) a level of mastery, a degree of difficulty, the relevant information, and a hierarchy of each content (a relation regarding how degree of an educational content such as B should be learned before learning an educational content A) and then, it is stored with linked to the content number (also referred to as an identification number of the details).

In the meantime, as the attribute information of the content, the information other than the information that has been designated by a corporation providing this content should be considered. In other words, a level of importance sensed by the learner against each content and the actual record against this content as a result of learning that is formerly performed are considered as the attribute information. For example, the learning is proceeded with respect to the prepared contents in accordance with a predetermined schedule, and at a point of time when a predetermined learning stage is achieved, the record to each content of the learner is added to each content as the information of a level of difficulty, and then, a flow of performing the learning in accordance with a new schedule again by using this information is assumed.

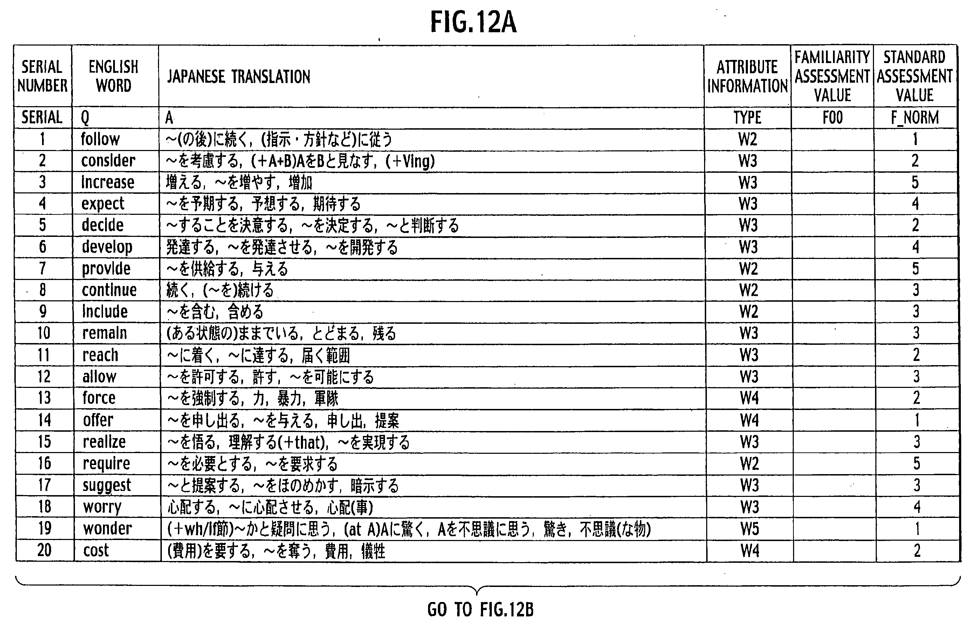

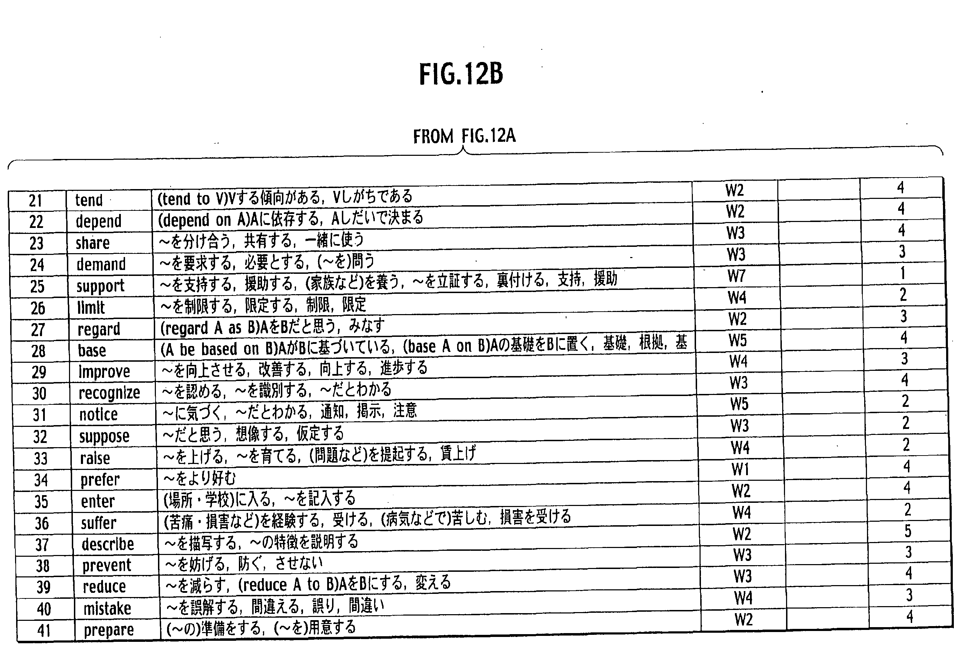

Examples of content list stored in the content database 1 are shown in FIGs. 12A and 12B. Paired contents of English and Japanese (Q and A) which are corresponding to serial numbers are stored and attribute information (type), familiarity (F000), familiarity assessment standard value of a target learning group (F NORM) or the like are stored.

(Procedure 2) Generation of Schedule Table

A schedule table for learning the content of the above content table is generated on the basis of the above schedule structure method or the like (K2).

A schedule table which is already generated may extract a necessary schedule from registered schedule database 2 (K2).

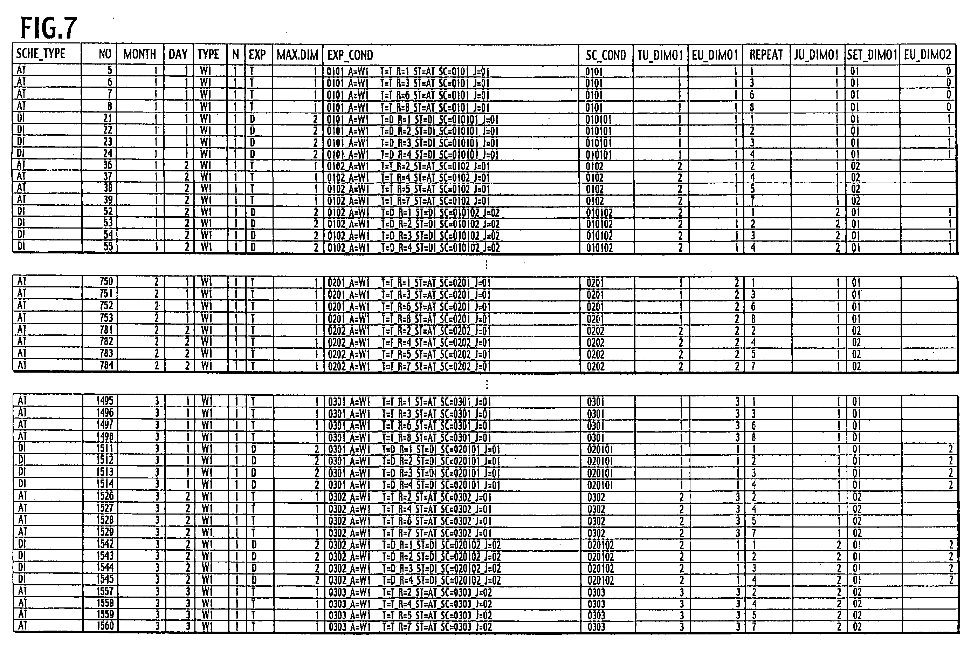

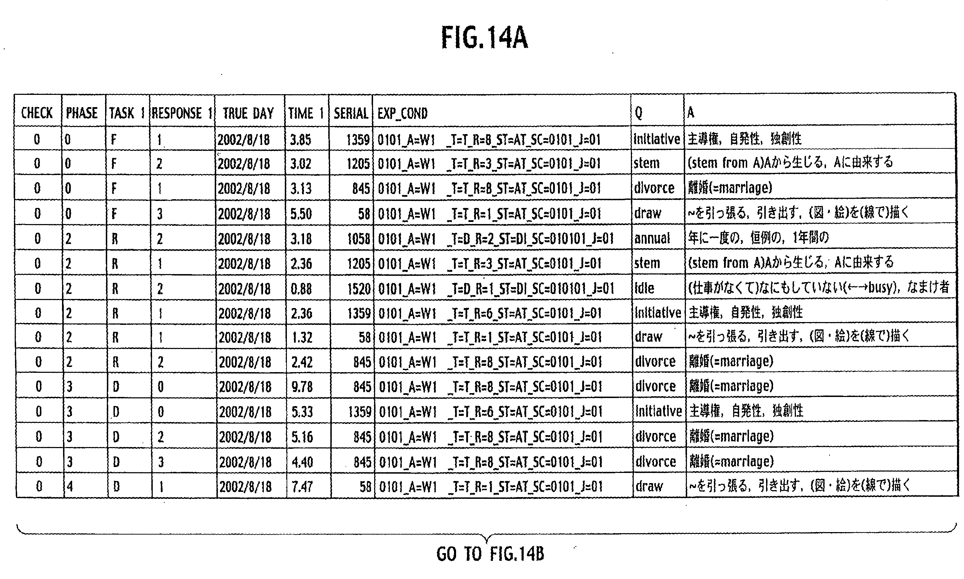

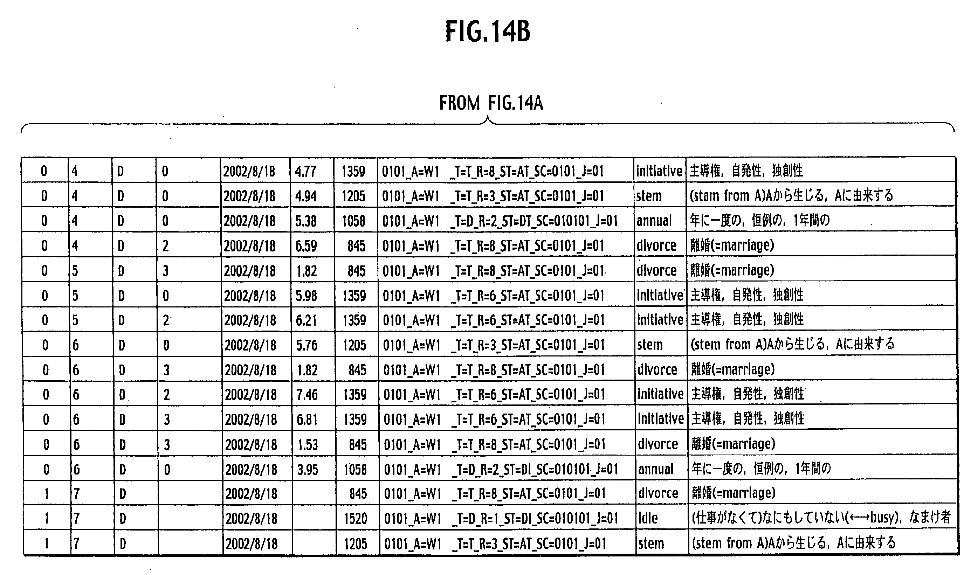

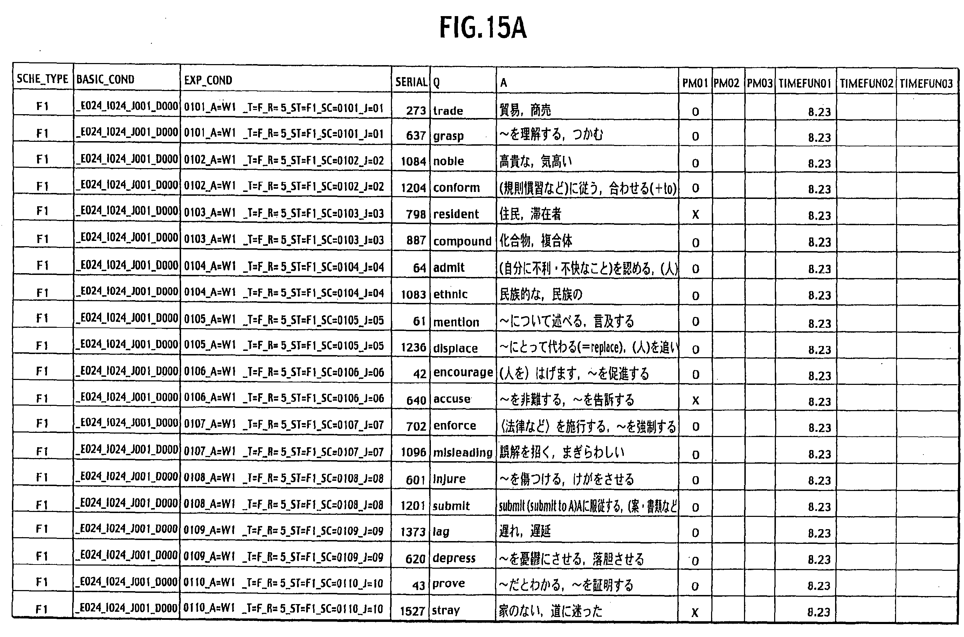

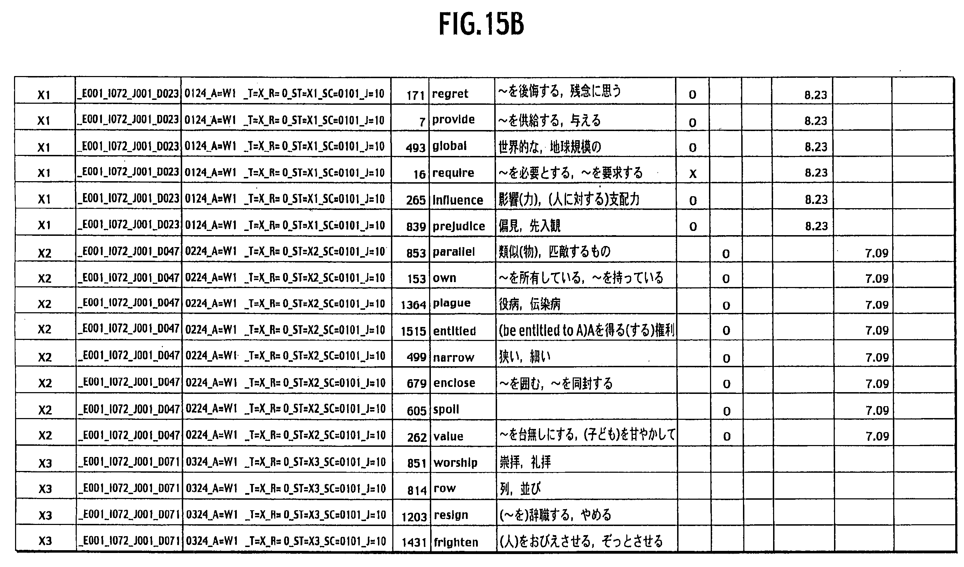

Specifically, as shown in FIG. 7, for example, the schedule table is a table corresponding to a serial number (NO) ; a month and a day (MONTH, DAY); a type of condition code of attribute information (difficulty, importance) (TYPE); a condition code showing the number of contents (N); a condition code showing the kind of learning method (EXP); a dimension of schedule condition (MAX DIM); a content identifying condition code (EXP COND); a condition code showing unit of event cycle unit (SC COND); repeat of condition code showing the number of repeating (REPEAT); basic schedule condition code (BASIC COND) (shown in FIGs. 14 and 15).

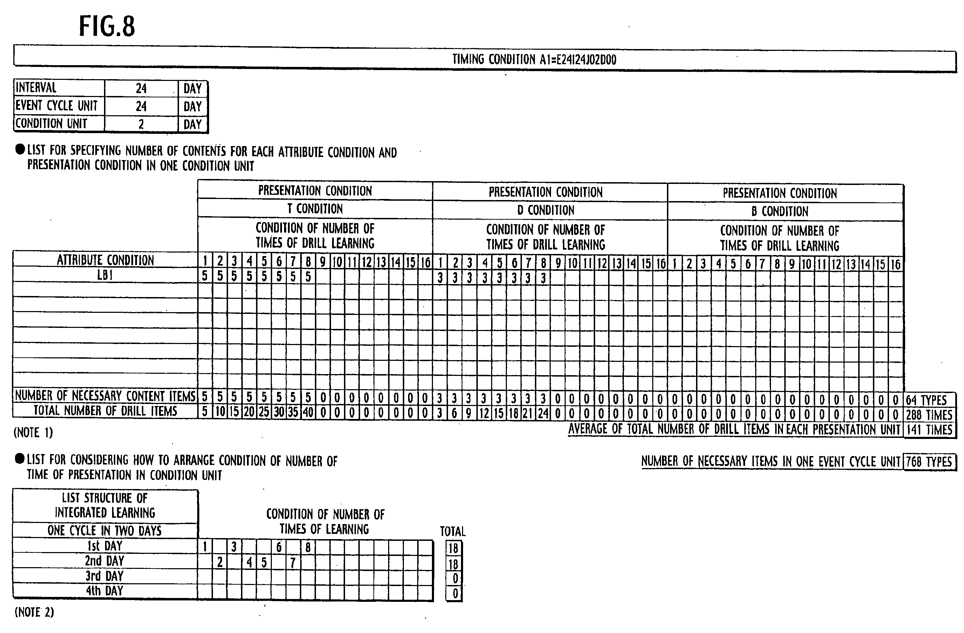

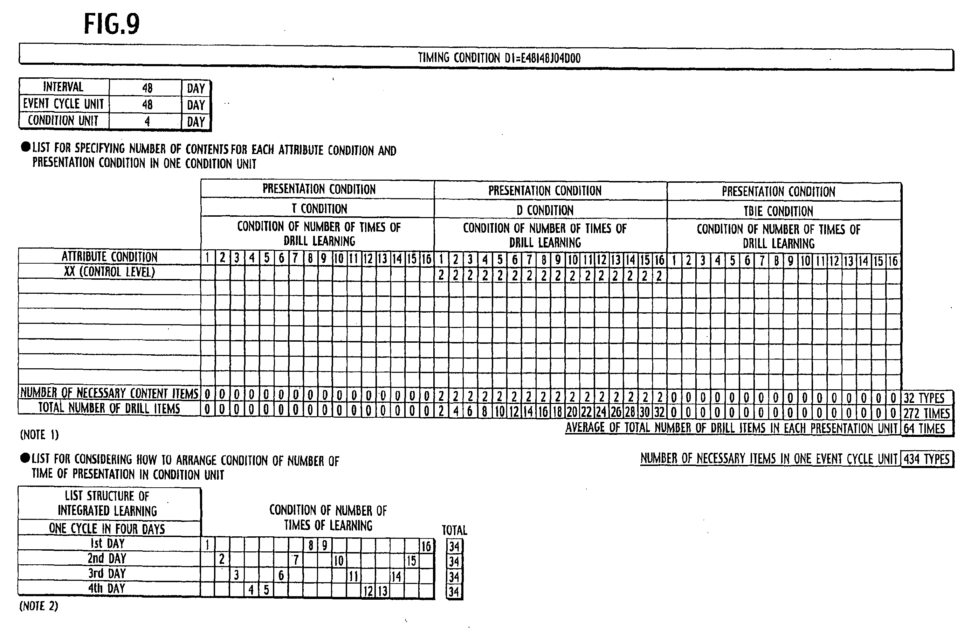

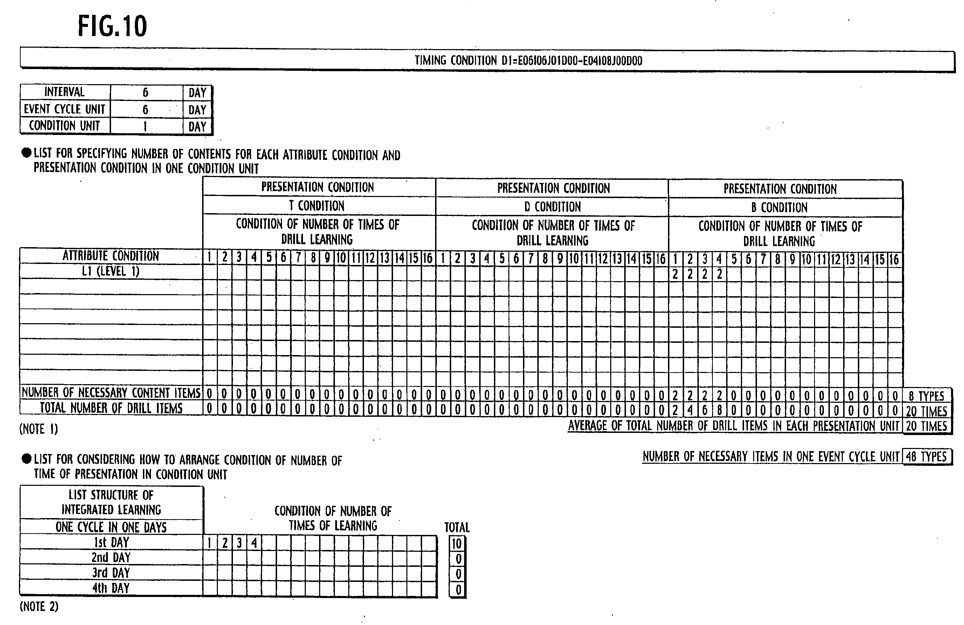

Here, the example of schedule table shows a part of a table including schedules of timing conditions A1, B1, C1, D1, E1 or the like, shown in FIGs. 5 and 8 to 10. The condition of A1 is learning once a month, the condition of B2 is learning once in two month, and the condition of C1 is learning once a week. In the condition of D1, after learning once a week for a month, leaning is suspended for a month, then, learning is restarted once a week, and this pace is repeated. In the condition E1, after leaning once a weed for a month, leaning is suspended for two months, then, learning is restarted once a week for a month, and this pace is repeated. In the table of (Note 1) in FIGs. 8 to 10, the case in which the presentation condition is set D condition, required learning method is assurance test and drill learning. In the table of (Note 2), the right hand total number is meant to arrange the conditions in order to equalize total numbers of content items in the presentation unit (in order to equalize learning and test condition).

The minimum unit (presentation unit) of event cycle units shown in FIGs. 8 to 10 is considered as one day. The way to see those tables are the same, so we explain about FIG. 8 for instance.

Regarding an English word in attribute condition LB1, in T condition among the presentation conditions, it is assumed that drill learning number condition is one to eight times respectively and the number of contents (English words) presented in each drill learning number is 5.

In D condition, it is assumed that drill learning number condition is one to eight times respectively and the number of contents (English words) presented in each drill learning number is 3.

Therefore, in T condition, the number of contents required for presentation is 5 so that the total number of the drill items is 1×5=5 times when the number of drill learning is 1. Similarly, the purpose of the total number of the total number is 2 × 5 = 10 units. In D condition, the number of contents required to presenting so that when the number of drill learning number is 3. Accordingly, when the number of drill learning is 8 and the total number of drill items is 3, the total of the drill item addition be expressed 3 × 8 = 24 times.

A result of the calculation in this way is shown in item of the total drill item number and the total number of them are shown in the right hand. The number of content items required in one condition unit (2 days) can be found 64 types of contents in the drawing so that the number of items required in one event cycle unit (24 days) can be found by 64 × 12 = 768 items.

Further, in order to contrive arrangement of conditions to equalize the number of content items in presentation units (to equalize learning and test conditions as possible), number of leaning time condition is arranged so that both of the total number of learning times in the first day and the total number of learning times in the second day are 18 times.

In the schedule table, various period of event cycle units, such as 1 month, 2 months, or 1 week, exist. Accordingly, fields of "SC COND" is provided to show in what number of the day the event in the schedule occurs. For example, when the "SC COND" in C1 says "0203", it means the third day of the second event cycle, that is, it is ninth day from the beginning day of learning.

The above type of leaning method (EXP) is one example of presentation condition, and there are four types, for example. The first type (T) is a leaning method for evaluating the familiarity (assurance test) of an English word by showing the word before leaning, for paired-associate learning of English and its Japanese translation. The second type (D) is a learning method in which an assurance test and drill learning are required. The third type (B) is a learning method in which a learner learns without any assurance test. The fourth type (F) is a learning method in which test is performed by selecting a predetermined contents among the contents used for familiarity assessment, for example, in the end of the month, and the way of presentation is different from that of T, D, and B.

The number of repeating (REPEAT) is also an example of presentation condition and indicates the number of repeating in a presentation unit. As other presentation conditions, there are presentation time, way of emphasizing leaning items, or presentation order which determines the order so that the same content is presented with largest interval in a presentation list. In these learning methods, the number of repeating or like are equivalent to presentation conditions. That is, if various conditions are coded, detail prediction for each condition can be realized.

As condition code of attribute information (TYPE), symbols such as W1 and S1 are shown. However, in case of learning Japanese translation, the first letter "W" indicates a learning method in which an English word is presented to learn its Japanese translation, and the "S" indicates a leaning method in which a sentence is presented to learn its Japanese translation. The second letter of numbers indicates the number of kinds of Japanese translation. For example, when "W3" is shown, it means that there are three Japanese translation for the English word.

The contents identification code (EXP COND) of the schedule table in FIG. 7 is what is summarizing codes of each condition corresponding to the serial numbers. For example, the sequence number "1" shows "0101 A=W1 T=D R=1 ST=AD SC=0101 J=01". This is relevant to an event that is performed once a month; W1 type attribute word, D learning method (that is, presentation condition 1), the number of repeating for one time (R=1; that is, presentation condition 2), the first day in the first event cycle unit (SC=0101). This is a schedule data providing one content in a condition relevant to the condition unit of the first time.

Such a schedule table is a table that is made of a schedule condition designed by using the above-described methods, and its basic deign is based on a frame of the above-described scheduling method. In the meantime, the number of contents to be allocated to a combination of respective conditions of respective schedule conditions is decided in such a manner that a content item number allocation list as shown in FIGS. 8 to 10 is made for each timing condition or for each schedule condition; and the number of the words to be allocated to each condition is adjusted and decided in consideration of the number of the available contents and the necessary time, thereby, allocation of the content items and the conditions to the condition can be simply performed with reference to the number of the available contents and the learning time to be expected. It is a matter of course that a list as shown in FIGS. 8 to 10 may not be made if the learning conditions in each presentation unit are equal and the learning time is ignored. However, at once the estimation accuracy of the record is lowered and various analyses cannot be performed.

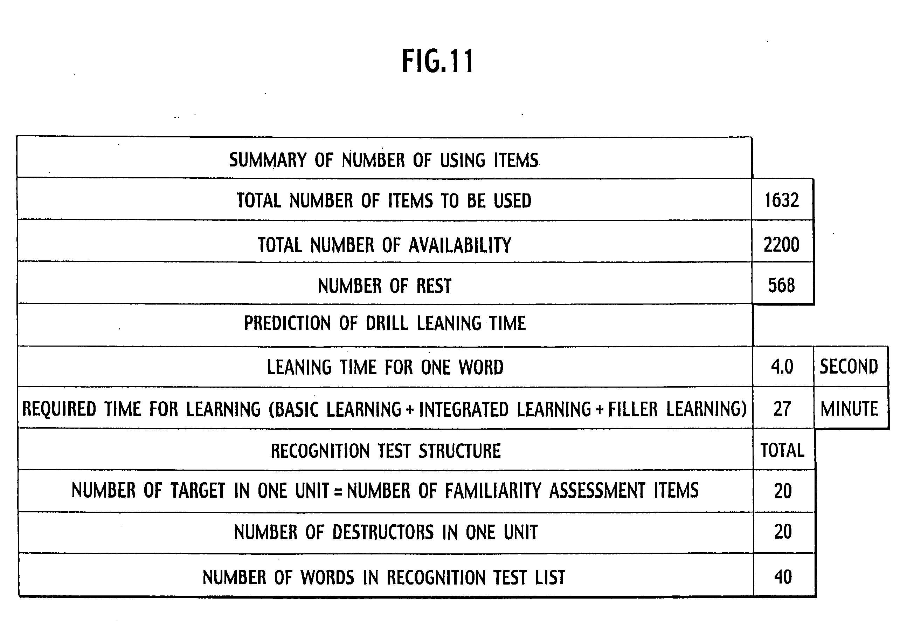

FIGS. 8 to 10 are files made by Microsoft Excel, in which a calculating formula has been filled in advance so that the information such as the learning time or the like is outputted in sections such as "outline of the number of using items" and "prediction of drill leaning time" shown in FIG. 11, if the number of drill leaning time condition, arrangement of presentation time condition in a condition unit or the like are inputted.

As described above, it is possible to present a learning content with a plurality of schedule conditions mixed therein, and also in this example, various analysis can be performed while providing a plurality of schedule conditions to the same learner. In the schedule shown in this list, there are five timing conditions; as the attribute condition of the content, there are the conditions such as LB1, XX, L1 or the like; as the learning method, there are the presentation conditions such as T, D, B or the like, and further, there is the learning number condition to be required by the drill learning. For each combination thereof, progress of the learning is indicated and the relation thereof can be reviewed.

An outline of composing schedule table will be explained with reference to a case of timing condition having no sub unit (A1) and a case of timing condition having sub units (D1), shown in FIG. 5.

<Case in which No Sub Unit is Provided>

An AT schedule shown in an example of schedule table in FIG. 7 is that a condition in which each types of presentation condition is combined to the A1 timing condition in FIG. 5.

(1) Firstly, necessary information (schedule information), such as display input, definition file format, or the like, among the following information is input.

- Schedule simplified name: SC_TYPE="AT"
  AT is one of a schedule conditions of A1 timing schedule.
- A number representing a presentation unit in an easily understandable period (DAY_IN_UNIT: When a day is used as an easily understandable period, the presentation unit is assumed as one day, so DAY_IN_UNIT=1): 1
  In many cases, DAY_IN_UNIT becomes 1 because 1 is always assumed in a case that a generating schedule is finally described based on 1 day unit by considering one day as a presentation unit, or in a case that a schedule is finally described based on one business month unit by considering one business month as a presentation unit.
- Schedule timing code: SCID="_E024_I024_J002_D000"
- Number of presentation units composing event cycle unit (EVENT_UNIT_01-24)
- Number of presentation units composing interval (INT_UNIT_01=24)
- Number of presentation units composing condition unit (JOKEN_UNIT_01=2)
- Number of presentation units composing delay (DELAY_UNIT_01=0)
- Number of contents to be allocated to the schedule condition (number of words): WORD_NO_IN_JOKEN_UNIT=1
- Attribute to be allocated: WORDTYPE="W1"
  "W1" defines a pair of English word having one Japanese translation and Japanese among contents (W) shown in format of English word and Japanese word. With reference to FIG. 8, "W1" corresponds to the attribute condition LB1 (W1 is contained attribute of LB1 (difficulty level 1 in a word database of B company)). The number of contents in this condition is shown 5 in FIG. 8, since a schedule (A1) which is considered in FIG. 8 includes some conditions in addition to a schedule condition (AT) which is explained here.
- Presentation condition in presentation unit: EXP TYPE="T"
  "T" defines a condition in which question part (English words) is presented in a familiarity assessment and an assurance test, and drill learning is repeated in a predetermined number of times. Further, among other symbols used in EXP in FIG. 7, D is a question which is presented in an assurance test and used in drill learning similar to T; B is a question which is used only in drill learning; F is a question which is presented in a familiarity assessment, required in drill learning as inserted exercise, and used in an objective test performed once a month; X is a question which is used only in an objective test (FIG. 7 which represents an example of a schedule table shows partially.).
- Name of condition and digit number of presentation condition of repeating condition ALL_COND_DIM01="12345678" COND_MAX_KETA01=2
  In this condition, repeating condition of conditions 1 to 8 is assumed. Names for each condition may be determined. Or, when it is determined condition names are expressed with half-byte characters determined in COND_MAX_KETA01 as described above, the name may be described as a sequential condition. Here, the condition is not assumed only as repeating condition. Symbols may be input, which are for representing a condition for comparing the effects or effects desirable to be presented in various conditions such as a condition that presentation time of English words differs in 1 second, 2 seconds, 3 seconds (It may be a condition of "abcde".). Here, the symbols are used as keys for analyzing.
- Grouping information of condition unit
  vCOND_DIM01_SET01="1368"
  vCOND_DIM01_SET02="2457"
  In an AT schedule, a condition unit is composed of a couple of presentation units, and grouping needs to be performed for all conditions in the tow presentation units. It need to be shown which condition is included in which condition unit. This grouping is described with reference to grouping of list for consideration how arrange presentation time condition in a condition unit in FIG. 8.

- Period of schedule
  MAX_DAY=144 days (144 days *DAY_IN_UNIT)
  The scale of a schedule table is determined based on the maximum length of period. In case of 144 days, one month is considered as 24 days excluding Saturdays and Sundays and 6 month schedule may be composed.

(2) A record in which schedule information is written according to request is made for each condition of a minimum condition unit (REPEAT). It will be explained with reference to FIG. 7 (a schedule table in which AT schedule and D1 schedule are mixed). The following is correspondences of field and schedule information in an example of a schedule table. Here, a set number corresponding to grouping information of condition unit (vCOND_DIM01_SET01, vCOND_IDM01_SET02) is input to set fields (SET_DIM01) of record of each condition.
NO : sequential number
MONTH: month (24 days are considered to be one month in the present embodiment)
DAY: day
TYPE: attribute information of content
N: number of questions contained corresponding condition (corresponding to WORD_NO_IN_JOKEN_UNIT of schedule information)
EXP: presentation condition (=EXP_TYPE)
MAX_DIM: assumed number of dimensions (layers) of basic units (assumed "1" in a case that no sub unit is assumed like AT)

(3) According to the number of condition unit, a list of presentation order is created as mentioned below, for example, by using circulating method of design of experimental method, or by arranging randomly. Based on the order, a record corresponding to set field number is extracted and sequential number of presentation unit (TU_DIM01 of a schedule table) is input. Then, the record is added up to the maximum number of condition unit (the maximum number of condition unit to be assumed in an event cycle unit).

An example of the order list in case of two condition units: 1, 2, 2, 1, 1, 2, 2, 1 ...

(4) An event cycle unit number is input to EU_DIM01 of the schedule table ("1" is input since it is minimum at this time) .

(5) A list corresponding to an event cycle unit is completed.

(6) The list of event cycle units made in (5) is added repeatedly, as adding sequence numbers of event cycle units, until the maximum number of event cycle unit which can contain whole schedule period.

(7) Writing of basic time axis (DAY)

The content of the following equation is written to the field of DAY in each record.

TU_DIM01+INT_UNIT_01 $\times$ (EU_DIM01-1)

(8) Finally, a schedule table of AT schedule is completed when DELAY_UNIT_01 ("0" in case of AT schedule) is added to all DAYS.

(9) As the occasion demands, input DAY is rewritten in month (MONTH) and day.

(10) Writing of condition

The fifth record in the drawing of the schedule table is used an example. Month and day (described with 4 digits from left hand: 0101), attribute of item (_A=W1), presentation condition (_T=D), repeating condition (_R=1), name of schedule (_ST=D1), number of timing condition (_R=1), schedule (_SC=010101: indicating, from the right digit, number of presentation unit in a basic unit, number of event cycle unit, number of sub event cycle unit for two digits: they are written so as to facilitate analyzing), number of condition unit (_J=01) are written to EXP_COND of the field. Similarly, number of timing condition is written to SC_COND (This may be used to facilitate analyzing.).

(11) When a plurality of arranged schedules, other than AT schedule, exist, schedule tables made for them are combined. Accordingly, a schedule table containing whole schedule condition can be made by sorting the combined table by DAY and MONTH.

<Case in which Sub Unit is Provided>

It will be explained with reference to an example of D1 schedule. This is a condition in which each types of presentation condition is combined to the D1 timing condition in FIG. 5.

(1) Similar to AT, D1 schedule information is defined.

- SC_TYPE="D1"

- DAY_IN_INIT=1

- Schedule timing code:

SCID="_E006_J001_D000-_E004_I008_J000_D000"

- Regarding basic unit
  EVENT_UNIT_01=6, INT_UNIT_01=6, JOKEN_UNIT_01=1, DELAY_UNIT_01=0

- Regarding first sub unit
  EVENT_UNIT_02=4, INT_UNIT_02=8, JOKEN_UNIT_02=0, DELAY_UNIT_02=0
  Here, a first sub unit is not always necessary to be set condition unit, so it may be JOKEN_UNIT_02=0 for all the time. When condition unit is assumed for a sub unit, a very complicated combination of conditions can be created.

- WORD_NO_IN_JOEN_UNIT=1

- WORDTYPE="W1"

- EXP_TYPE="D"

- Name of condition and its number of displaying digit of presentation condition of repeating condition
  ALL_COND_DIM01="1234"
  COND_MAX_KETA01=2

- Grouping information of condition unit
  vCOND_DIM01_SET01="1234"

- MAX_DAY=144 days

(2) A list of event cycle units are made in the same procedures of (1) to (6) of in the above explanation of the AT schedule. In D1, the following procedures are added since sub unit is assumed here.

(3) A field of sub event cycle unit which is to be input serial number of sub unit is provided (EU_DIM02) (It means a second dimensional event cycle unit) and serial number of sub event cycle unit is input to the field. Then, the list is added repeatedly up to the maximum number of sub event cycle unit, which can contain everything in the schedule period. As adding, serial number is increased and input to EU_DIM02.

(4) Here, when a further dimensional sub unit is assumed, it is added repeatedly as adding number corresponding to sub event cycle unit (EU_DIM02, EU_DIM03, EU_DIM04, ...). Accordingly, a list of corresponding schedule can be made.

(5) Writing of basic time axis (DAY)

The content of the following equation is written to the field of DAY in each record.

$$\text{TU\_DIM01} + \text{INT\_UNIT\_01} \times (\text{EU\_DIM01-1}) + \text{DELAY\_UNIT\_01} + \text{INT\_UNIT\_02} \times \text{INT\_UNIT\_01} \times (\text{EU\_DIM02-1}) + \text{DELAY\_UNIT\_02} \times \text{INT\_UNIT\_01}$$

Further, when the i sub unit is assumed, all of the following values relating to sub unit are added to the value relating to the basic unit, $\text{TU\_DIM01} + \text{INT\_UNIT\_01} \times (\text{EU\_DIM01-1}) + \text{DELAY\_UNTI\_01} + \text{INT\_UNIT\_x}(i+1) \times (\text{INT\_UNIT\_x}(i) \times \text{INT\_UNIT\_x}(i-1) ... \times \text{INT\_UNIT\_02} \times \text{INT\_NIT\_01} \times (\text{EU\_DIMx}(i+1)-1) + \text{DELAY\_UNITx}(i+1) \times \text{DELAY\_UNIT\_x}(i) \times \text{DELAY\_UNIT\_x}(i-1) ... \times \text{DELAY\_UNIT\_02} \times \text{DELAY\_UNIT\_01}$

Here, as shown in the above equation, delay (DELAY_UNITx(i)) may be defined and added for each unit. However, all the delay (DELAY_UNIT× (i)) may be set "0", and then, finally, total delay may be added on the day of the first operation point.

(6) As the occasion demands, input DAY is rewritten in month (MONTH) and day.

(7) Writing of condition

The fifth record in FIG. 7 of the schedule table is used an example. Month and day (described with 4 digits from left hand: 0101), attribute of item (_A=W1), presentation condition (_T=D), repeating condition (_R=1), name of schedule (_ST=D1), number of timing condition (_R=1), schedule (_SC=010101: indicating, from the right digit, number of presentation unit in a basic unit, number of event cycle unit, number of sub event cycle unit for two digits: they are written so as to facilitate analyzing), number of condition unit (_J=01) are written to EXP_COND of the field. Similarly, number of timing condition is written to SC_COND (This may be used to facilitate analyzing.).

(8) When a plurality of arranged schedules, other than D1 schedule, exist, schedule tables made for them are combined. Accordingly, a schedule table containing whole schedule condition can be made by sorting the combined table by DAY and MONTH.

(Procedure 3) Writing Content Identification Condition Code in Each Content on the Basis of Schedule Table and Content Database

If the schedule table is created or a necessary schedule table is extracted from the schedule database 2, a kind and the number of the content required by each identification condition code are specified. It is preferable to decide what identification conditions the contents are allocated as relating the attribute information of each content to the attribute information of the identification condition code, and further, it is preferable that they are allocated randomly as much as possible.

In detail, it is performed as follows.

(1) For each schedule condition, only condition record corresponding to an event cycle unit of the smallest condition unit among the schedule table is extracted (This is called a basic condition record.) As an example of a specific schedule table, a schedule with only basic unit (e.g. AT schedule) extracts only a record of EU_DIM01=1, and a schedule with basic unit and sub unit (e.g. D1 schedule) extracts only a record of EU_DIM01=1 and also EU_DIM02=1 (It is the same in the second dimension, third dimension, and fourth dimension.).

(2) Based on the extracted smallest basic unit, the name of schedule (SCHE_TYPE) and attribute (TYPE) are added and the number of required items of each attribute in each schedule (and items of presentation condition for each) is specified. If a schedule information table is created with them, it will be useful for various fields such as analyzing.

(3) Regarding basic condition records for each schedule, items having the equal attribute as the defined attribute (or items having attributes in a predetermined region when attributes are individual reactions) are extracted from the content list. After those items are arranged randomly, identifying condition field of the basic condition record (EXP_COND) is copied to each identifying condition code field of content item (EXP_COND) (When N is more than one, the identifying condition of the same basic condition record is copied to the identifying condition field of N number of content items). When the number of the content items corresponding to the specified attribute condition is larger than total N number required in the basic condition record, extra items are stored in a different content list (It will be used when a schedule is restructured) . Here, when identifying condition is written in the content list, allocation of the most similar attribute (difficulty, score value or the like) among the presentation condition in the condition unit as possible will be very important to improve its accuracy.

As described in (9), in a case that a counter balance method is employed to grasp a general tendency by collecting data from a plurality of individuals, identifying condition is provided to contents according to the counter balance method. The way of allocating identifying condition to contents based on the counter balance method will be simply explained. Firstly, as a content item for allocating target condition (e.g. repeating condition 1, 2, and 3 times) for comparing and studying, necessary content item is previously determined for allocating the same item group to all the objects (A particular attribute condition may be written.). The item group is provided the following processes individually and finally added to the contents database. That is, two fields of SET and COND are provided to the contents database of the item group. The group is randomly divided to sets of number of conditions which are targets for comparing and studying. Symbols (A, B, C or the like for three conditions) are written to the SET field for each divided set (It is called a condition set.). Correspondences of conditions for comparing and analyzing and condition sets to be allocated are made separately as mentioned below (in a case that the repeating condition is 1, 2, and 3 times, and in a case that the set condition is A, B, and C). Counter balance condition (CB condition) numbers are provided to the correspondence of the conditions and the sets.

CB condition (1) (1 time - A, 2 times - B, 3 times - C)
CB condition (2) (2 times - A, 3 times - B, 1 time - C)
CB condition (3) (3 times - A, 1 time - B, 2 times - C)

Further, learners are randomly allocated to BC condition. According to the correspondence of condition and set of the allocated BC condition, symbols (1, 2, 3 or the like) of condition corresponding to the symbols of the SET field are input to the COND field. When identification condition is allocated, identification condition is written to the content items so as to the repeating condition (REPEAT field) corresponds to the condition of the COND field. This operation is performed to all learners. When analyzing, the total number of target learners in CB condition may be equalized (by extracting randomly, for example) and the average values or the like in each repeating condition to be considered may be compared. Accordingly, data in which material effectiveness of content items are countered can be obtained so that the accuracy can be improved.

The content identification condition codes (EXP COND) of schedule table, which are allocated as described the above, are written in correspondence with each contents of content list (K3). At the same time, the detail of content list including content identification condition is registered to a reaction database 3.

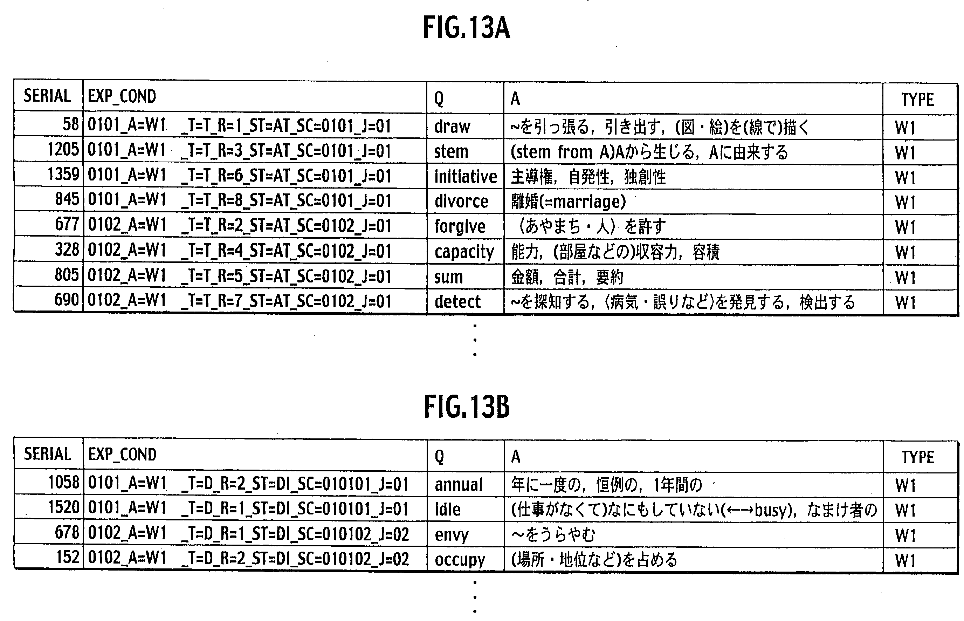

In FIGs. 13A and 13B, an example of content list having content identification condition written in its content is illustrated. FIG. 13A shows a part of content items corresponding to AT schedule in which content identification condition is written. FIG. 13B shows a part of content corresponding to D1 schedule in which content identification is written.

Here, the detail of content is not required to be written in the content list. Serial numbers may be recorded instead of the detail of content so that the detail of content can be defined by verifying the content data recorded in the content database as required.

As described the above, on the assumption that one or more schedule tables providing a predetermined schedule condition and one or more content list which is given schedule condition codes corresponding to the schedule table are prepared, a presentation list corresponding to presentation units is created in the following procedure.

(Procedure 4) Designation of Range for Extracting Presentation List

In the case of extracting the presentation list corresponding to the presentation unit, according to need, the number of the presentation unit, to which the generated presentation list corresponds, is designated. While each presentation list is generally extracted in an order of the presentation units, it is also possible that, by designating a plurality of presentation units, all of the presentation lists for these unit are extracted (particularly, in the case of downloading the lists through the network, they can be downloaded in gross). In the case of generating a presentation list in accordance with the same schedule table by the different terminals, by grasping which presentation unit has been already generated or the like on the basis of the schedule table, the synchronization of the histories of learning is also possible. In other words, a range of presentation units that are made into a presentation list (that are in the condition capable of learning) is recorded as a schedule table or another file, and by using this, it is possible that a presentation list generation history is grasped, a presentation list showing the contents that are not learned appropriately and this list is provided.

(Procedure 5) Generation of Presentation List Corresponding to Presentation Unit

As an example, on the basis of the schedule table shown in FIG. 7, a method for extracting a presentation list corresponding to the presentation unit at the first day of the first month will be described below. At first, if a range to be generated is designated as the first day of the first month, a range of the schedule table corresponding to MONTH and DAY of FIG. 7 will be confined (MONTH=1 and DAY=1 in FIG. 7). Then, the content in which all or a part of the information of an identification condition code (EXP COND) of this range is written is extracted from the content list, and a presentation list is structured in accordance with the presentation condition. For example, the first schedule condition of the first day of the first month in FIG. 7 is one of the following four kinds.

1) 0101_A=W1 _T=T_R= 1_ST=AT_SC=0101_J=01
2) 0101_A=W1 _T=T_R= 3_ST=AT_SC=0101_J=01
3) 0101_A=W1 _T=T_R= 6_ST=AT_SC=0101_J=01
4) 0101_A=W1 _T=T_R= 8_ST=AT_SC=0101_J=01

From each identification condition, when a letter string beginning with "_A=" and ending before "_SC" is took out, they are as follows (The space after W1 is shown because the character width of the attribute information is fixed in the maximum width.).

1') W1 _T=T_R= 1_ST=AT
2') W1 _T=T_R= 3_ST=AT
3') W1 _T=T_R= 6_ST=AT
4') W1 _T=T_R= 8_ST=AT

There should be only one item in the content database, which contains, in EXP_COND, both of the above conditions recorded in the EXP_COND field as identification condition among the content database and letters which indicate serial numbers of presentation unit among timing condition serial numbers sandwiched between "_SC" and "_J=" ("01" in front of "_J=" in the example showing presentation unit serial number in two digits) (This is because it is determined that the number of item corresponding to each condition is "1", in schedule information of AT schedule condition.). In any number of event cycle unit, item having the same serial number for the attribute condition, presentation condition, and presentation unit exist only N numbers in the content list ("1", in case of AT). The item is first extracted. Similarly, corresponding content items are extracted for all schedule condition for the day.

Next, with all extracted items, a presentation list, as shown in FIGs. 14A and 14B, are generated in accordance with conditions of presentation condition defined in the identification condition ("T" shown as "_T=") and repeating condition ("1" shown as "_R="). Concretely, in case of an item in which the presentation condition is T, only questions for familiarity assessment (English words) are firstly promoted. Accordingly, those questions are randomly added to the presentation list. An assignment symbol (F) representing familiarity assessment is input to TASK 1, which is an assignment field of the list. Then, English words which are performed in the familiarity assessment and words which are not performed in the evaluation but used in a recognition test (its presentation condition is D) are added as assignment test in random order. An assignment symbol (R) representing recognition test is input to the assignment field. Further, an item which are presented in number of times based on the repeating condition is randomly added number of times of the presentation condition. A symbol (D) representing drill assignment is input to the assignment field. In order to provide groups of assignment or partitions to quit during the study, serial number representing group is input to the PHASE field. The serial number is used as a partition in the presentation program. Finally, "1" is input to all in CHECK field which is used for checking whether or not learning is completed during the study. During the study, questions are presented in a way of assignment presentation according to the assignment symbols starting from the top of the list. When a reaction to the question is obtained, the reaction is input to such as RESPONSE 1 and TIME 1 and, finally, CHECK field is turned to "0" so as to grasp the learning process.

According to the schedule table in FIG. 7, when identification unit of a predetermined presentation unit is specified, necessary contents are extracted from content list to which the information of the specified identification unit. At the same time, the contents are arranged in order in accordance with operation such as presentation condition to generate a list for creating a presentation list for one presentation unit (K4).

Here, all of the creation of a presentation list for one presentation unit depends on the presentation condition, the detail of assignment or the like. There are a number of the assortments of the presentation list, so various examples of presentation lists can be considered.

As explaining from the left field in FIGs. 14A and 14B again, the CHECK field indicates by which field the learning is finished. When learning is suspended in the process of the presentation list, the learning can be restarted in use of the information in the field. A PHASE field indicates a group of learning or other assignments (familiarity assessment, memory test, inserting drill or the like). A TRUE DAY is a field in which the date of study is input, and a TIME 1 is shows time in which to evaluate in a familiarity assessment or the like.

SERIAL shows serial numbers of contents. For example, in a example of the first content of the list in FIG. 14, it shows SERIAL=1359 (The English word is "initiative") and this content corresponds to SERIAL=1359 (not shown) of the content list in FIG. 12. This example is a learning method for requesting a learner one reaction for one content, so minimally one reaction field and one field for recording the reaction time are provided to each content as shown in the reaction database in FIG. 15, which indicates reaction history. In a case of presentation condition in which a plurality of reactions are required to one content, a plurality of reaction fields are required.

(Procedure 6) Presenting Contents Sequentially in Accordance with Presentation Condition (K5)

This procedure may depend on the presentation condition of the contents and a method for learning or the like. Here, one presentation method is introduced. This method is a method for collecting the data that can be most usable and combines the learning with the test available for various contents.

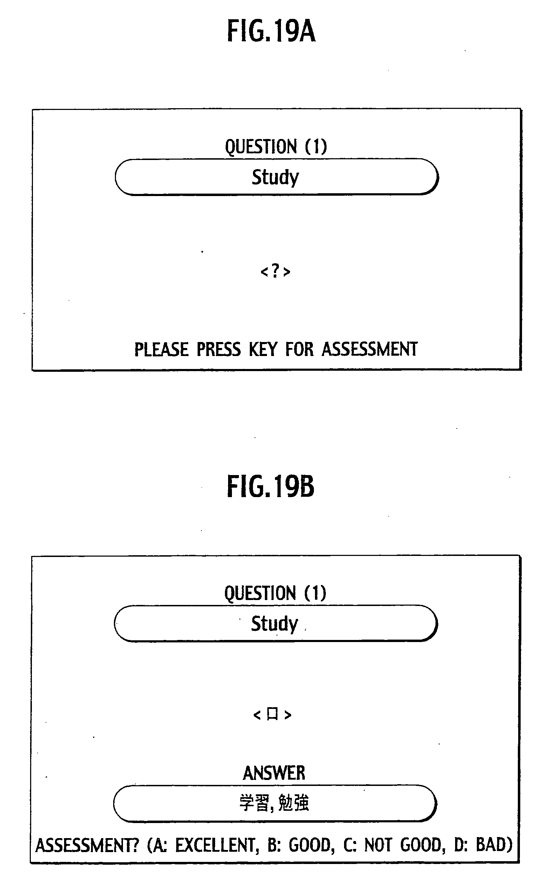

At first, as shown in FIG. 19A, the English words are only displayed and if the learner pushes down any key, their Japanese translations are displayed as shown in FIG. 19B. The operation until this is display of the contents. According to this method, at a point of time when this display is competed, the learner may self-assess an acquisition level of the detail of the content. According to an example shown in FIG. 19B, the record is assessed by four stages (A: excellent, B: good, C: not good, D: bad).

This method only presents the content and if a solution is not requested, the learning is established, and this method is applicable to various contents. By converting its assessment result into a numeric character (in FIG. 19, A = 3, B = 2, C = 1, D = 0), this method also can be treated as the record, so that particularly, in the case of the schedule setting the event cycle unit and repeating the learning at a preserved timing, a relation between the number of learning and its record can be directly reviewed, and this makes this method effective (ordinarily, if a test is conducted differently from the learning, this test event has an impact on the record hereinafter, so that it is purely difficult to review a relation between the record and the learning).

On the other hand, an example of test records in case that test requesting answers is implemented is shown in FIGs. 15A and 15B. The test is implemented in schedule conditions of such as F1, X1, X2, or X3. When the answer given by the learner in the first test is correct, "○" is recorded to PM01, and when the answer is incorrect, "×" is recorded. PM02 and PM03 are records of correct or incorrect of the second and third tests respectively in order. TIMEFUN01 shows time limit for responding the first test. TIMEFUN02 and TIMEFUN03 corresponding to the second and third tests respectively in order.

(Procedure 7) Writing Reaction Data and Learning History Data

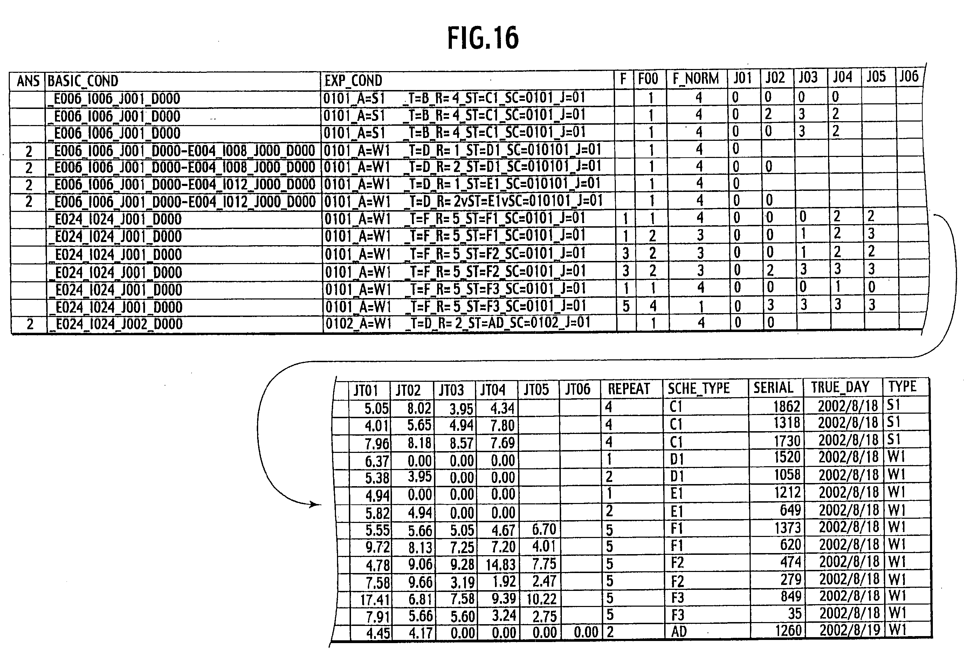

At a point of time when the content is presented in accordance with each presentation condition, the reactions to the event are written in the reaction database 3 as shown in FIG. 16 (K6). In FIG. 16, a value of mastery assessment is recorded in the F00 field, the standard value (reference value) of mastery assessment is recorded in the F NORM, and the reaction of the memory test is recorded in the ANS. The field of (J01, J02, ...) converts the assessment in FIG. 19, which represents the reactions of self assessment in scores (A: excellent, B: good, C: not good, D: bad), and shows in numbers (A=3, B=2, C=1, D=0). A time taken for these reactions are recorded in the field of (JT01, JT02, ...) (If this time is analyzed, it is possible to easily grasp how long the learner takes time for each reaction and to feedback to the learner).

In the meantime, the fields such as F, ANS, J shown in FIG. 16 are not necessary to be divided and they may record the reactions as one reaction field.

(Procedure 8) Return of Reaction History List and Personal Data File

When the event regarding all presentation list is terminated, the reaction history list in which the content number and the reaction or the like are written is returned to a server for data analysis through the network. In the meantime, in the personal history data file, the through number of the presentation unit, the start time of the learning, the end time, the due data, and the start/end times of the phase disposed within the presentation unit or the like are written. If the data of the learning is analyzed on the basis of these data, the prediction such that the record is better in the learning in morning or when the learner learns, his or her record becomes better; and estimation of a personality and a learning style or the like of the learner are allowed in principle.

In the content list, identification condition or the like of each content are written in accordance with a predetermined schedule table and the presentation list is also created in accordance with the predetermined schedule table. Accordingly, when these data are copied to the reaction database, the data is recorded corresponding to each condition, as shown in FIG. 16.

Here, a personal history data file is made for each presentation list (only one record), and all personal history files may be stored in the server. The use of the personal history data files may help to grasp which presentation unit of learning is completed by the learner, which is not completed yet, and to give an instruction to encourage to learn as required. Further, even when leaning data is deleted because of a communication error, the data may be stored in the terminal so that lacked data can be defined later and the data can be retransmitted.

(Procedure 9) Data Analyses Using Personal Reaction Database

The identification condition code of the personal reaction database includes the presentation condition and the attribute information in addition to the schedule condition. Accordingly, using the information included in this code (it is a matter of course that the filed of the presentation condition and the filed of the attribute information may be used as they are), the central value gathering up the reactions such as the learning record or the like to a prescribed schedule can be acquired for each event cycle unit. In use of these data, various kinds of analysis, as mentioned below, can be performed.

<Result of Experiment that is Performed by Incorporating Scheduling Method>

(Explanation on Schedule Condition)

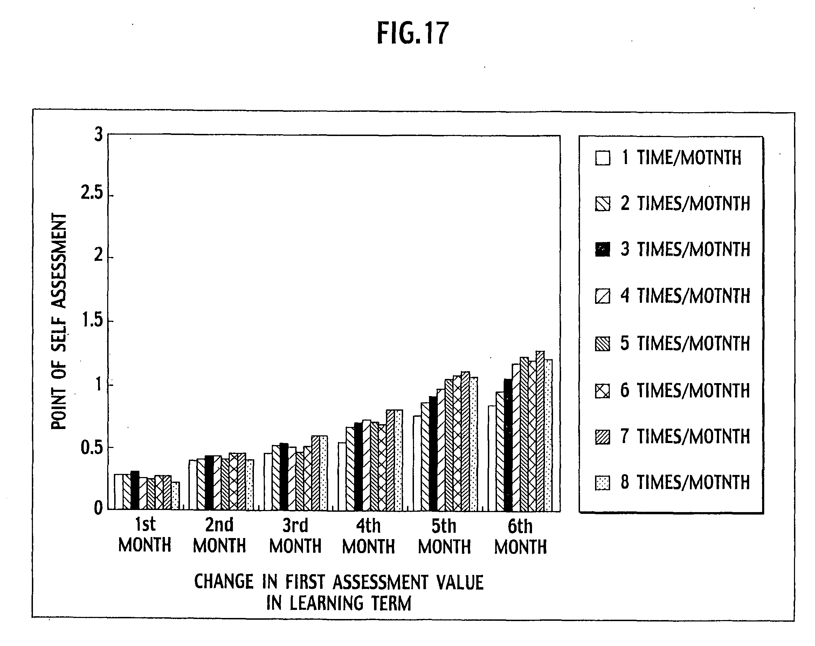

Employing the present schedule structure method and analyzing method, the experimental result that has been already performed will be introduced below. FIG. 17 shows an average manner of accumulation of the learning shown in the self-assessment value in a long-term learning experiment that a senior high student continued to learn the English words in accordance with a prescribed schedule. A horizontal axis means the order (corresponding to a month in this schedule) of interval units (24 days: about one month); each bar graph therein means a presentation condition (the learning condition of one to eighth); and a vertical axis means a self-assessment value (a record) corresponding to each of them.

In the meantime, although this experiment considers a plurality of interval conditions in fact, only one condition will be described here. The schedule condition of this experiment will be represented as follows by the above-described wording.

- A timing condition: a condition learning once per month with an interval of one month (one month = 24 days) . Assuming that one day is the minimum event period, the days are coded as follows.

| DAY 1 | DAY 2 | DAY 3 | DAY 4 | ... | DAY 24 | DAY 25 | DAY 26 | ... | DAY 48 | DAY 49 | ... |
|---|---|---|---|---|---|---|---|---|---|---|---|
| 1 | 0 | 0 | 0 | ... | 0 | 1 | 0 | ... | 0 | 1 | |

Assuming that one month (defined as 24 days) is the minimum event period, the months are coded as follows.

| MONTH 1 | MONTH 2 | MONTH 3 | MONTH 4 | MONTH 5 | MONTH 6 |
|---------|---------|---------|---------|---------|---------|
| 1 | 1 | 1 | 1 | 1 | 1 |

- A presentation condition 1 (the number of repetition) : Eight conditions of 1 to 8 times in the number of repetition
- A presentation condition 2 (the learning method) : D (a condition for performing the drill learning without performing assessment of a level of mastery of the English words)
- An event cycle unit: 24 days (referred to as one month)
- Under this condition, the interval and the event cycle unit are 1 month together and they match each other.
- A presentation unit: 1 day
- A condition unit: 2 days
- How to allocate the repetition number conditions within the presentation unit: To odd days, the conditions of once, three times, six times, and eight times are allocated, and to even days, the conditions of twice, four times, five times, and seven times are allocated.
- The number of the words allocated to each repetition number condition within the presentation unit: 4
- The total number of the repletion number conditions within the presentation unit is 1 + 3 + 6 + 8 = 18 at the odd days, and it is 2 + 4 + 5 + 7 = 18 at the even days and they are the same number. Four words are allocated to these conditions by four, so that the total number of learned words at one day (the presentation unit) is 18 $\times$ 4 = 72, and the approximately equal load is expected with respect to this schedule condition every day (the load is more than 72 pieces in fact because the other schedule condition is paralleled).
- A content group: one kind: In this experiment, the words having the equal difficulty are used.

(Acquired Data)

Tracking the record of the words under the condition of learning once per month shown in FIG. 17 for each month, it is found that the record is improved. The bar graph in each month corresponds to the repetition number condition and the assessment of (A: excellent, B: good, C: not good, D: bad) representing the reaction of the self-assessment performed to the words at the first of each month as a score is represented as a point: (A = 3, B = 2, C = 1, D = 0) . This assessment value is the self-assessment meaning that to what level the learner learns the meaning of the English word to be presented (this result shows that the self-assessment is a very effective index in order to predict the level of mastery of learning).

This experiment uses the condition such that the assessment of a given word is required once to eight times and then, during one month, this word is not presented and it is presented again at an interval of one month (24 days). In this experiment, if the words are limited those matching this schedule condition, the number of the words (the kinds) allocated to each learning number condition is 48 (4 $\times$ 24 days $\div$ 2) (the total is 384) ; these 48 words are repeatedly presented in the number corresponding to each condition; and the value that respective first self-assessment values are averaged corresponds to one bar graph of each month. Assuming that the data shown in FIG. 17 is created according to the conventional method, the word learning is performed on a specific day 48 pieces $\times$ 36 = 1728 times in total, and then, the same assessment is performed at one month interval (36 is a total number of the repletion condition of once to eight times = 1 + 2 + 3 + 4 + 5 + 6 + 7 + 8) . If five seconds are required for the learning of one word, it is necessary to perform the learning for 144 minuets (144 = 1728 pieces x 5 seconds).

Even the learning of substantially 384 words under the learning condition of merely once to eight times requires continuous learning during two hours from the learner. Therefore, a homogeneity of learning is far from being assured and further, it is also impossible to present an enormous amount of learning contents to the learner at once. In other words, the total number of times of learning per day should be made less. However, if the learning per day is divided into several days, in this time, it becomes difficult to control the intervals between the learning and the test or the learning condition.

The present invention provides a method for strictly measuring an effect by making the total number of times of learning per day less while controlling the interval condition, making an amount of contents to be distributed at once less, and homogenizing learning of one day (a quality of learning).

In addition, as slightly described in a part of a method for making a presentation unit, a standard of the reaction of the rater such as the self-assessment is changed day by day. However, as a method to strictly predict the effect of the presentation condition by excluding this change and the individual difference, a method to arranging the presentation condition to be relatively compared and reviewed in the same presentation unit and to take the reaction difference against the content that is allocated to this condition may be observed.

For example, in FIG. 17, assuming the first assessment value of the word with each learning number condition of the first month as a base line, if the individual difference is subtracted from the assessment value after the second month, the individual difference can be excluded. Further, regarding the point from which the individual difference is excluded, if a difference in a point between the learning condition of eight times for each month and the learning condition of once is obtained, it is possible to predict the very strict learning effect, from which the impact of change of the determination standard in a day. However, only when the condition of the eight times and the condition of once are arranged in the same presentation unit, the change of the determination standard can be strictly excluded. Accordingly, in order to exclude such change (not limited within the condition unit), it is necessary to arrange the presentation condition capable of being compared and reviewed in the same presentation unit.

The progress of the learning in the case that the enormous amount of learning contents are learned at a preserved schedule cannot be objectively measured conventionally because the measure according to the present invention is not invented. According to the present invention, it is possible to strictly grasp the change of the reaction when the very enormous amount of contents (the objects) are learned under a prescribed interval condition (judge and assessment).

FIG. 17 is average data of twenty-three learners. It is also possible to illustrate the data for each individual. According to the method for converting the self assessment of a level of mastery of a learning stage that is suggested by the present invention, it is obvious that a prediction ability can be acquired, whereby the prediction of the level of mastery of each learner can be possible on the basis of the data of the individuals.

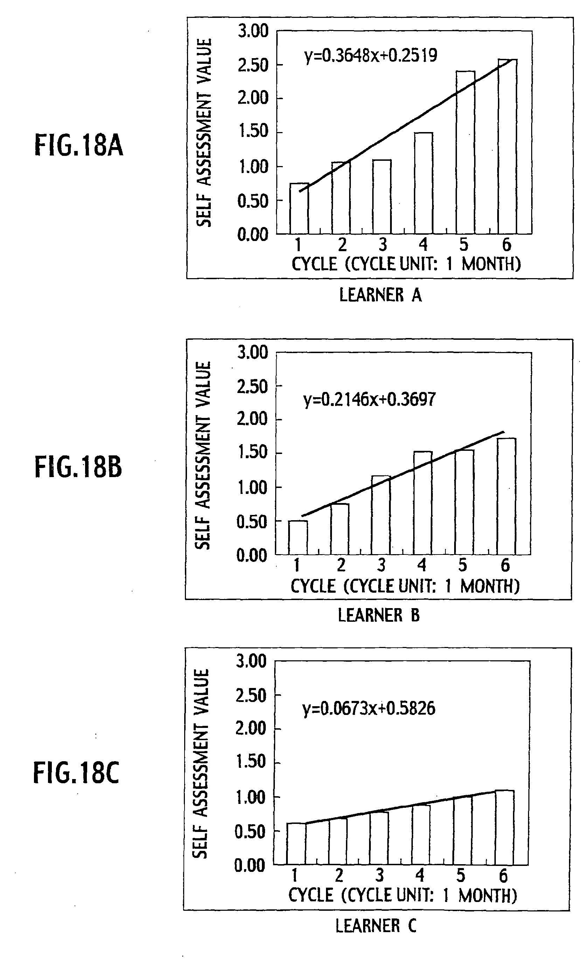

FIGs. 18A, 18B, and 18C show the individual data of three learners that are acquired from the actual tests and their prediction functions (a simple regression line is drawn) (the data of the experiment that is different from the learning schedule shown in FIG. 17). Although various functions are considered as the prediction method, it is found that the accurate and objective data for the prediction can be collected by using the present invention. Further, there exists no the data illustrating the detail of the change of the learning effect for each individual as shown in FIG. 17 and FIGs. 18A, 18B, and 18C in the world. In addition, while it is also possible to record the time required for learning of the word once as the other reaction index and an interesting fact is made clear from its analysis result, the detail thereof is herein not described. FIG. 17 and FIGs. 18A, 18B, and 18C illustrate an effectiveness of using the self-assessment of the level of mastery as an index for grasping the level of mastery, and the very detail learning effects are illustrated in the other index by connecting the data according to this scheduling method.

Particularly, as this experimental example, by adopting a timing condition once per month, the reaction data is displayed in accordance with this timing, at a point of time when the learning has been continued during a given period, it is also possible to predict the progress of the learning hereinafter. According to this experiment, organizing the reaction data from the first to the third of the fourth months as shown in FIGs. 18A, 18B, and 18C, even if the effect of the event once per month is different depending on the individual, it is possible to predict how many months are required so as to make the learning mastery level of the individual into a prescribed level.

Further, if many individuals continue the learning under the same schedule condition and collect and accumulate the data, it is possible in practice to return the progress of the learning when a given individual performs the learning under this schedule condition as a prediction pattern. Particularly, if the attribute (gender, level of motivation, learning style or the like) of the individual to be predicted is found, it is possible to specify a group of the learners having the same attribute that has already existed as the database and to return its reaction data as an accurate prediction pattern. This becomes a prediction method by a schedule fixing method, thereby, the reaction data are collected by controlling the schedule.

(15) Method for Predicting Effect of Event Arising at Long Intervals During Short Period

Taking the experimental result of the English words, from FIGs. 18A, 18B, and 18C, we can know that it is possible to predict how the effect of learning is realized when continuing the learning (event) at a pace of once per month; and how long period is necessary to complete the learning when continuing the learning on the same schedule. However, as shown in FIGS. 18A, 18B, 18C, this prediction is difficult to introduce unless the learning is continued during three or four months. In the case of continuing the learning of about three months without a vision, a motivation of the learner has not been kept for a long time actually. In the other words, the rater sometimes wants to acquire a vision of presentation of the effect of the event such as the learning or the like is expected for a shorter period. A method to enable such prediction will be described below.

In order to make the explanation understandable, here, the explanation will be given assuming that one month is 24 days and one week is 6 days.

(a) Facing up a schedule condition with a long interval that the event arises at a pace of once per month, and a schedule condition of with short interval that the event arises at a pace of once per week as described in "(12) facing up of the different schedule conditions", the same learner continues the learning under the condition that two kinds of schedule conditions are faced up and its reaction is analyzed, so that the data as shown in FIGs. 18A, 18B, and 18C can be acquired for each schedule condition.

(b) If this operation is performed to many learners, two drawings such as FIGs. 18A, 18B, and 18C showing the average tendency are acquired. In this case, it is predicted that a level of rising of the record (for example, the self-assessment value of the level of mastery) under the short schedule condition is larger than that of the long schedule condition. Therefore, for example, if a ratio of that inclination is specified, it is possible to represent the inclination of the long schedule from the inclination of rising of the record on the short schedule.

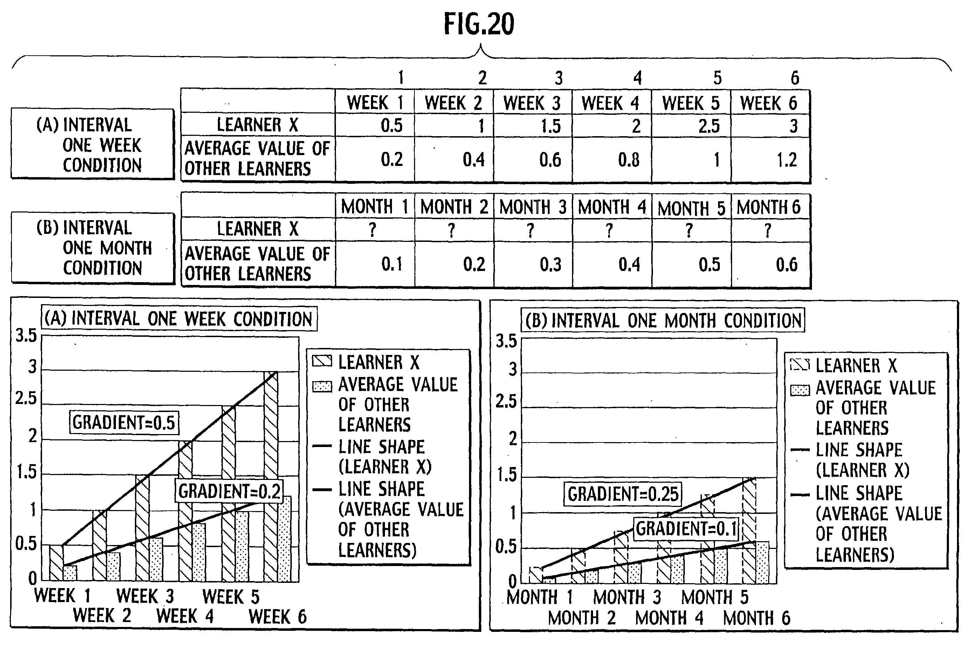

In FIG. 20, (A) shows changes of scores in a case that a learner X continues to study for six weeks in a schedule condition with one week (six days) interval; and average values of score changes in a case that a number of learners other than the learner X continue to study for six weeks in a schedule condition with one week (six days) interval. In order to consider influence of the factor of interval, for the above two schedule conditions employs the same for the conditions other than the interval condition, such as the attribute condition indicating the difficulty or the like of leaning contents and the presentation condition indicating the quality of an event.

On the other hand, in FIG. 20, (B) shows average values of score changes in a case that a number of learners continue to study for six month in a schedule condition with one month (24 days) interval. The score of the learner X is not shown because he or she is yet to study for six month in a schedule condition with one month (24 days) interval.

Here, based on the improvement of score, as shown in the tables or graph of (A), of the learner X who continued to study for 6 weeks (one month and a half) in the schedule condition with one week intervals, the changes of score will be predicted the case that the learner X studies in a schedule condition with one month intervals.

It is required that score data of 6 week study with one week intervals and score data of 6 month study with one month intervals of an unique learner are collected from a plurality of (a number of ) learners and stored in advance.

When these data and a model (function) are previously considered and specified, the predictive value of score of the learner X in case that he or she studies in a schedule condition with one month interval can be presented.

As an example, a following model is assumed, in which an increase rate Y of the score (achievement) in case of studying with one month intervals is proportional relation (proportional coefficient "a") to an increase rate X in case of one week intervals.

$$Y = a \times X$$

Here, it can be described as $a = Y/X$.

It is assumed that the achievement of learning is represented with a product of a factor of individual ability and learning method characteristics (individual factor: increase rate of scores of originally different for each learner) and a factor in which increase rate decreases according to the interval length (interval factor: degree of decrease in increase rate according to the interval length. Here, the cause of individual ability and learning method characteristics is shown as P, the factor of change in learning achievement in one week intervals is shown as LW, and the factor of change in learning achievement in one month intervals is shown in LM. Then, it is defined as:

$$Y = P \times LM$$

On the other hand, it is also defined as $X = P \times LW$.

Therefore, the following equation can be described.

$$A = Y/X = P \times LM / P \times LW = LM/LW$$

As shown in the result, the proportional coefficient "a" is represented a proportion of only interval factor without including the factor of individual ability and leaning method characteristics.

Here, the same learner is asked to study with one week intervals and with one month intervals in advance and the learning score data is obtained to store. This operation is repeated to a number of learners. From the stored data, a proportion is calculated by using an average value of increasing rate of score in case of learning with one week intervals and an average value of increasing rate of score in case of learning with one month intervals. The proportion of those two increasing rate becomes "a". Other than such method, "Y=a×X" is considered as a single regression model, the function "a" is determined by an ordinary least squares for making the sum of the square of difference between the predictive value and the measured value to be minimum.

For example, an increase rate of scores of learning with one week intervals of another learner is defined as Xi, an increase rate of scores of learning one month intervals is defined as Yi, and data of N number of learners are stored.

As described the above, when a predictive model is set as "Y= a×X", it is a well known method to make the function "a" to be minimize the value of $\Sigma(Yi-Y)^2$, the sum of the square of difference between the predictive value Y and the measured value Yi.

In other words, $\Sigma(Yi-Y)^2=\Sigma(Yi-aXi)^2$, and "a" is obtained by differentiating the equation partially with the function "a" to be "0".

Finally, it can be described as a=E (Y) /E (X) (E (Y) and E (X) represent average values of Yi and Xi respectively. As a result, it will be the same result as the method for obtaining the above described average value of the increase rate to calculate the proportion of each increase rate.

When the proportion function "a" is determined in such way, the increase rate Y of score in a case that the learner X studies with one month intervals an be predicted with the increase rate X in case of learning with one week intervals and the above equation.

According to FIG. 20, the average value of the score increase rate in case that another learner studies with one week intervals is 0.2 and the average value of the score increase rate in case of studying with one month intervals is 0.1. Accordingly, the function "a" becomes a=0.1/0/2=0.5.

On the other hand, according to FIG> 20, the increase rate X in case that the learner X studies with one week interval is 0.5. Accordingly, with reference to the relation of "Y=a×X", Y=0.5×0.5=0.25. With this result, the degree of score increase can be predicted, as shown in shaded part of the graph of (B).

A following model can be set to predict, for example, in consideration with personality factor Z or the like in addition to the achievement data at the same time.

$$Y=a×X+b×Z$$

Here, the personality factor Z may be what individual discreetness or the like are converted into scoring points in accordance with a predetermined indicator. For example, the size of gap between the increase rate of score of the objective test and the increasing rate of score of seif-assessment or the like may be converted in to scoring points. A discreet learner is tend to assume his or her self-assessment of achievement lower than the actual ability so that the increasing rate is low and this factor may be required to be considered.

The functions of "a" and "b" are obtained by the well known ordinary least squares method with multiple regression analysis in use of the score data in one week intervals and the score data in one month intervals of a plurality of learners who already learned.

With such method, the increase rate of score (achievement) of learning with one month intervals of the learner X can be predicted. At the same time, with a score results of the early stage, that is the interval of the first month, (e.g. stored data for one month), the change of score of the learning after a several month can be predicted at the moment (when the learning is done for the first month).

In the above description, it is explained that the leaning achievement of the one month interval study can be predicted based on the learning achievement data of one week interval study as an example. However, if learning achievement data in various timing condition is stored, a learning achievement of a longer interval condition can be predicted based on various learning achievement data of shorter interval conditions. For example, a learning achievement in the two month interval study is predicted based on learning achievement data in the two week interval study.

Obviously, in contrast, the change of sore in shorter interval condition can be predicted based on that in longer interval condition.

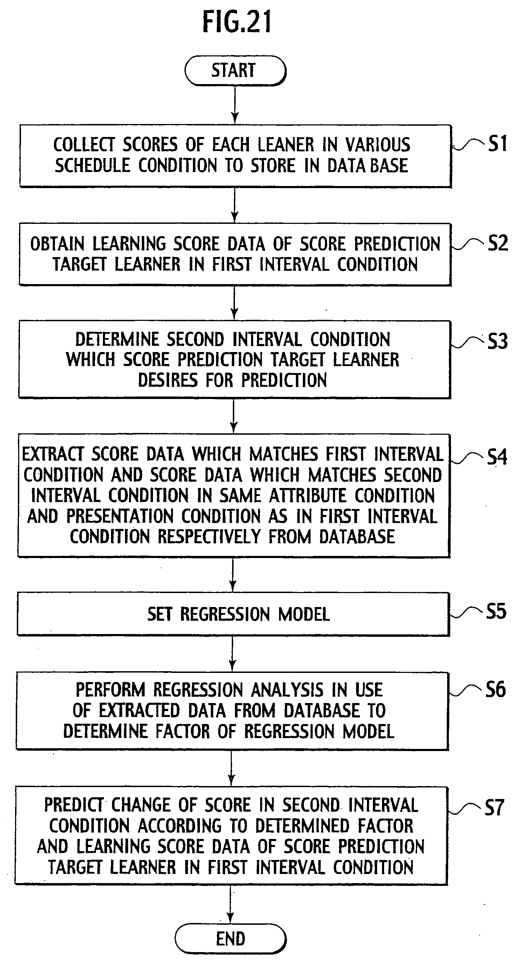

In FIG. 21, the above operation is generally described in a flow chart.

Firstly, in various schedule conditions, scores of a number of learners are collected and stored in a database (S1). A learning score of a target learner, whose score will be predicted, in the first interval condition is obtained (S2) and the second interval condition which is desired by the target learner to be predicted is determined (S3).

Score data including the same of the first interval condition, attribute condition, presentation condition and score data including the second interval condition, attribute condition, presentation condition are extracted from the database (S4).

Such a regression model described the above is set (S5). In use of the data extracted from the database in S4, regression analysis is performed to determine a function of the regression model (S6).

A change of score in the second interval condition based on the function determined in S6 and the learning score data of the target learner in the first interval condition, which is obtained in S2 (S7).

(Method for Generating Complicated Timing Condition and Schedule)

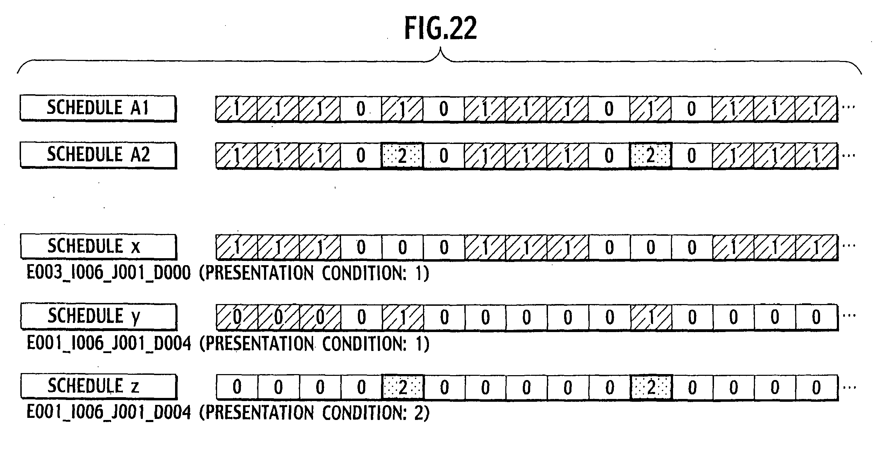

In FIG. 22, "1" and "2" in cells, which are corresponding to the respective schedules A1, A2, x, y, z, are provided to describe that an event regarding a particular content (object) occurs in a presentation condition of "1" or a presentation condition of "2". Here, "0" mentions that the event did not occur. A presentation unit is a minimum term for an event occurrence. For example, the term is set to be one day, the number in the presentation unit represents what number of the day.

In the example of description of complicated schedules in FIG. 22, it is not easy to express those complicated schedules A1 and A2. Further in case that the schedules are generated in a form of a schedule table and, for example, the schedule table will contain 1,000 presentation units, it will never be expressed.

Event when it can be expressed, it is difficult to control the event occurrence in accordance with the timing conditions and the presentation conditions. On the other hand, by using a method for describing timing conditions with its length of event cycle unit, the length of interval, and, as required, the length of the condition unit according to the presentation unit as a basic unit, it is possible to express schedules such as A1 and A2, and to control the event occurrence.

For example, a case in that, as shown in schedule x and schedule y in the drawing, an event occurs in the presentation condition of "1" is considered. The timing of the event occurrence in the schedule A1 matches the timing of the event occurrence in a state combining the schedule x and the schedule y. The timing conditions of the schedule x and the schedule y can be expressed "E003_I006_J001_D000" and "E001_I006_J001_D004" respectively. Schedule tables are respectively created in the above described way so that the events which relate to the same content (object) occur in both timing condition when the presentation condition is "1". Then, when the schedule tables are combined and a schedule condition such as schedule A1 can be generated. Similarly, when the schedule x and the schedule y are combined, a schedule condition such as schedule A2 can be generated. In short, the schedule A1 is expressed with timing conditions of schedules x and y and the presentation condition "1" and the schedule A2 is expressed with timing conditions of schedules x and y and the presentation condition "2". Furthermore, when complicated timing condition is described by nesting the schedule x and the schedule y and a schedule table is created, a further complicated schedule table can be created.

Obviously, there are other methods for describing timing schedules. However, by using the describing method, such as a proper comparison of scheduling effects in the schedule conditions A1 and A2 can be achieved. For example, as an advertising event of a particular product, an advertisement by direct mail is defined as a presentation condition 1 and a sales solicitation directly by phone is defined as a presentation condition 2. The advertising schedule of the schedules A1 and A2 is employed to measure the sales performance of the product as effects. Accordingly, it becomes possible to compare and study the differences of advertising effects of telephone and direct mails generated in presentation units 5 and 11 (schedule y and z).

(Method for Specifying Most Preferable Event Schedule)

Various event are expressed with kinds of event and timing conditions and data is collected (or stored data is used) to study the degree of similarity so that it is effective to assume which event is performed (or responded) in which timing for the efficiency. An event in which an S company sends T a direct mail is considered as an example. To cause an event in which an individual orders an object (product, service, contract or the like), it is effective to know what kind of schedule is effective in advance when a company sends an individual a direct mail or call to solicit.

However, recently, for example, direct mails or solicitations by a company are performed in unspecified timings. Any definite method is not defined for determining an effective schedule to occur an event.

The reason is that thousands of various event occurrence schedules may be assume and it is difficult for humans to deal with them. In the first place, coding schedules is required to find which schedule is effective among the thousands of schedules. Further, it is necessary to use a computer or the like to analyze base on that. However, presently, there is no particular method to code the thousand of various schedules, express, generate, and store the corresponding data to use for analysis.

Therefore, a presentation unit is determined and it is effective to specify which schedule is the most preferable by describing and controlling event occurrence, measuring efficiency for each schedule, and comparing the efficiency with the above described scheduling method.

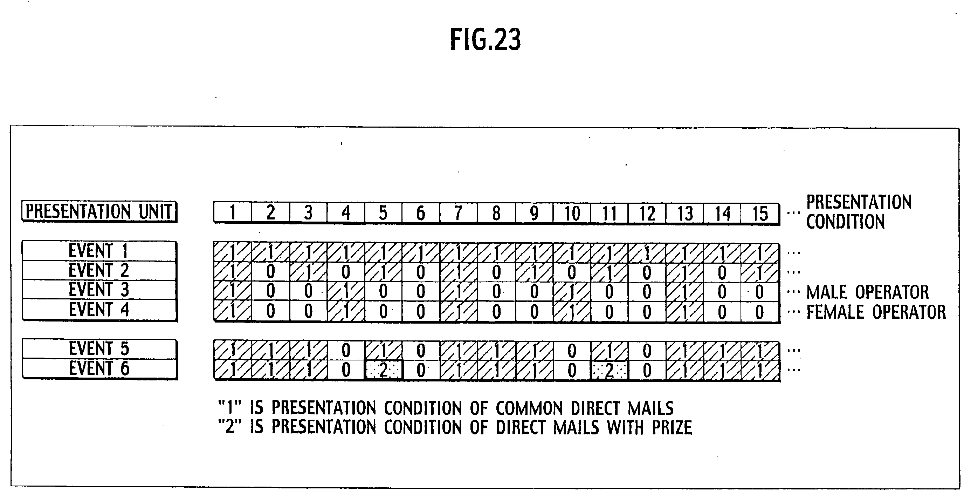

Specifically, in use of the above scheduling method, a plurality of schedule conditions shown as event 1 to 6 in FIG. 23, are provided. Events are implemented according to each schedule and the efficiency is measured and compared so that the most preferable schedule condition of an event is specified in order to achieve a particular purpose. For example, in a case in that a company needs to know the timing to send direct mails to individuals for a purpose of promoting of product order, a quarter of the year is considered as a presentation unit. In use of the above scheduling method, a schedule table is created to deal with events 1 to 4 and direct mails are sent to customers according to the schedule table. The number of the customers who are experienced the event and occur an event for purchasing the product is collected for each schedule. The most preferable schedule can be assumed or generated based on the schedule having largest number or a plurality of similar schedules.

In a case of an event regarding a particular object, when a plurality of presentation events (e.g. The operator who handled was male or female.) are assumed, a plurality of schedule tables, shown as the above mentioned events 3 and 4 in FIG. 23, are generated. Efficiency in different presentation units can be measured by collecting data of the subject customer according to the schedule tables. For example, in a chase in that advertising a product by direct mails for a purpose of promoting of product order, a presentation condition and another presentation condition for sending direct mails with prizes is assumed. The two presentation condition may be combined in the events 1 to 4, or a schedule such as events 5 and 6 is set so that those efficiencies can be compared.

Even when timing conditions can be simply expressed, the schedule condition may be varies if the presentation (occurrence) condition of an event is different. There are various methods for using the description of schedules. However, the method for expressing timing and the method for expressing schedule of the present invention includes not only simply expressing the timing conditions but also controlling the occurrence event of a particular content, measuring the efficiency, comparing the influence of the occurrence (presentation) condition.

Here, the example in FIG. 23 is to explain that a complicated schedule can be described with a combination of timing conditions of E1 and X2 in FIG. 5.

(Event Schedule Estimation Method)

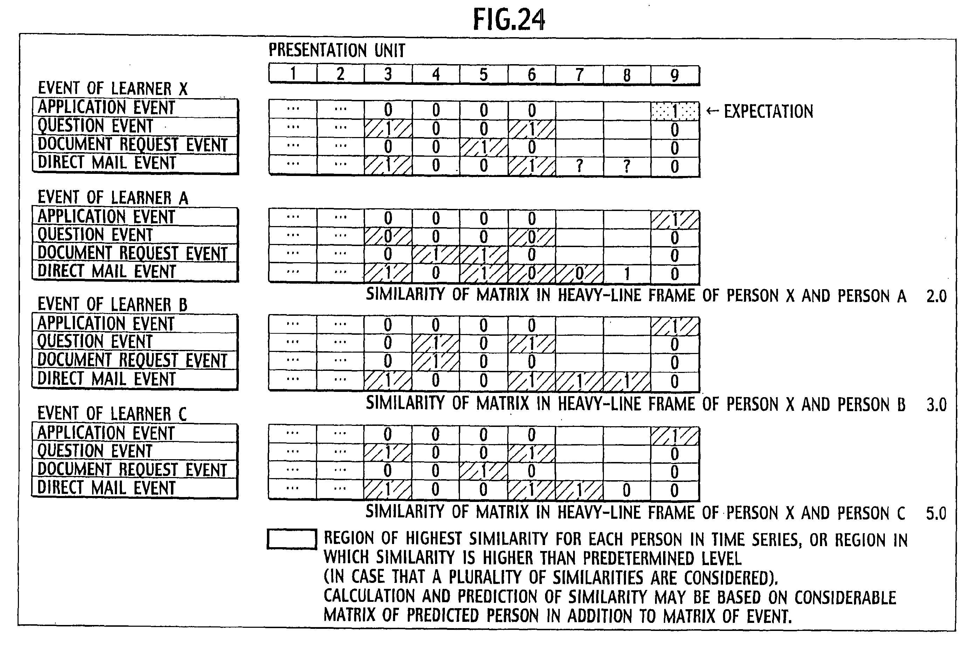

With reference to FIG. 24, an event schedule estimation method will be explained. In a case that a company who expects receiving product orders solicit a customer X by direct mail, an event in which a direct mail from the company is received occurs in the presentation unit 3. In the same presentation unit, an occurrence of an event in which X sends a questioning is assumed. In the same way, evens of X in the matrix within heavy-line frame in the drawing are recorded. In this situation, an ordering event is expected in the presentation unit 9. Here, it is able to assume which event patter is effective in use of the stored schedule matrix of A, B, C (or past record of X).

That is, only customer data in which an ordering event occurred in any presentation unit. Among matrixes of each customer, the presentation units (final points) in which ordering events occurred are homologized among each customer. In such situation, it is limited for the stored schedule matrix (within heavy-line frame) and matrix of each customer, which is relatively located in the same position as the presentation unit, (the part within heavy-line frame of each customer) and the degree of similarity (e.g. inner product) is calculated.

In a case that the starting point for all event is clear (e.g. receiving the first inquiry from the customer, or first soliciting by phone), the degree of similarity is calculated, as setting the starting point as an origination, by assuming (limiting) the schedule matrix with data of other customers. Further, in a case that a plurality of expecting events are assumed for an individual, the schedule matrix of the customer X and a highly similar schedule matrix is sought out from all of the schedule matrixes of the customer X or other customers (by calculating the degree of similarity with all possible schedule matrixes starting from the starting point). A schedule matrix having the highest degree of similarity is specified or newly estimated and generated.

The calculating result obtained by inner product is a value which is obtained by multiplying the numbers input in the same cell position of each matrix and summing the multiplied results for each cell.

An example in which a schedule matrix is estimated based on the final point is shown in the drawing. The degree of similarity with the customer A is 2.0, the degree of similarity with the customer B is 3.0, and the degree of similarity with the customer C is 5.0. It can be estimated that it is effective for the expectation of ordering event to promote in the same timing with that of the event occurred after the calculated matrix of the customer C having the heist similarity.

Here, the prediction of reaction may be applied not only for prediction of learning of humans in a general educational situations or marketing (purchasing behavior, contracting behavior, or the like) but for predicting or generating various actions or operations of the subject, which is regulated by the operating subject (humans, animals, computers, or the like) based on the stored previous studies. For example, in a case that a reaction of an automobile in a particular condition is predicted, an occurrence of an event for meeting the particular condition or an event for moving toward a particular direction or the like is included in a matrix. In use of the matrix and the present event pattern of automobiles, the future events can be predicted. This may be applied to prediction (and generation) of movements or reactions of a robot in addition to human's behaviors and actions.

(Learner Assessment Display System)

A learner assessment display system for grasping and giving an assessment of scores of a learner and focusing on predictions of leaning achievement and display the results will be explained.

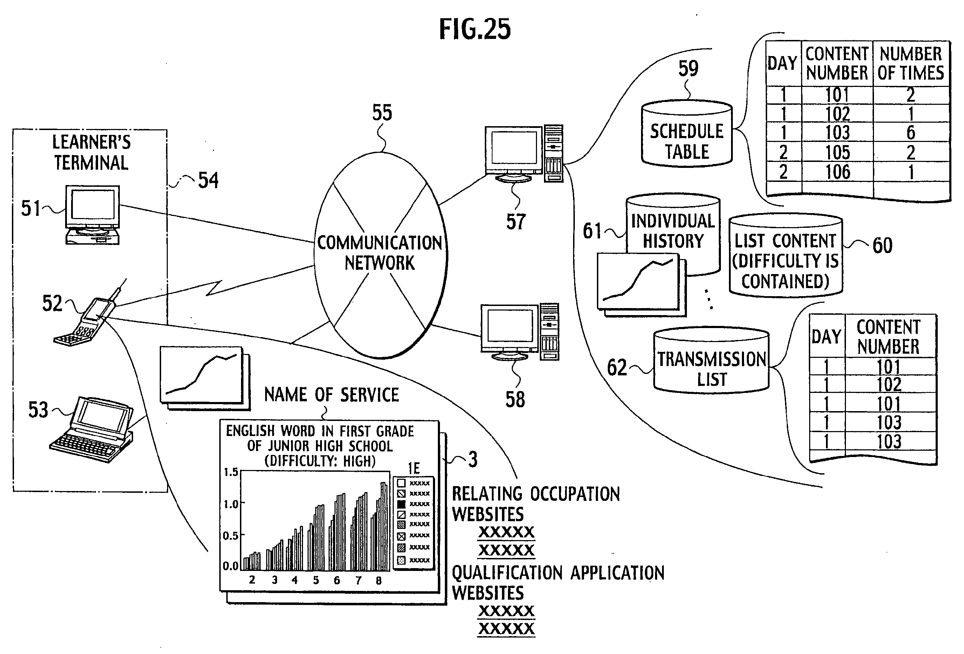

FIG. 25 shows a schematic block diagram of the learning schedule assessment displaying system. As shown in FIG. 25, the system includes a personal computer 51, a portable phone 52, a learner's terminal 54 such as a portable computer 53, a communication network 55 (including portable phone network, public lines, Internet), learning schedule service site 57, and a company or university server 58.

The learning schedule service site 57 includes at least a schedule table 59, a content file 60, an individual history file 61, a transmission list file 62 or the like. The learning schedule service site 57 stores content Ci having attribute information, which is provide from the company or university server 58, in the content data file 60. After that, learning contents or presentation order information of the transmission list (presentation list) based on the schedule table is distributed to the learner's terminal 54 via the communication network 55 and, as required, via a company server 68. A learner operates the learner's terminal 54 to input reactions to the learning contents and transmits to the site 57 via the communication network 55.

The leaning schedule service site 57 corresponds transmitted reaction data to the schedule table, records reaction history data of the learner in a particular schedule, generates an analysis pattern according to the history data, and provides the changes of the analysis pattern and proper advice based on the analysis pattern or the like to the learners or teachers.

In other words, in use of the learner's terminal 54 and various communication networks (infrastructures), a servicing entity (site) distributes the respective items contained in various contents (category of assessment contents) once or more than once in a predetermined schedule and collects reactions against the contents from the learners.

Further, the leaning schedule service site 57 analyzes the stored data and provides an assessment schedule or advice which are available to the learner; in addition to collecting data of assessment values, date and time or the like from a plurality of learners; storing as a history data; corresponding the data to a particular schedule or the like to analyze; giving a feedback of the state at the time of individual assessment for each content and changes of state of the past, prediction of future changes, or comparison with other users.

Further, to use the service of the site, learners is required to register individual information such as the sexuality, date of birth, the locality, grade in school, desired carrier option, occupation or the like. Accordingly, based on not only the individual information and individual history data but also history data of a plurality of assessing persons, an individual estimation condition for assessment items or tendency as a whole is defined to provide as information to the learners or a third person.

Here, the leaning schedule service site 57 and the company or university server 58 includes a distribution database system function in which information is expressed in hypertext form so as to obtain information on the Internet uniformly. The hypertext has a pointer in the text and has a structure so that it is able to jump to relating information from where the pointer exists. Information is written in HTML format and necessary information can be obtained by selecting the pointer or links to jump new text files after another.

In other words, transferring an HTML source code of the designated home page to a browser of a client (the learner's terminal 54), the information file such as an image or the like in response to the request from a client is transmitted.

In addition, the learner's terminal 54 such as the personal computer 51, the cellular phone 52, and the mobile computer 53 or the like is provided with a browser function, and in accordance with a URL code of a home page to be designated by the leaner, the learner's terminal 54 may request from the site having this URL to transfer the information such as the HTML or the like thereto.

Then, analyzing the received HTML and displaying a displayed portion on a screen, if the link information such as the image or the like is included in this HTML, this image is requested to be transferred.

In other words, the access is carried out on the basis of the inputted (designated) URL; the transference request of its front page (a home page) is transmitted; the transmitted HTML source is analyzed to be displayed on a screen; and further, the transference request such as a CGI script or the like that is included in the HTML is transmitted.

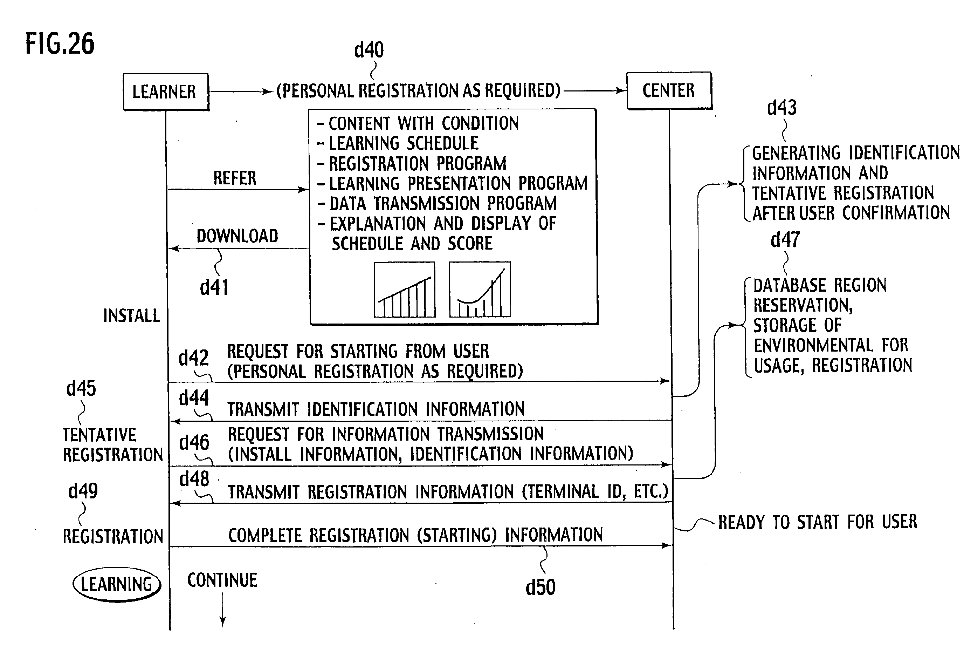

FIG. 26 is a sequence diagram showing an operation of the system.

At first, a data center or a content offer corporation (referred to as a center) may upload a file that various conditions such as a schedule or the like are described on a content, a schedule table corresponding to this content, a learning presentation program, and a data transmission program to a home page. In addition, with respect to various contents, a common change of the record when the learner learns in accordance with various schedule conditions can be refereed as an example.

    (d40) The learner hoping for the following service may register the individual information (an address and a mail address or the like) according to need. In the meantime, at this point of time, the individual information is not always registered and it may be registered in (d42).

    (d41) When the learner refers to the home page of the center and is interested in it or would like to used it, downloading this content and a set of a schedule table and a presentation program corresponding to this content, the learner may install them into his or her own learning terminal.

    (d42) After installing, the learner may return a request to start the learning on the basis of the schedule of the content of interest (hereinafter, referred to as a scheduled learning (SL)) to the center. In addition, according to need, the learner may register the individual information in this time.

(d43) The center may confirm the user whether or not the individual information is registered, and then, the authentication information for using this SL service is generated and recorded, and then,

(d44) The center may transmit it to the learner that has been registered in advance.

(d45) The learner may install and tentatively register the service at the side of the terminal by using this authentication information, and (d46) may transmit its tentatively-registered information (the learning environment information such as an install directory or the like, the authentication information) to the center.

(d47) When the tentatively-registered information arrives and the authentication is confirmed, the center may secure an area in which the reaction or the like corresponding to the corresponding content database is recorded (the content itself is not always needed and at least the content number or the like is necessary), may record the terminal environment and the install status of the user therein, may allocate the terminal ID to be used by the individual, and (d48) may transmit the information such as this ID or the like to the learner as the present registration file (the present registration is competed at the side of the center).

(d49) The learner completes the present registration at the side of the terminal by using the transmitted present registration file, and (d50) according to need, may transmit the information about completion of registration to the center together with the information of the status that the registration is finally completed (a destination of install and a transmission mail address or the like).

The summary of registration of the SL service is as described above. In the meantime, the SL service is absolutely performed to a combination of the schedule and the content. In addition, various change such as the change of the schedule and the transmission mail address are treated by transmitting the information of (d50) to the center.

In addition, registering the individual information or the like in the center separately in advance, a registration operation may be started from (d44) or (d48).

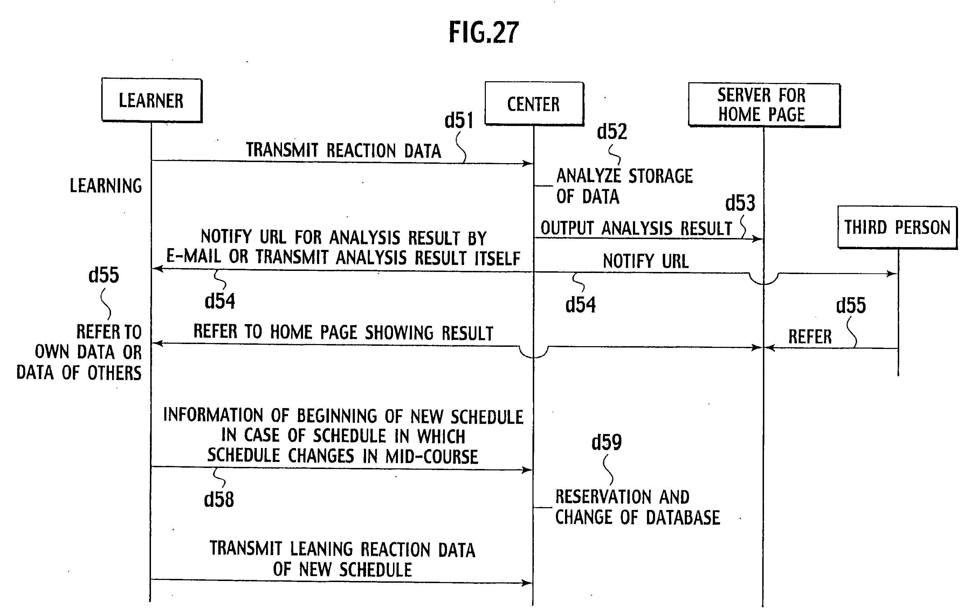

FIG. 27 shows the exchange of the information after completion of the registration of the SL service.

(d51) The learner progresses the learning at a prescribed schedule and the reaction of the learning's result is recorded at the side of the terminal. In the process of progressing the learning, if the learner hopes to refer to the analysis result, he or she transmits the learning reaction data to the center. This data may include the number of the content, the number of the schedule, the number of the presentation unit in the schedule, the reaction and the reaction time to each content, the number of the content, the day of the learning, the learning start time and end time, the number of the presentation unit, and the terminal ID or the like according to need.

(d52) The center may save the received learning reaction data for each individual, may use the data and the other learner's data according to need, may analyze the progress of the learning, (d53) may place its result on the home page, and (d54) att the same time, the center may transmit a URL of the home page and a pass word or the like according to need to that learner, an advisor such as a teacher according to need and a third person according to need. It is a matter of course that the analysis result that is placed on the home page may be directly transmitted to the learner and the third person or the like as a file.

(d55) The learner, the teacher, and the third person can refer to the analysis data such as the progress and the prediction of the learning of that learner at anytime.

(d58) Depending on the schedule of the learner, the schedule condition can be constructed again on the basis of the records of the individuals. In this case, the learner may transmit the information of reconstruction from the side of the terminal to the center, and (d59) The center may secure the database for recording the reaction data on the basis of the information of reconstruction or by adding change to the structure, the center makes it possible to recreate the status of the terminal of the learner.

In the meantime, it is also possible that the reaction data that is saved in (d52) may be transmitted to the third person such as the researcher or the like in a form that cannot be specified by the individual or a form that can be specified by the individual.

In the above system, when a particular learner wants to know his or her score in the middle of learning, his or her score when the learning is completed, or predicted results of learning achievement in case of learning in a particular schedule, the learner may access a URL with a password since the URL and password to access the necessary information are informed by e-mail or the like (d57).

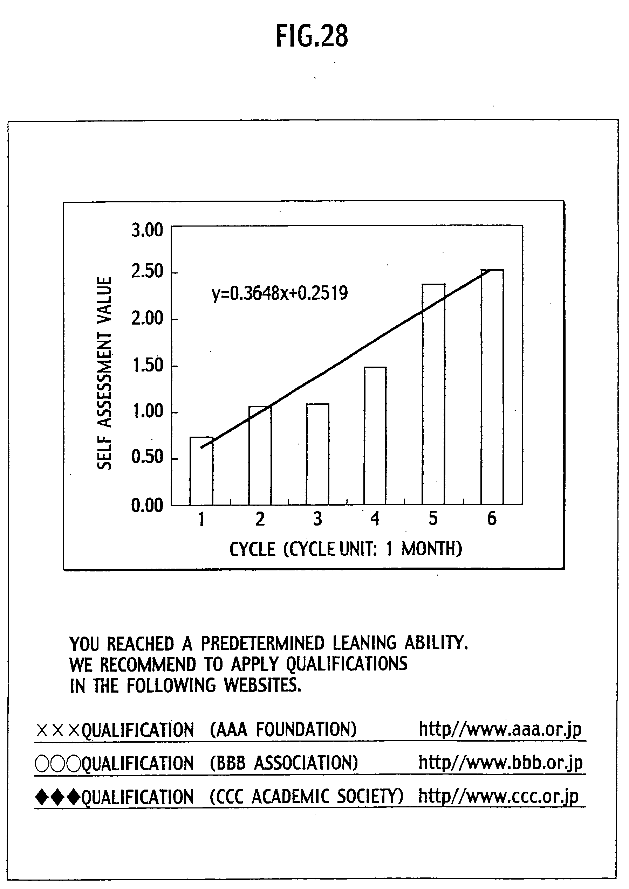

In such case, for example, as shown in FIG. 28, a graph showing a process of self assessment value (leaning achievement) as learning score and a predicted regression function for predicting the changes of the future score may be displayed.

According to a graph in the drawing, for the end of the learning for six months with one month event cycle unit, the assessment value of almost 2. 5 is shown. For example, in a case that the assessment value is equal to or more than 2.5, it is considered to meet a requirement for a qualification relating to the learning and a name of the relating qualification and a name of entity for performing its examination are displayed to be liked. For example, the learner can move to a relating home page by clicking the description of "XXX Qualification (AAA foundation) http//www.aaa.or.jp".

In order to provide service integrating qualification obtaining and learning, the learning service schedule site cooperate with qualification examining entities such as AAA foundation, BBB association, CCC academic society. In use of leaning contents in those entities, learning schedules are distributed to the learners so that all or a part of examination for a qualification may be exempted when the learner reaches to a predetermined level.

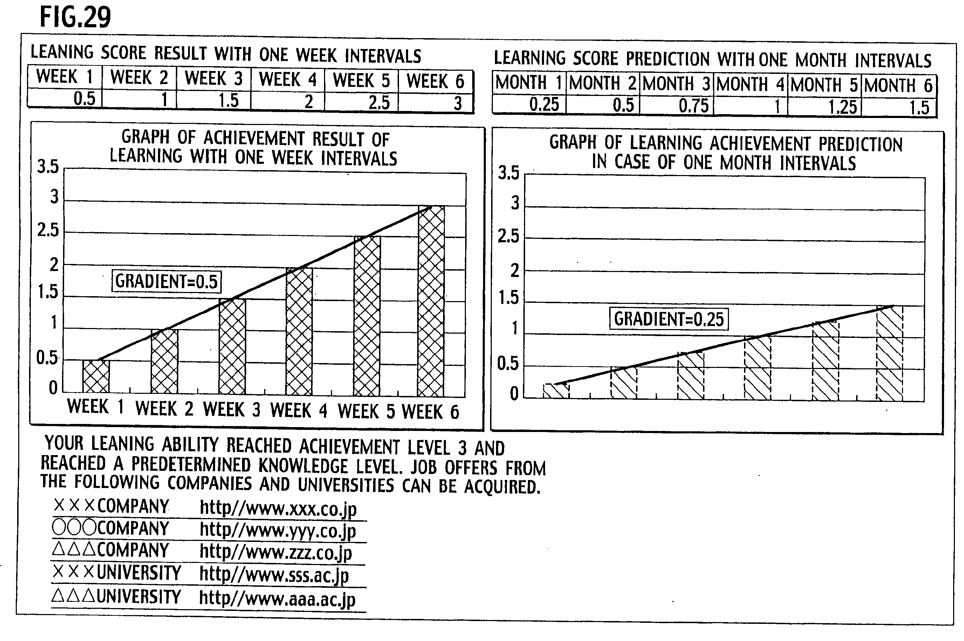

Further, another example is shown in FIG. 29. Data showing a process of learning achievement up to the point in a case of learning with one week intervals and data showing predicted result of learning achievement in a case of starting to learn with one month intervals are illustrated.

Further, as shown in the drawing, in a case that the achievement of learning reaches equal to or more than 3, it is considered that the learner reaches a predetermined level in the learning field and home page addresses of companies or universities may be displayed according to request from companies of universities which are looking for human resource in the predetermined level.

For example, when the content of leaning with one week interval condition is for assessing achievement of ability for English hearing or writing, information of job offer for a part time job of translation, volunteer or the like may be displayed in the job offer site.

Further, if the learner already has qualifications shown in qualification site in FIG. 29, links of job offers of companies or universities which are looking for human resource requiring the qualification may be displayed.

In order to limit the region of information search according to individual attribute to provide a search result with high quality, the following structure is provided.

A searching link is provided on the above Web display for displaying the learner' s score or the like. The searching link is provided with a searching window for inputting searching word, similar to that is performed in general portal sites. When a learner wants to search something, a proper searching word is input to the searching window.

As described the above, the learning schedule service site stores the searching words input by the individual learners in a database 65. When a searching word is stored, it is corresponded to the academic ability level of the individual learner who performed the search. The academic ability level is defined by knowledge level which is calculated by the learning achievement and the learning history of the learner.

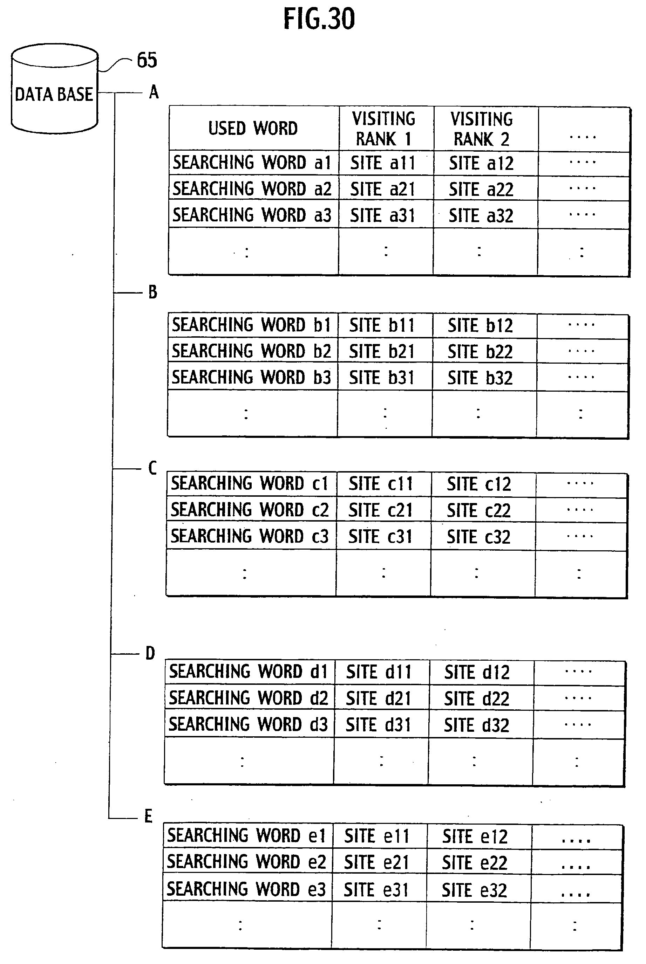

For example, in a case that the academic ability level is divided in to 5 levels of A, B, C, D, and E, the database 65 may have a file structure as shown in FIG. 30. Memory area is ensured for each level and the memory area of each level includes searching ward used respectively and memory areas from visiting rank 1 to visiting rank N. In the area of used word, new searching word which is used by a learner is recorded. In the visiting rank area, new site to which the learner actually visited after the corresponding searching word is used.

On the other hand, by using the searching word recorded in the database 65, in a case of visiting the same recorded site, the number of visiting the same site is counted to reorder the sites in order of large number of visiting.

An explanation will be given within an area relating to the academic ability level A in FIG. 30. Searching words which are already used are searching word a1, searching word a2 and searching word a3 and the visited sites are arranged in order of larger number of visiting time corresponding to the searching words.

In a case of searching word a1, it illustrates that a site a11 has the largest number of visiting times and a site a 12 has the second largest number of visiting times. Other academic ability levels B to E have the same structure.

The ranks of visited sites (visiting rank 1 to N) are counted up every time a learner visits a site and rearranged in order of larger number of visiting times. When a word which is same as the word recorded in the database is used for searching, on the Web page, site is displayed according to the order of the updated visited site ranks for the searching word.

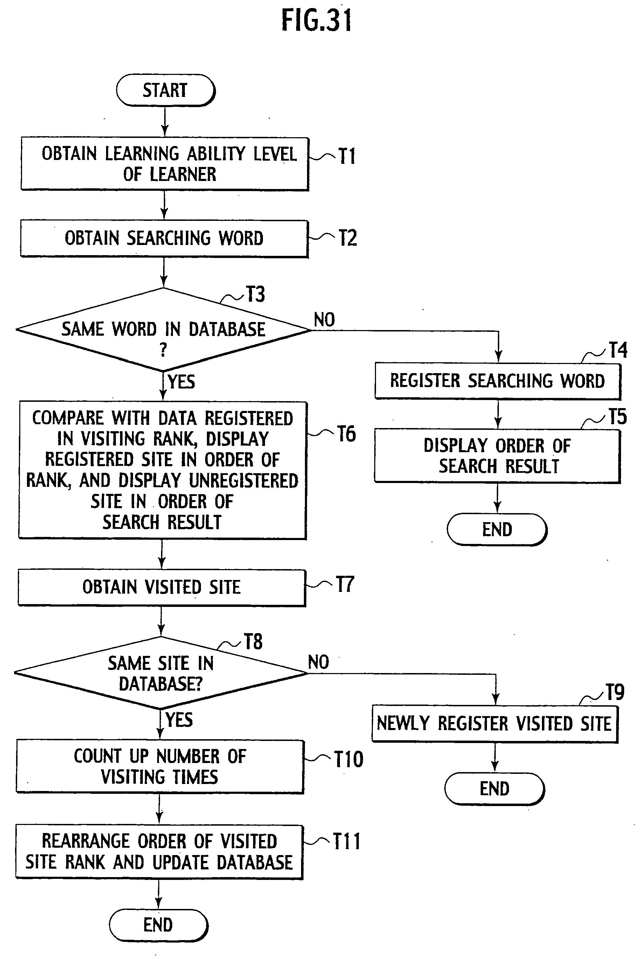

FIG. 31 shows a flow chart of the above operation.

Firstly, an academic ability level of a learner is obtained (T1). Then, the searching word which is used by the learner is obtained (T2). In the database 65, it is checked whether or not the obtained searching word is recorded (stored) in the area of the same academic ability as the learner (T3). In case that it is not recorded in the database 65, the used searching word is recorded (T4). A search result is normally displayed (T5).

On the other hand, in a case that the same word is already recorded in the database 65, data of visiting rank corresponding to the searching word and data of search result are compared and matched sites are displayed in order of the ranking and unmatched sites are displayed in order of search result (T6).

The sites which the learner actually visited are obtained (T7). In the database 65, it is checked whether or not the visited site is recorded in the area of the same academic ability as the learner (T8). In a case that the visited site is not recorded, the visited site is newly recorded (T9).

On the other hand, in a case that the visited site is already recorded, the number of visiting the site is counted up (T10). The visited sites are rearranged and the database is updated (T11).

**Claims**

1. A schedule creating method, wherein
a schedule condition for an occurrence of an event relating a content, is constituted by a timing condition including:

   a presentation unit configured to be a minimum term for the occurrence of the event relating the content;
   an interval configured to be longer than the presentation unit for the occurrence of the event and be a term from a beginning of the event to an occurrence of a next event;
   an event cycle unit configured to be a predetermined term shorter than the interval and distribute occurrences of the event;
   a condition unit configured to be longer than the presentation unit, be a term shorter than the event cycle unit, and arrange the presentation unit of the event uniformly; and
   a delay term configured to express a difference of starting points of schedules when a plurality of schedules are stared.

2. A schedule creating method according to claim 1, wherein
a schedule is constituted by:

   a basic unit having an interval to be a base in a case the event does not occur at a predetermined interval in a schedule, an event cycle unit, a condition unit, a delay term; and
   a sub unit having an interval when considering the interval to be the base as a minimum term for the event relating the content to occur, an event cycle unit, a condition unit, and a delay term.

3. A schedule creating method according to one of claims 1 and 2, wherein
the schedule relates to a temporal timing of an occurrence of an event for a uniform subj ect and is composed of a combination of a plurality of schedules having different timing conditions.

4. A schedule creating method according to claim 3, wherein
the plurality of schedules include a combination of same or different presentation conditions or a combination of the presentation condition and an attribute condition.

5. A schedule generating system, comprising:

   an input means for inputting a predetermined information and **characterized in that**
   based on the input information, a maximum number of condition unit considerable in an event cycle unit and a maximum number of the event cycle unit including all schedule terms are generated,
   in order to constitute a schedule condition for an occurrence of an event relating a content by a timing condition, the timing condition including:

      a presentation unit configured to be a minimum term for the occurrence of the event relating the content;
      an interval configured to be longer than the presentation unit of generating the event and be a term from a beginning of the event to an occurrence of a next event;
      an event cycle unit configured to be a predetermined term shorter than the interval and distribute occurrences of the event;
      a condition unit configured to be longer than the presentation unit, be a term shorter than the event cycle unit, and arrange the presentation unit of the event uniformly; and
      a delay term configured to express a difference of starting points of schedules when a plurality of schedules are stared.

6. A schedule generating system according to claim 5, wherein
a schedule is constituted by:

   a basic unit having an interval to be a base in a case the event does not occur at a predetermined interval in a schedule, an event cycle unit, a condition unit, a delay term; and
   a sub unit having an interval when considering the interval to be the base as a minimum term for the event relating the content to occur, an event cycle unit, a condition unit, and a delay term.

7. An inexperienced schedule predicting method,

comprising:

providing a predetermined term equal to or longer than the presentation unit which is a shortest period for generating the event and shorter than the interval from a beginning of the event till an occurrence of a next event as an event cycle unit;

using a schedule arranging a content so that a particular event relating each content is generated once in the event cycle unit;

collecting reactions of experience to the content in time series; and

predicting a future reaction pattern based on the collected reactions,

in order to generate a schedule, of a set of one or more contents, in which events relating to all contents repeatedly occur at a predetermined timing.

8. An inexperienced schedule predicting method for predicting future reaction pattern based on the collected reactions, according to claim 7, wherein

a future change of learning achievement based on an achievement increase rate of a past learning achievement data of a learner who learns according to a particular learning schedule.

9. An inexperienced schedule predicting method for predicting future reaction pattern based on collected reactions, according to claim 7, comprising:

a step of collecting a learning achievement data for an event generated in a schedule combining a learning schedule in a first interval condition and a schedule in a second interval condition from a plurality of learners;

a step of defining a functional relation between a change in the learning achievement in the first interval condition and the change in the learning achievement in the second interval condition;

a step of collecting a learning achievement data for an event generated in the first interval condition from a learner who is a target for a learning achievement prediction; and

a step of predicting a change pattern for a learning achievement in the second interval condition based on the collected data and the defined functional relation.

10. An inexperienced schedule predicting method for predicting future reaction pattern based on collected reactions, according to claim 9, wherein

when the first interval condition and the second interval condition are compared, the first interval is a term shorter than the second interval.

11. An inexperienced schedule predicting method,
comprising:

providing a predetermined term being longer than the presentation unit of generating the event and being from a beginning of the event to an occurrence of a next event as an event cycle unit;

generating a schedule so that an event is generated once in the event cycle unit;

cording an event occurrence an individual reaction to the event respectively in a plurality of relating events and collecting in time series;

comparing reaction process pattern of another person extracted based on the final reaction result with an individual reaction process pattern; and

providing a schedule of the other having a similar reaction process pattern as a future schedule of the individual, in order to use the schedule, of a set of one or more contents, in which a specific event repeatedly occur at a predetermined timing.

12. An inexperienced schedule predicting method according to claim 11, wherein

a degree of the similarity is determined by a value of an inner product of the extracted reaction process pattern of the other and the reaction process pattern of the individual.

13. A learning schedule assessment displaying method for a learner's assessment displaying system in which a learner's terminal and a server for displaying a learning achievement in a website are connected via a network, the method comprising:

providing a predetermined term equal to or longer than the presentation unit which is a shortest period for generating the event and shorter than the interval from a beginning of the event till an occurrence of a next event as an event cycle unit;

using a learning schedule arranging a content so that a particular event relating each content is generated once in the event cycle unit;

assessing the learning achievement relating the content in time series; and

displaying data relating the learning achievement, a learning content and a link of relating site corresponding to the learning achievement on the learner's terminal when the assessment of the learning achievement reaches a predetermined level,

in order to generate a schedule, of a set of one or more contents, in which events relating to all contents repeatedly occur at a predetermined timing.

14. A learning schedule assessment displaying method of a learner's assessment displaying system in which a learner's terminal and a server for displaying a learning achievement a website are connected via a network, the method comprising:

means for registering a searching word used by a learner with a classification according to learning ability levels of the learners;

means for registering a site to which the learner visited in correspondence with the site to the registered searching word; and

means for counting up a number of times for visiting a site when search is performed with a searching word same as the registered searching word and a cite same as the registered site is visited, wherein

a search result is displayed in an order of larger number of visiting times on the learner's terminal.

# FIG.1

| | DAY 1 | DAY 2 | DAY 3 | DAY 4 | DAY 5 | DAY 6 | DAY 7 | DAY 8 | DAY 9 | DAY 10 |
|---|---|---|---|---|---|---|---|---|---|---|
| SCHEDULE A | 1 TIME | 1 TIME | 1 TIME | 1 TIME | 1 TIME | 1 TIME | 1 TIME | 1 TIME | 1 TIME | 1 TIME |
| SCHEDULE B | 5 TIMES | | | | | 5 TIMES | | | | |
| SCHEDULE C | 1 TIME | | | | | 1 TIME | | | | |

EP 1 628 253 A1

# FIG.2

EP 1 628 253 A1

TIMING CONDITION (AI)

PRESENTATION CONDITION (BI)

| | | DAY 1 | DAY 2 | DAY 3 | DAY 4 | DAY 5 | DAY 6 | DAY 7 | DAY 8 | DAY 9 | DAY 10 |
|---|---|---|---|---|---|---|---|---|---|---|---|
| SCHEDULE A | 1 | 1 | 1 | 1 | 1 | 1 | 1 | 1 | 1 | 1 | 1 |
| SCHEDULE B | 5 | 1 | 0 | 0 | 0 | 0 | 1 | 0 | 0 | 0 | 0 |
| SCHEDULE C | 1 | 1 | 0 | 0 | 0 | 0 | 1 | 0 | 0 | 0 | 0 |

# FIG.3

| | DAY 1 | DAY 2 | DAY 3 | DAY 4 | DAY 5 | DAY 6 | DAY 7 | DAY 8 | DAY 9 | DAY 10 |
|---|---|---|---|---|---|---|---|---|---|---|
| TIMING CONDITION (AI) OF SCHEDULE B | 1 | 0 | 0 | 0 | 0 | 1 | 0 | 0 | 0 | 0 |

PRESENTATION UNIT

INTERVAL          INTERVAL

EVENT CYCLE UNIT EXAMPLE 1          EVENT CYCLE UNIT EXAMPLE 1

EVENT CYCLE UNIT EXAMPLE 2          EVENT CYCLE UNIT EXAMPLE 2

EP 1 628 253 A1

FIG.4

EP 1 628 253 A1

mip — FIRST EVENT CYCLE UNIT
mig — SECOND EVENT CYCLE UNIT

Bi — PRESENTATION CONDITION (16 TIMES CONDITION)
Pi — PRESENTATION UNIT

| | 1st MONTH | | | | (PRESENTATION UNIT) | 2nd MONTH | 3rd MONTH | | | | | 4th MONTH | |
|---|---|---|---|---|---|---|---|---|---|---|---|---|---|
| 1st TIME | 1 | 8 | 9 | (16) | 1st CONDITION UNIT | 7th CONDITION UNIT | 1 | 8 | 9 | 16 | 1st CONDITION UNIT | | 7th CONDITION UNIT |
| 2nd TIME | 2 | 7 | 10 | 15 | | | 2 | 7 | 10 | 15 | | | |
| 3rd TIME | 3 | 6 | 11 | 14 | | | 3 | 6 | 11 | 14 | | | |
| 4th TIME | 4 | 5 | 12 | 13 | | | 4 | 5 | 12 | 13 | | | |
| 5th TIME | 4 | 5 | 12 | 13 | 2nd CONDITION UNIT | 8th CONDITION UNIT | 4 | 5 | 12 | 13 | 2nd CONDITION UNIT | | 8th CONDITION UNIT |
| 6th TIME | 3 | 6 | 11 | 14 | | | 3 | 6 | 11 | 14 | | | |
| 7th TIME | 2 | 7 | 10 | 15 | | | 2 | 7 | 10 | 15 | | | |
| 8th TIME | 1 | 8 | 9 | 16 | | | 1 | 8 | 9 | 16 | | | |
| 9th TIME | 1 | 8 | 9 | 16 | 3rd CONDITION UNIT | 9th CONDITION UNIT | 1 | 8 | 9 | 16 | 3rd CONDITION UNIT | | 9th CONDITION UNIT |
| 10th TIME | 2 | 7 | 10 | 15 | | | 2 | 7 | 10 | 15 | | | |
| 11th TIME | 3 | 6 | 11 | 14 | | | 3 | 6 | 11 | 14 | | | |
| 12th TIME | 4 | 5 | 12 | 13 | | | 4 | 5 | 12 | 13 | | | |
| 13th TIME | 4 | 5 | 12 | 13 | 4th CONDITION UNIT | 10th CONDITION UNIT | 4 | 5 | 12 | 13 | 4th CONDITION UNIT | | 10th CONDITION UNIT |
| 14th TIME | 3 | 6 | 11 | 14 | | | 3 | 6 | 11 | 14 | | | |
| 15th TIME | 2 | 7 | 10 | 15 | | | 2 | 7 | 10 | 15 | | | |
| 16th TIME | 1 | 8 | 9 | 16 | | | 1 | 8 | 9 | 16 | | | |
| 17th TIME | 1 | 8 | 9 | 16 | 5th CONDITION UNIT | 11th CONDITION UNIT | 1 | 8 | 9 | 16 | 5th CONDITION UNIT | | 11th CONDITION UNIT |
| 18th TIME | 2 | 7 | 10 | 15 | | | 2 | 7 | 10 | 15 | | | |
| 19th TIME | 3 | 6 | 11 | 14 | | | 3 | 6 | 11 | 14 | | | |
| 20th TIME | 4 | 5 | 12 | 13 | | | 4 | 5 | 12 | 13 | | | |
| 21st TIME | 4 | 5 | 12 | 13 | 6th CONDITION UNIT | 12th CONDITION UNIT | 4 | 5 | 12 | 13 | 6th CONDITION UNIT | | 12th CONDITION UNIT |
| 22nd TIME | 3 | 6 | 11 | 14 | | | 3 | 6 | 11 | 14 | | | |
| 23rd TIME | 2 | 7 | 10 | 15 | | | 2 | 7 | 10 | 15 | | | |
| 24th TIME | 1 | 8 | 9 | 16 | | | 1 | 8 | 9 | 16 | | | |

THE ORDER IN ARRANGEMENT OF CONTENT ITEMS (AND PRESENTATION CONDITION) IN EACH INTERVAL UNIT IS SET AS EQUALLY AS POSSIBLE.

# FIG.5

EP 1 628 253 A1

| | MONTH 1 | MONTH 2 | MONTH 3 | MONTH 4 | MONTH 5 | MONTH 6 |
|---|---|---|---|---|---|---|
| | 6 DAYS ×4 | 6 DAYS ×4 | 6 DAYS ×4 | 6 DAYS ×4 | 6 DAYS ×4 | 6 DAYS ×4 |

**A1**
_E024_I024_J002_D000

**B1**
_E048_I048_J004_D000

**C1**
_E006_I006_J001_D000

**C2**
_E006_I006_J001_D006

**D1**
_E006_I006_J001_D000_E004_I008_J000_D000

SUB EVENT CYCLE UNIT — BASIC EVENT CYCLE UNIT AND BASIC INTERVAL

**D2**
_E006_I006_J001_D000_E004_I008_J000_D004

SUB DELAY   SUB INTERVAL

**E1**
_E006_I006_J001_D000_E004_I012_J000_D000

**E2**
_E006_I006_J001_D000_E004_I012_J000_D004

**E3**
_E006_I006_J001_D000_E004_I012_J000_D008

**X1**
_E001_I072_J001_D023

**X2**
_E001_I072_J001_D047

**X3**
_E001_I072_J001_D071

# FIG.6

| K1 | K2 |
|---|---|
| EXTRACT NECESSARY CONTENT LIST FROM CONTENT DATABASE | CREATE SCHEDULE TABLE OR EXTRACT FROM DATABASE |

CONTENT DATABASE

1

SCHEDULE DATABASE

2

WRITE CONTENT IDENTIFICATION CONDITION CODE OF SCHEDULE TABLE, ETC. TO CONTENT LIST

K3

CREATE PRESENTATION LIST FOR ONE PRESENTATION UNIT FROM CONTENT LIST AND SCHEDULE TABLE — K4

PRESENT CONTENT TO LEARNER ACCORDING TO CONTENT OF PRESENTATION LIST — K5

WRITE REACTION TIME OF LEARNER, ASSESSMENT DATA, ETC. TO REACTION DATABASE — K6

REACTION DATABASE

3

PERFORM VARIOUS ANALYSES — K7

# FIG.7

| SCHE_TYPE | NO | MONTH | DAY | TYPE | N | EXP | MAX.DIM | EXP_COND | SC_COND | TU_DIM01 | EU_DIM01 | REPEAT | JU_DIM01 | SET_DIM01 | EU_DIM02 |
|---|---|---|---|---|---|---|---|---|---|---|---|---|---|---|---|
| AT | 5 | 1 | 1 | W1 | 1 | T | 1 | 0101 A=W1  T=T R=1 ST=AT SC=0101 J=01 | 0101 | 1 | 1 | 1 | 1 | 01 | 0 |
| AT | 6 | 1 | 1 | W1 | 1 | T | 1 | 0101 A=W1  T=T R=3 ST=AT SC=0101 J=01 | 0101 | 1 | 1 | 3 | 1 | 01 | 0 |
| AT | 7 | 1 | 1 | W1 | 1 | T | 1 | 0101 A=W1  T=T R=6 ST=AT SC=0101 J=01 | 0101 | 1 | 1 | 6 | 1 | 01 | 0 |
| AT | 8 | 1 | 1 | W1 | 1 | T | 1 | 0101 A=W1  T=T R=8 ST=AT SC=0101 J=01 | 0101 | 1 | 1 | 8 | 1 | 01 | 0 |
| DI | 21 | 1 | 1 | W1 | 1 | D | 2 | 0101 A=W1  T=D R=1 ST=DI SC=010101 J=01 | 010101 | 1 | 1 | 1 | 1 | 01 | 1 |
| DI | 22 | 1 | 1 | W1 | 1 | D | 2 | 0101 A=W1  T=D R=2 ST=DI SC=010101 J=01 | 010101 | 1 | 1 | 2 | 1 | 01 | 1 |
| DI | 23 | 1 | 1 | W1 | 1 | D | 2 | 0101 A=W1  T=D R=3 ST=DI SC=010101 J=01 | 010101 | 1 | 1 | 3 | 1 | 01 | 1 |
| DI | 24 | 1 | 1 | W1 | 1 | D | 2 | 0101 A=W1  T=D R=4 ST=DI SC=010101 J=01 | 010101 | 1 | 1 | 4 | 1 | 01 | 1 |
| AT | 36 | 1 | 2 | W1 | 1 | T | 1 | 0102 A=W1  T=T R=2 ST=AT SC=0102 J=01 | 0102 | 2 | 1 | 2 | 1 | 02 | |
| AT | 37 | 1 | 2 | W1 | 1 | T | 1 | 0102 A=W1  T=T R=4 ST=AT SC=0102 J=01 | 0102 | 2 | 1 | 4 | 1 | 02 | |
| AT | 38 | 1 | 2 | W1 | 1 | T | 1 | 0102 A=W1  T=T R=5 ST=AT SC=0102 J=01 | 0102 | 2 | 1 | 5 | 1 | 02 | |
| AT | 39 | 1 | 2 | W1 | 1 | T | 1 | 0102 A=W1  T=T R=7 ST=AT SC=0102 J=01 | 0102 | 2 | 1 | 7 | 1 | 02 | |
| DI | 52 | 1 | 2 | W1 | 1 | D | 2 | 0102 A=W1  T=D R=1 ST=DI SC=010102 J=02 | 010102 | 2 | 1 | 1 | 2 | 01 | 1 |
| DI | 53 | 1 | 2 | W1 | 1 | D | 2 | 0102 A=W1  T=D R=2 ST=DI SC=010102 J=02 | 010102 | 2 | 1 | 2 | 2 | 01 | 1 |
| DI | 54 | 1 | 2 | W1 | 1 | D | 2 | 0102 A=W1  T=D R=3 ST=DI SC=010102 J=02 | 010102 | 2 | 1 | 3 | 2 | 01 | 1 |
| DI | 55 | 1 | 2 | W1 | 1 | D | 2 | 0102 A=W1  T=D R=4 ST=DI SC=010102 J=02 | 010102 | 2 | 1 | 4 | 2 | 01 | 1 |

⋮

| SCHE_TYPE | NO | MONTH | DAY | TYPE | N | EXP | MAX.DIM | EXP_COND | SC_COND | TU_DIM01 | EU_DIM01 | REPEAT | JU_DIM01 | SET_DIM01 | EU_DIM02 |
|---|---|---|---|---|---|---|---|---|---|---|---|---|---|---|---|
| AT | 750 | 2 | 1 | W1 | 1 | T | 1 | 0201 A=W1  T=T R=1 ST=AT SC=0201 J=01 | 0201 | 1 | 2 | 1 | 1 | 01 | |
| AT | 751 | 2 | 1 | W1 | 1 | T | 1 | 0201 A=W1  T=T R=3 ST=AT SC=0201 J=01 | 0201 | 1 | 2 | 3 | 1 | 01 | |
| AT | 752 | 2 | 1 | W1 | 1 | T | 1 | 0201 A=W1  T=T R=6 ST=AT SC=0201 J=01 | 0201 | 1 | 2 | 6 | 1 | 01 | |
| AT | 753 | 2 | 1 | W1 | 1 | T | 1 | 0201 A=W1  T=T R=8 ST=AT SC=0201 J=01 | 0201 | 1 | 2 | 8 | 1 | 01 | |
| AT | 781 | 2 | 2 | W1 | 1 | T | 1 | 0202 A=W1  T=T R=2 ST=AT SC=0202 J=01 | 0202 | 2 | 2 | 2 | 1 | 02 | |
| AT | 782 | 2 | 2 | W1 | 1 | T | 1 | 0202 A=W1  T=T R=4 ST=AT SC=0202 J=01 | 0202 | 2 | 2 | 4 | 1 | 02 | |
| AT | 783 | 2 | 2 | W1 | 1 | T | 1 | 0202 A=W1  T=T R=5 ST=AT SC=0202 J=01 | 0202 | 2 | 2 | 5 | 1 | 02 | |
| AT | 784 | 2 | 2 | W1 | 1 | T | 1 | 0202 A=W1  T=T R=7 ST=AT SC=0202 J=01 | 0202 | 2 | 2 | 7 | 1 | 02 | |

⋮

| SCHE_TYPE | NO | MONTH | DAY | TYPE | N | EXP | MAX.DIM | EXP_COND | SC_COND | TU_DIM01 | EU_DIM01 | REPEAT | JU_DIM01 | SET_DIM01 | EU_DIM02 |
|---|---|---|---|---|---|---|---|---|---|---|---|---|---|---|---|
| AT | 1495 | 3 | 1 | W1 | 1 | T | 1 | 0301 A=W1  T=T R=1 ST=AT SC=0301 J=01 | 0301 | 1 | 3 | 1 | 1 | 01 | |
| AT | 1496 | 3 | 1 | W1 | 1 | T | 1 | 0301 A=W1  T=T R=3 ST=AT SC=0301 J=01 | 0301 | 1 | 3 | 3 | 1 | 01 | |
| AT | 1497 | 3 | 1 | W1 | 1 | T | 1 | 0301 A=W1  T=T R=6 ST=AT SC=0301 J=01 | 0301 | 1 | 3 | 6 | 1 | 01 | |
| AT | 1498 | 3 | 1 | W1 | 1 | T | 1 | 0301 A=W1  T=T R=8 ST=AT SC=0301 J=01 | 0301 | 1 | 3 | 8 | 1 | 01 | |
| DI | 1511 | 3 | 1 | W1 | 1 | D | 2 | 0301 A=W1  T=D R=1 ST=DI SC=020101 J=01 | 020101 | 1 | 1 | 1 | 1 | 01 | 2 |
| DI | 1512 | 3 | 1 | W1 | 1 | D | 2 | 0301 A=W1  T=D R=2 ST=DI SC=020101 J=01 | 020101 | 1 | 1 | 2 | 1 | 01 | 2 |
| DI | 1513 | 3 | 1 | W1 | 1 | D | 2 | 0301 A=W1  T=D R=3 ST=DI SC=020101 J=01 | 020101 | 1 | 1 | 3 | 1 | 01 | 2 |
| DI | 1514 | 3 | 1 | W1 | 1 | D | 2 | 0301 A=W1  T=D R=4 ST=DI SC=020101 J=01 | 020101 | 1 | 1 | 4 | 1 | 01 | 2 |
| AT | 1526 | 3 | 2 | W1 | 1 | T | 1 | 0302 A=W1  T=T R=2 ST=AT SC=0302 J=01 | 0302 | 2 | 3 | 2 | 1 | 02 | |
| AT | 1527 | 3 | 2 | W1 | 1 | T | 1 | 0302 A=W1  T=T R=4 ST=AT SC=0302 J=01 | 0302 | 2 | 3 | 4 | 1 | 02 | |
| AT | 1528 | 3 | 2 | W1 | 1 | T | 1 | 0302 A=W1  T=T R=6 ST=AT SC=0302 J=01 | 0302 | 2 | 3 | 5 | 1 | 02 | |
| AT | 1529 | 3 | 2 | W1 | 1 | T | 1 | 0302 A=W1  T=T R=7 ST=AT SC=0302 J=01 | 0302 | 2 | 3 | 7 | 1 | 02 | |
| DI | 1542 | 3 | 2 | W1 | 1 | D | 2 | 0302 A=W1  T=D R=1 ST=DI SC=020102 J=02 | 020102 | 2 | 1 | 1 | 2 | 01 | 2 |
| DI | 1543 | 3 | 2 | W1 | 1 | D | 2 | 0302 A=W1  T=D R=2 ST=DI SC=020102 J=02 | 020102 | 2 | 1 | 2 | 2 | 01 | 2 |
| DI | 1544 | 3 | 2 | W1 | 1 | D | 2 | 0302 A=W1  T=D R=3 ST=DI SC=020102 J=02 | 020102 | 2 | 1 | 3 | 2 | 01 | 2 |
| DI | 1545 | 3 | 2 | W1 | 1 | D | 2 | 0302 A=W1  T=D R=4 ST=DI SC=020102 J=02 | 020102 | 2 | 1 | 4 | 2 | 01 | 2 |
| AT | 1557 | 3 | 3 | W1 | 1 | T | 1 | 0303 A=W1  T=T R=2 ST=AT SC=0303 J=02 | 0303 | 3 | 3 | 2 | 2 | 02 | |
| AT | 1558 | 3 | 3 | W1 | 1 | T | 1 | 0303 A=W1  T=T R=4 ST=AT SC=0303 J=02 | 0303 | 3 | 3 | 4 | 2 | 02 | |
| AT | 1559 | 3 | 3 | W1 | 1 | T | 1 | 0303 A=W1  T=T R=5 ST=AT SC=0303 J=02 | 0303 | 3 | 3 | 5 | 2 | 02 | |
| AT | 1560 | 3 | 3 | W1 | 1 | T | 1 | 0303 A=W1  T=T R=7 ST=AT SC=0303 J=02 | 0303 | 3 | 3 | 7 | 2 | 02 | |

# FIG.8

EP 1 628 253 A1

TIMING CONDITION A1=E24I24J02D00

| INTERVAL | 24 | DAY |
|---|---|---|
| EVENT CYCLE UNIT | 24 | DAY |
| CONDITION UNIT | 2 | DAY |

● LIST FOR SPECIFYING NUMBER OF CONTENTS FOR EACH ATTRIBUTE CONDITION AND
PRESENTATION CONDITION IN ONE CONDITION UNIT

| | PRESENTATION CONDITION | | | | | | | | | | | | | | | | PRESENTATION CONDITION | | | | | | | | | | | | | | | | PRESENTATION CONDITION | | | | | | | | | | | | | | | |
|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|
| | T CONDITION | | | | | | | | | | | | | | | | D CONDITION | | | | | | | | | | | | | | | | B CONDITION | | | | | | | | | | | | | | | |
| | CONDITION OF NUMBER OF TIMES OF DRILL LEARNING | | | | | | | | | | | | | | | | CONDITION OF NUMBER OF TIMES OF DRILL LEARNING | | | | | | | | | | | | | | | | CONDITION OF NUMBER OF TIMES OF DRILL LEARNING | | | | | | | | | | | | | | | |
| ATTRIBUTE CONDITION | 1 | 2 | 3 | 4 | 5 | 6 | 7 | 8 | 9 | 10 | 11 | 12 | 13 | 14 | 15 | 16 | 1 | 2 | 3 | 4 | 5 | 6 | 7 | 8 | 9 | 10 | 11 | 12 | 13 | 14 | 15 | 16 | 1 | 2 | 3 | 4 | 5 | 6 | 7 | 8 | 9 | 10 | 11 | 12 | 13 | 14 | 15 | 16 |
| LB1 | 5 | 5 | 5 | 5 | 5 | 5 | 5 | 5 | | | | | | | | | 3 | 3 | 3 | 3 | 3 | 3 | 3 | 3 | | | | | | | | | | | | | | | | | | | | | | | | |
| | | | | | | | | | | | | | | | | | | | | | | | | | | | | | | | | | | | | | | | | | | | | | | | | |
| | | | | | | | | | | | | | | | | | | | | | | | | | | | | | | | | | | | | | | | | | | | | | | | | |
| | | | | | | | | | | | | | | | | | | | | | | | | | | | | | | | | | | | | | | | | | | | | | | | | |
| | | | | | | | | | | | | | | | | | | | | | | | | | | | | | | | | | | | | | | | | | | | | | | | | |
| | | | | | | | | | | | | | | | | | | | | | | | | | | | | | | | | | | | | | | | | | | | | | | | | |
| | | | | | | | | | | | | | | | | | | | | | | | | | | | | | | | | | | | | | | | | | | | | | | | | |
| NUMBER OF NECESSARY CONTENT ITEMS | 5 | 5 | 5 | 5 | 5 | 5 | 5 | 5 | 0 | 0 | 0 | 0 | 0 | 0 | 0 | 0 | 3 | 3 | 3 | 3 | 3 | 3 | 3 | 3 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 64 TYPES |
| TOTAL NUMBER OF DRILL ITEMS | 5 | 10 | 15 | 20 | 25 | 30 | 35 | 40 | 0 | 0 | 0 | 0 | 0 | 0 | 0 | 0 | 3 | 6 | 9 | 12 | 15 | 18 | 21 | 24 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 288 TIMES |

(NOTE 1)

AVERAGE OF TOTAL NUMBER OF DRILL ITEMS IN EACH PRESENTATION UNIT | 141 TIMES

● LIST FOR CONSIDERING HOW TO ARRANGE CONDITION OF NUMBER OF
TIME OF PRESENTATION IN CONDITION UNIT

NUMBER OF NECESSARY ITEMS IN ONE EVENT CYCLE UNIT | 768 TYPES

| LIST STRUCTURE OF INTEGRATED LEARNING | CONDITION OF NUMBER OF TIMES OF LEARNING | | | | | | | | | | | | | | | TOTAL |
|---|---|---|---|---|---|---|---|---|---|---|---|---|---|---|---|---|
| ONE CYCLE IN TWO DAYS | | | | | | | | | | | | | | | | |
| 1st DAY | 1 | | 3 | | | 6 | | 8 | | | | | | | | 18 |
| 2nd DAY | | 2 | | 4 | 5 | | 7 | | | | | | | | | 18 |
| 3rd DAY | | | | | | | | | | | | | | | | 0 |
| 4th DAY | | | | | | | | | | | | | | | | 0 |

(NOTE 2)

# FIG.9

TIMING CONDITION D1=E48I48J04D00

| INTERVAL | 48 | DAY |
|---|---|---|
| EVENT CYCLE UNIT | 48 | DAY |
| CONDITION UNIT | 4 | DAY |

● LIST FOR SPECIFYING NUMBER OF CONTENTS FOR EACH ATTRIBUTE CONDITION AND PRESENTATION CONDITION IN ONE CONDITION UNIT

| ATTRIBUTE CONDITION | PRESENTATION CONDITION T CONDITION CONDITION OF NUMBER OF TIMES OF DRILL LEARNING | | | | | | | | | | | | | | | | PRESENTATION CONDITION D CONDITION CONDITION OF NUMBER OF TIMES OF DRILL LEARNING | | | | | | | | | | | | | | | | PRESENTATION CONDITION TBIE CONDITION CONDITION OF NUMBER OF TIMES OF DRILL LEARNING | | | | | | | | | | | | | | | | |
|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 1 | 2 | 3 | 4 | 5 | 6 | 7 | 8 | 9 | 10 | 11 | 12 | 13 | 14 | 15 | 16 | 1 | 2 | 3 | 4 | 5 | 6 | 7 | 8 | 9 | 10 | 11 | 12 | 13 | 14 | 15 | 16 |
| XX (CONTROL LEVEL) | | | | | | | | | | | | | | | | | 2 | 2 | 2 | 2 | 2 | 2 | 2 | 2 | 2 | 2 | 2 | 2 | 2 | 2 | 2 | 2 | | | | | | | | | | | | | | | | |
| | | | | | | | | | | | | | | | | | | | | | | | | | | | | | | | | | | | | | | | | | | | | | | | | |
| | | | | | | | | | | | | | | | | | | | | | | | | | | | | | | | | | | | | | | | | | | | | | | | | |
| | | | | | | | | | | | | | | | | | | | | | | | | | | | | | | | | | | | | | | | | | | | | | | | | |
| | | | | | | | | | | | | | | | | | | | | | | | | | | | | | | | | | | | | | | | | | | | | | | | | |
| NUMBER OF NECESSARY CONTENT ITEMS | 0 | 0 | 0 | 0 | 0 | 0 | 0 | 0 | 0 | 0 | 0 | 0 | 0 | 0 | 0 | 0 | 2 | 2 | 2 | 2 | 2 | 2 | 2 | 2 | 2 | 2 | 2 | 2 | 2 | 2 | 2 | 2 | 0 | 0 | 0 | 0 | 0 | 0 | 0 | 0 | 0 | 0 | 0 | 0 | 0 | 0 | 0 | 0 | 32 TYPES |
| TOTAL NUMBER OF DRILL ITEMS | 0 | 0 | 0 | 0 | 0 | 0 | 0 | 0 | 0 | 0 | 0 | 0 | 0 | 0 | 0 | 0 | 2 | 4 | 6 | 8 | 10 | 12 | 14 | 16 | 18 | 20 | 22 | 24 | 26 | 28 | 30 | 32 | 0 | 0 | 0 | 0 | 0 | 0 | 0 | 0 | 0 | 0 | 0 | 0 | 0 | 0 | 0 | 0 | 272 TIMES |

(NOTE 1)

AVERAGE OF TOTAL NUMBER OF DRILL ITEMS IN EACH PRESENTATION UNIT | 64 TIMES

● LIST FOR CONSIDERING HOW TO ARRANGE CONDITION OF NUMBER OF TIME OF PRESENTATION IN CONDITION UNIT

NUMBER OF NECESSARY ITEMS IN ONE EVENT CYCLE UNIT | 434 TYPES

| LIST STRUCTURE OF INTEGRATED LEARNING ONE CYCLE IN FOUR DAYS | CONDITION OF NUMBER OF TIMES OF LEARNING | | | | | | | | | | | | | | | | TOTAL |
|---|---|---|---|---|---|---|---|---|---|---|---|---|---|---|---|---|---|
| 1st DAY | 1 | | | | | | | 8 | 9 | | | | | | | 16 | 34 |
| 2nd DAY | | 2 | | | | | 7 | | | 10 | | | | | 15 | | 34 |
| 3rd DAY | | | 3 | | | 6 | | | | | 11 | | | 14 | | | 34 |
| 4th DAY | | | | 4 | 5 | | | | | | | 12 | 13 | | | | 34 |

(NOTE 2)

EP 1 628 253 A1

# FIG.10

TIMING CONDITION D1=E06I06J01D00-E04I08J00D00

| INTERVAL | 6 | DAY |
|---|---|---|
| EVENT CYCLE UNIT | 6 | DAY |
| CONDITION UNIT | 1 | DAY |

●LIST FOR SPECIFYING NUMBER OF CONTENTS FOR EACH ATTRIBUTE CONDITION AND PRESENTATION CONDITION IN ONE CONDITION UNIT

| | PRESENTATION CONDITION | | | | | | | | | | | | | | | | PRESENTATION CONDITION | | | | | | | | | | | | | | | | PRESENTATION CONDITION | | | | | | | | | | | | | | | |
|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|
| | T CONDITION | | | | | | | | | | | | | | | | D CONDITION | | | | | | | | | | | | | | | | B CONDITION | | | | | | | | | | | | | | | |
| | CONDITION OF NUMBER OF TIMES OF DRILL LEARNING | | | | | | | | | | | | | | | | CONDITION OF NUMBER OF TIMES OF DRILL LEARNING | | | | | | | | | | | | | | | | CONDITION OF NUMBER OF TIMES OF DRILL LEARNING | | | | | | | | | | | | | | | |
| ATTRIBUTE CONDITION | 1 | 2 | 3 | 4 | 5 | 6 | 7 | 8 | 9 | 10 | 11 | 12 | 13 | 14 | 15 | 16 | 1 | 2 | 3 | 4 | 5 | 6 | 7 | 8 | 9 | 10 | 11 | 12 | 13 | 14 | 15 | 16 | 1 | 2 | 3 | 4 | 5 | 6 | 7 | 8 | 9 | 10 | 11 | 12 | 13 | 14 | 15 | 16 |
| L1 (LEVEL 1) | | | | | | | | | | | | | | | | | | | | | | | | | | | | | | | | | 2 | 2 | 2 | 2 | | | | | | | | | | | | |
| | | | | | | | | | | | | | | | | | | | | | | | | | | | | | | | | | | | | | | | | | | | | | | | | |
| | | | | | | | | | | | | | | | | | | | | | | | | | | | | | | | | | | | | | | | | | | | | | | | | |
| | | | | | | | | | | | | | | | | | | | | | | | | | | | | | | | | | | | | | | | | | | | | | | | | |
| | | | | | | | | | | | | | | | | | | | | | | | | | | | | | | | | | | | | | | | | | | | | | | | | |
| | | | | | | | | | | | | | | | | | | | | | | | | | | | | | | | | | | | | | | | | | | | | | | | | |
| | | | | | | | | | | | | | | | | | | | | | | | | | | | | | | | | | | | | | | | | | | | | | | | | |
| NUMBER OF NECESSARY CONTENT ITEMS | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 2 | 2 | 2 | 2 | 0 | 0 | 0 | 0 | 0 | 0 | 0 | 0 | 0 | 0 | 0 | 0 | 8 TYPES |
| TOTAL NUMBER OF DRILL ITEMS | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 2 | 4 | 6 | 8 | 0 | 0 | 0 | 0 | 0 | 0 | 0 | 0 | 0 | 0 | 0 | 0 | 20 TIMES |

(NOTE 1)

AVERAGE OF TOTAL NUMBER OF DRILL ITEMS IN EACH PRESENTATION UNIT | 20 TIMES

●LIST FOR CONSIDERING HOW TO ARRANGE CONDITION OF NUMBER OF TIME OF PRESENTATION IN CONDITION UNIT

NUMBER OF NECESSARY ITEMS IN ONE EVENT CYCLE UNIT | 48 TYPES

| LIST STRUCTURE OF INTEGRATED LEARNING ONE CYCLE IN ONE DAYS | CONDITION OF NUMBER OF TIMES OF LEARNING | | | | | | | | | | | | | | | TOTAL |
|---|---|---|---|---|---|---|---|---|---|---|---|---|---|---|---|---|
| 1st DAY | 1 | 2 | 3 | 4 | | | | | | | | | | | | 10 |
| 2nd DAY | | | | | | | | | | | | | | | | 0 |
| 3rd DAY | | | | | | | | | | | | | | | | 0 |
| 4th DAY | | | | | | | | | | | | | | | | 0 |

(NOTE 2)

EP 1 628 253 A1

# FIG.11

| | | |
|---|---|---|
| SUMMARY OF NUMBER OF USING ITEMS | | |
| TOTAL NUMBER OF ITEMS TO BE USED | 1632 | |
| TOTAL NUMBER OF AVAILABILITY | 2200 | |
| NUMBER OF REST | 568 | |
| PREDICTION OF DRILL LEANING TIME | | |
| LEANING TIME FOR ONE WORD | 4.0 | SECOND |
| REQUIRED TIME FOR LEARNING (BASIC LEARNING + INTEGRATED LEARNING + FILLER LEARNING) | 27 | MINUTE |
| RECOGNITION TEST STRUCTURE | TOTAL | |
| NUMBER OF TARGET IN ONE UNIT = NUMBER OF FAMILIARITY ASSESSMENT ITEMS | 20 | |
| NUMBER OF DESTRUCTORS IN ONE UNIT | 20 | |
| NUMBER OF WORDS IN RECOGNITION TEST LIST | 40 | |

# FIG.12A

| SERIAL NUMBER | ENGLISH WORD | JAPANESE TRANSLATION | ATTRIBUTE INFORMATION | FAMILIARITY ASSESSMENT VALUE | STANDARD ASSESSMENT VALUE |
|---|---|---|---|---|---|
| SERIAL | Q | A | TYPE | F00 | F_NORM |
| 1 | follow | ～(の後)に続く，(指示・方針など)に従う | W2 | | 1 |
| 2 | consider | ～を考慮する，(＋A+B)AをBと見なす，(＋Ving) | W3 | | 2 |
| 3 | increase | 増える，～を増やす，増加 | W3 | | 5 |
| 4 | expect | ～を予期する，予想する，期待する | W3 | | 4 |
| 5 | decide | ～することを決意する，～を決定する，～と判断する | W3 | | 2 |
| 6 | develop | 発達する，～を発達させる，～を開発する | W3 | | 4 |
| 7 | provide | ～を供給する，与える | W2 | | 5 |
| 8 | continue | 続く，(～を)続ける | W2 | | 3 |
| 9 | include | ～を含む，含める | W2 | | 3 |
| 10 | remain | (ある状態の)ままでいる，とどまる，残る | W3 | | 3 |
| 11 | reach | ～に着く，～に達する，届く範囲 | W3 | | 2 |
| 12 | allow | ～を許可する，許す，～を可能にする | W3 | | 3 |
| 13 | force | ～を強制する，力，暴力，軍隊 | W4 | | 2 |
| 14 | offer | ～を申し出る，～を与える，申し出，提案 | W4 | | 1 |
| 15 | realize | ～を悟る，理解する(＋that)，～を実現する | W3 | | 3 |
| 16 | require | ～を必要とする，～を要求する | W2 | | 5 |
| 17 | suggest | ～と提案する，～をほのめかす，暗示する | W3 | | 3 |
| 18 | worry | 心配する，～に心配させる，心配(事) | W3 | | 4 |
| 19 | wonder | (＋wh/if節)～かと疑問に思う，(at A)Aに驚く，Aを不思議に思う，驚き，不思議(な物) | W5 | | 1 |
| 20 | cost | (費用)を要する，～を奪う，費用，犠牲 | W4 | | 2 |

GO TO FIG.12B

EP 1 628 253 A1

# FIG.12B

| | | | | | |
|---|---|---|---|---|---|
| 21 | tend | (tend to V)Vする傾向がある，Vしがちである | W2 | | 4 |
| 22 | depend | (depend on A)Aに依存する，Aしだいで決まる | W2 | | 4 |
| 23 | share | ～を分け合う，共有する，一緒に使う | W3 | | 4 |
| 24 | demand | ～を要求する，必要とする，(～を)問う | W3 | | 3 |
| 25 | support | ～を支持する，援助する，(家族など)を養う，～を立証する，裏付ける，支持，援助 | W7 | | 1 |
| 26 | limit | ～を制限する，限定する，制限，限定 | W4 | | 2 |
| 27 | regard | (regard A as B)AをBだと思う，みなす | W2 | | 3 |
| 28 | base | (A be based on B)AがBに基づいている，(base A on B)Aの基礎をBに置く，基礎，根拠，基 | W5 | | 4 |
| 29 | improve | ～を向上させる，改善する，向上する，進歩する | W4 | | 3 |
| 30 | recognize | ～を認める，～を識別する，～だとわかる | W3 | | 4 |
| 31 | notice | ～に気づく，～だとわかる，通知，掲示，注意 | W5 | | 2 |
| 32 | suppose | ～だと思う，想像する，仮定する | W3 | | 2 |
| 33 | raise | ～を上げる，～を育てる，(問題など)を提起する，賃上げ | W4 | | 2 |
| 34 | prefer | ～をより好む | W1 | | 4 |
| 35 | enter | (場所・学校)に入る，～を記入する | W2 | | 4 |
| 36 | suffer | (苦痛・損害など)を経験する，受ける，(病気などで)苦しむ，損害を受ける | W4 | | 2 |
| 37 | describe | ～を描写する，～の特徴を説明する | W2 | | 5 |
| 38 | prevent | ～を妨げる，防ぐ，させない | W3 | | 3 |
| 39 | reduce | ～を減らす，(reduce A to B)AをBにする，変える | W3 | | 4 |
| 40 | mistake | ～を誤解する，間違える，誤り，間違い | W4 | | 3 |
| 41 | prepare | (～の)準備をする，(～を)用意する | W2 | | 4 |

# FIG.13A

| SERIAL | EXP_COND | Q | A | TYPE |
|---:|---|---|---|---|
| 58 | 0101_A=W1 _T=T_R=1_ST=AT_SC=0101_J=01 | draw | ～を引っ張る，引き出す，(図・絵)を(線で)描く | W1 |
| 1205 | 0101_A=W1 _T=T_R=3_ST=AT_SC=0101_J=01 | stem | (stem from A)Aから生じる，Aに由来する | W1 |
| 1359 | 0101_A=W1 _T=T_R=6_ST=AT_SC=0101_J=01 | initiative | 主導権，自発性，独創性 | W1 |
| 845 | 0101_A=W1 _T=T_R=8_ST=AT_SC=0101_J=01 | divorce | 離婚(=marriage) | W1 |
| 677 | 0102_A=W1 _T=T_R=2_ST=AT_SC=0102_J=01 | forgive | 〈あやまち・人〉を許す | W1 |
| 328 | 0102_A=W1 _T=T_R=4_ST=AT_SC=0102_J=01 | capacity | 能力，(部屋などの)収容力，容積 | W1 |
| 805 | 0102_A=W1 _T=T_R=5_ST=AT_SC=0102_J=01 | sum | 金額，合計，要約 | W1 |
| 690 | 0102_A=W1 _T=T_R=7_ST=AT_SC=0102_J=01 | detect | ～を探知する，〈病気・誤りなど〉を発見する，検出する | W1 |

.
.
.

# FIG.13B

| SERIAL | EXP_COND | Q | A | TYPE |
|---:|---|---|---|---|
| 1058 | 0101_A=W1 _T=D_R=2_ST=DI_SC=010101_J=01 | annual | 年に一度の，恒例の，1年間の | W1 |
| 1520 | 0101_A=W1 _T=D_R=1_ST=DI_SC=010101_J=01 | idle | (仕事がなくて)なにもしていない(←→busy)，なまけ者の | W1 |
| 678 | 0102_A=W1 _T=D_R=1_ST=DI_SC=010102_J=02 | envy | ～をうらやむ | W1 |
| 152 | 0102_A=W1 _T=D_R=2_ST=DI_SC=010102_J=02 | occupy | (場所・地位など)を占める | W1 |

.
.
.

EP 1 628 253 A1

# FIG.14A

| CHECK | PHASE | TASK 1 | RESPONSE 1 | TRUE DAY | TIME 1 | SERIAL | EXP_COND | Q | A |
|---|---|---|---|---|---|---|---|---|---|
| 0 | 0 | F | 1 | 2002/8/18 | 3.85 | 1359 | 0101_A=W1 _T=T_R=8_ST=AT_SC=0101_J=01 | initiative | 主導権, 自発性, 独創性 |
| 0 | 0 | F | 2 | 2002/8/18 | 3.02 | 1205 | 0101_A=W1 _T=T_R=3_ST=AT_SC=0101_J=01 | stem | (stem from A)Aから生じる, Aに由来する |
| 0 | 0 | F | 1 | 2002/8/18 | 3.13 | 845 | 0101_A=W1 _T=T_R=8_ST=AT_SC=0101_J=01 | divorce | 離婚(=marriage) |
| 0 | 0 | F | 3 | 2002/8/18 | 5.50 | 58 | 0101_A=W1 _T=T_R=1_ST=AT_SC=0101_J=01 | draw | ~を引っ張る, 引き出す, (図・絵)を(線で)描く |
| 0 | 2 | R | 2 | 2002/8/18 | 3.18 | 1058 | 0101_A=W1 _T=D_R=2_ST=DI_SC=010101_J=01 | annual | 年に一度の, 恒例の, 1年間の |
| 0 | 2 | R | 1 | 2002/8/18 | 2.36 | 1205 | 0101_A=W1 _T=T_R=3_ST=AT_SC=0101_J=01 | stem | (stem from A)Aから生じる, Aに由来する |
| 0 | 2 | R | 2 | 2002/8/18 | 0.88 | 1520 | 0101_A=W1 _T=D_R=1_ST=DI_SC=010101_J=01 | idle | (仕事がなくて)なにもしていない(←→busy), なまけ者 |
| 0 | 2 | R | 1 | 2002/8/18 | 2.36 | 1359 | 0101_A=W1 _T=T_R=6_ST=AT_SC=0101_J=01 | initiative | 主導権, 自発性, 独創性 |
| 0 | 2 | R | 1 | 2002/8/18 | 1.32 | 58 | 0101_A=W1 _T=T_R=1_ST=AT_SC=0101_J=01 | draw | ~を引っ張る, 引き出す, (図・絵)を(線で)描く |
| 0 | 2 | R | 2 | 2002/8/18 | 2.42 | 845 | 0101_A=W1 _T=T_R=8_ST=AT_SC=0101_J=01 | divorce | 離婚(=marriage) |
| 0 | 3 | D | 0 | 2002/8/18 | 9.78 | 845 | 0101_A=W1 _T=T_R=8_ST=AT_SC=0101_J=01 | divorce | 離婚(=marriage) |
| 0 | 3 | D | 0 | 2002/8/18 | 5.33 | 1359 | 0101_A=W1 _T=T_R=6_ST=AT_SC=0101_J=01 | initiative | 主導権, 自発性, 独創性 |
| 0 | 3 | D | 2 | 2002/8/18 | 5.16 | 845 | 0101_A=W1 _T=T_R=8_ST=AT_SC=0101_J=01 | divorce | 離婚(=marriage) |
| 0 | 3 | D | 3 | 2002/8/18 | 4.40 | 845 | 0101_A=W1 _T=T_R=8_ST=AT_SC=0101_J=01 | divorce | 離婚(=marriage) |
| 0 | 4 | D | 1 | 2002/8/18 | 7.47 | 58 | 0101_A=W1 _T=T_R=1_ST=AT_SC=0101_J=01 | draw | ~を引っ張る, 引き出す, (図・絵)を(線で)描く |

EP 1 628 253 A1

# FIG.14B

## FROM FIG.14A

| 0 | 4 | D | 0 | 2002/8/18 | 4.77 | 1359 | 0101_A=W1 _T=T_R=8_ST=AT_SC=0101_J=01 | initiative | 主導権，自発性，独創性 |
|---|---|---|---|---|---|---|---|---|---|
| 0 | 4 | D | 0 | 2002/8/18 | 4.94 | 1205 | 0101_A=W1 _T=T_R=3_ST=AT_SC=0101_J=01 | stem | (stam from A)Aから生じる，Aに由来する |
| 0 | 4 | D | 0 | 2002/8/18 | 5.38 | 1058 | 0101_A=W1 _T=D_R=2_ST=DT_SC=010101_J=01 | annual | 年に一度の，恒例の，1年間の |
| 0 | 4 | D | 2 | 2002/8/18 | 6.59 | 845 | 0101_A=W1 _T=T_R=8_ST=AT_SC=0101_J=01 | divorce | 離婚(=marriage) |
| 0 | 5 | D | 3 | 2002/8/18 | 1.82 | 845 | 0101_A=W1 _T=T_R=8_ST=AT_SC=0101_J=01 | divorce | 離婚(=marriage) |
| 0 | 5 | D | 0 | 2002/8/18 | 5.98 | 1359 | 0101_A=W1 _T=T_R=6_ST=AT_SC=0101_J=01 | initiative | 主導権，自発性，独創性 |
| 0 | 5 | D | 2 | 2002/8/18 | 6.21 | 1359 | 0101_A=W1 _T=T_R=6_ST=AT_SC=0101_J=01 | initiative | 主導権，自発性，独創性 |
| 0 | 6 | D | 0 | 2002/8/18 | 5.76 | 1205 | 0101_A=W1 _T=T_R=3_ST=AT_SC=0101_J=01 | stem | (stem from A)Aから生じる，Aに由来する |
| 0 | 6 | D | 3 | 2002/8/18 | 1.82 | 845 | 0101_A=W1 _T=T_R=8_ST=AT_SC=0101_J=01 | divorce | 離婚(=marriage) |
| 0 | 6 | D | 2 | 2002/8/18 | 7.46 | 1359 | 0101_A=W1 _T=T_R=6_ST=AT_SC=0101_J=01 | initiative | 主導権，自発性，独創性 |
| 0 | 6 | D | 3 | 2002/8/18 | 6.81 | 1359 | 0101_A=W1 _T=T_R=6_ST=AT_SC=0101_J=01 | initiative | 主導権，自発性，独創性 |
| 0 | 6 | D | 3 | 2002/8/18 | 1.53 | 845 | 0101_A=W1 _T=T_R=8_ST=AT_SC=0101_J=01 | divorce | 離婚(=marriage) |
| 0 | 6 | D | 0 | 2002/8/18 | 3.95 | 1058 | 0101_A=W1 _T=D_R=2_ST=DI_SC=010101_J=01 | annual | 年に一度の，恒例の，1年間の |
| 1 | 7 | D | | 2002/8/18 | | 845 | 0101_A=W1 _T=T_R=8_ST=AT_SC=0101_J=01 | divorce | 離婚(=marriage) |
| 1 | 7 | D | | 2002/8/18 | | 1520 | 0101_A=W1 _T=D_R=1_ST=DI_SC=010101_J=01 | idle | (仕事がなくて)なにもしていない(←→busy)，なまけ者 |
| 1 | 7 | D | | 2002/8/18 | | 1205 | 0101_A=W1 _T=T_R=3_ST=AT_SC=0101_J=01 | stem | (stem from A)Aから生じる，Aに由来する |

# FIG.15A

| SCHE_TYPE | BASIC_COND | EXP_COND | SERIAL | Q | A | PM01 | PM02 | PM03 | TIMEFUN01 | TIMEFUN02 | TIMEFUN03 |
|---|---|---|---|---|---|---|---|---|---|---|---|
| F1 | _E024_I024_J001_D000 | 0101_A=W1 _T=F_R= 5_ST=F1_SC=0101_J=01 | 273 | trade | 貿易, 商売 | O | | | 8.23 | | |
| F1 | _E024_I024_J001_D000 | 0101_A=W1 _T=F_R= 5_ST=F1_SC=0101_J=01 | 637 | grasp | ～を理解する, つかむ | O | | | 8.23 | | |
| F1 | _E024_I024_J001_D000 | 0102_A=W1 _T=F_R= 5_ST=F1_SC=0102_J=02 | 1084 | noble | 高貴な, 気高い | O | | | 8.23 | | |
| F1 | _E024_I024_J001_D000 | 0102_A=W1 _T=F_R= 5_ST=F1_SC=0102_J=02 | 1204 | conform | (規則慣習など)に従う, 合わせる(+to) | O | | | 8.23 | | |
| F1 | _E024_I024_J001_D000 | 0103_A=W1 _T=F_R= 5_ST=F1_SC=0103_J=03 | 798 | resident | 住民, 滞在者 | X | | | 8.23 | | |
| F1 | _E024_I024_J001_D000 | 0103_A=W1 _T=F_R= 5_ST=F1_SC=0103_J=03 | 887 | compound | 化合物, 複合体 | O | | | 8.23 | | |
| F1 | _E024_I024_J001_D000 | 0104_A=W1 _T=F_R= 5_ST=F1_SC=0104_J=04 | 64 | admit | (自分に不利・不快なこと)を認める, (人) | O | | | 8.23 | | |
| F1 | _E024_I024_J001_D000 | 0104_A=W1 _T=F_R= 5_ST=F1_SC=0104_J=04 | 1083 | ethnic | 民族的な, 民族の | O | | | 8.23 | | |
| F1 | _E024_I024_J001_D000 | 0105_A=W1 _T=F_R= 5_ST=F1_SC=0105_J=05 | 61 | mention | ～について述べる, 言及する | O | | | 8.23 | | |
| F1 | _E024_I024_J001_D000 | 0105_A=W1 _T=F_R= 5_ST=F1_SC=0105_J=05 | 1236 | displace | ～にとって代わる(=replace), (人)を追い | O | | | 8.23 | | |
| F1 | _E024_I024_J001_D000 | 0106_A=W1 _T=F_R= 5_ST=F1_SC=0106_J=06 | 42 | encourage | (人を) はげます, ～を促進する | O | | | 8.23 | | |
| F1 | _E024_I024_J001_D000 | 0106_A=W1 _T=F_R= 5_ST=F1_SC=0106_J=06 | 640 | accuse | ～を非難する, ～を告訴する | X | | | 8.23 | | |
| F1 | _E024_I024_J001_D000 | 0107_A=W1 _T=F_R= 5_ST=F1_SC=0107_J=07 | 702 | enforce | 〈法律など〉を施行する, ～を強制する | O | | | 8.23 | | |
| F1 | _E024_I024_J001_D000 | 0107_A=W1 _T=F_R= 5_ST=F1_SC=0107_J=07 | 1096 | misleading | 誤解を招く, まぎらわしい | O | | | 8.23 | | |
| F1 | _E024_I024_J001_D000 | 0108_A=W1 _T=F_R= 5_ST=F1_SC=0108_J=08 | 601 | injure | ～を傷つける, けがをさせる | O | | | 8.23 | | |
| F1 | _E024_I024_J001_D000 | 0108_A=W1 _T=F_R= 5_ST=F1_SC=0108_J=08 | 1201 | submit | submit (submit to A)Aに服従する, (案・書類など | O | | | 8.23 | | |
| F1 | _E024_I024_J001_D000 | 0109_A=W1 _T=F_R= 5_ST=F1_SC=0109_J=09 | 1373 | lag | 遅れ, 遅延 | O | | | 8.23 | | |
| F1 | _E024_I024_J001_D000 | 0109_A=W1 _T=F_R= 5_ST=F1_SC=0109_J=09 | 620 | depress | ～を憂鬱にさせる, 落胆させる | O | | | 8.23 | | |
| F1 | _E024_I024_J001_D000 | 0110_A=W1 _T=F_R= 5_ST=F1_SC=0110_J=10 | 43 | prove | ～だとわかる, ～を証明する | O | | | 8.23 | | |
| F1 | _E024_I024_J001_D000 | 0110_A=W1 _T=F_R= 5_ST=F1_SC=0110_J=10 | 1527 | stray | 家のない, 道に迷った | X | | | 8.23 | | |

EP 1 628 253 A1

# FIG.15B

| | | | | | | | | | | | |
|---|---|---|---|---|---|---|---|---|---|---|---|
| X1 | _E001_I072_J001_D023 | 0124_A=W1 _T=X_R= 0_ST=X1_SC=0101_J=10 | 171 | regret | ～を後悔する，残念に思う | O | | | 8.23 | | |
| X1 | _E001_I072_J001_D023 | 0124_A=W1 _T=X_R= 0_ST=X1_SC=0101_J=10 | 7 | provide | ～を供給する，与える | O | | | 8.23 | | |
| X1 | _E001_I072_J001_D023 | 0124_A=W1 _T=X_R= 0_ST=X1_SC=0101_J=10 | 493 | global | 世界的な，地球規模の | O | | | 8.23 | | |
| X1 | _E001_I072_J001_D023 | 0124_A=W1 _T=X_R= 0_ST=X1_SC=0101_J=10 | 16 | require | ～を必要とする，～を要求する | X | | | 8.23 | | |
| X1 | _E001_I072_J001_D023 | 0124_A=W1 _T=X_R= 0_ST=X1_SC=0101_J=10 | 265 | influence | 影響(力)，(人に対する)支配力 | O | | | 8.23 | | |
| X1 | _E001_I072_J001_D023 | 0124_A=W1 _T=X_R= 0_ST=X1_SC=0101_J=10 | 839 | prejudice | 偏見，先入観 | O | | | 8.23 | | |
| X2 | _E001_I072_J001_D047 | 0224_A=W1 _T=X_R= 0_ST=X2_SC=0101_J=10 | 853 | parallel | 類似(物)，匹敵するもの | | O | | | 7.09 | |
| X2 | _E001_I072_J001_D047 | 0224_A=W1 _T=X_R= 0_ST=X2_SC=0101_J=10 | 153 | own | ～を所有している，～を持っている | | O | | | 7.09 | |
| X2 | _E001_I072_J001_D047 | 0224_A=W1 _T=X_R= 0_ST=X2_SC=0101_J=10 | 1364 | plague | 疫病，伝染病 | | O | | | 7.09 | |
| X2 | _E001_I072_J001_D047 | 0224_A=W1 _T=X_R= 0_ST=X2_SC=0101_J=10 | 1515 | entitled | (be entitled to A)Aを得る(する)権利 | | O | | | 7.09 | |
| X2 | _E001_I072_J001_D047 | 0224_A=W1 _T=X_R= 0_ST=X2_SC=0101_J=10 | 499 | narrow | 狭い，細い | | O | | | 7.09 | |
| X2 | _E001_I072_J001_D047 | 0224_A=W1 _T=X_R= 0_ST=X2_SC=0101_J=10 | 679 | enclose | ～を囲む，～を同封する | | O | | | 7.09 | |
| X2 | _E001_I072_J001_D047 | 0224_A=W1 _T=X_R= 0_ST=X2_SC=0101_J=10 | 605 | spoil | | | O | | | 7.09 | |
| X2 | _E001_I072_J001_D047 | 0224_A=W1 _T=X_R= 0_ST=X2_SC=0101_J=10 | 262 | value | ～を台無しにする，(子ども)を甘やかして | | O | | | 7.09 | |
| X3 | _E001_I072_J001_D071 | 0324_A=W1 _T=X_R= 0_ST=X3_SC=0101_J=10 | 851 | worship | 崇拝，礼拝 | | | | | | |
| X3 | _E001_I072_J001_D071 | 0324_A=W1 _T=X_R= 0_ST=X3_SC=0101_J=10 | 814 | row | 列，並び | | | | | | |
| X3 | _E001_I072_J001_D071 | 0324_A=W1 _T=X_R= 0_ST=X3_SC=0101_J=10 | 1203 | resign | (～を)辞職する，やめる | | | | | | |
| X3 | _E001_I072_J001_D071 | 0324_A=W1 _T=X_R= 0_ST=X3_SC=0101_J=10 | 1431 | frighten | (人)をおびえさせる，ぞっとさせる | | | | | | |

# FIG.16

| ANS | BASIC_COND | EXP_COND | | F | F00 | F_NORM | J01 | J02 | J03 | J04 | J05 | J06 |
|---|---|---|---|---|---|---|---|---|---|---|---|---|
| | _E006_I006_J001_D000 | 0101_A=S1 | _T=B_R= 4_ST=C1_SC=0101_J=01 | | 1 | 4 | 0 | 0 | 0 | 0 | | |
| | _E006_I006_J001_D000 | 0101_A=S1 | _T=B_R= 4_ST=C1_SC=0101_J=01 | | 1 | 4 | 0 | 2 | 3 | 2 | | |
| | _E006_I006_J001_D000 | 0101_A=S1 | _T=B_R= 4_ST=C1_SC=0101_J=01 | | 1 | 4 | 0 | 0 | 3 | 2 | | |
| 2 | _E006_I006_J001_D000-E004_I008_J000_D000 | 0101_A=W1 | _T=D_R= 1_ST=D1_SC=010101_J=01 | | 1 | 4 | 0 | | | | | |
| 2 | _E006_I006_J001_D000-E004_I008_J000_D000 | 0101_A=W1 | _T=D_R= 2_ST=D1_SC=010101_J=01 | | 1 | 4 | 0 | 0 | | | | |
| 2 | _E006_I006_J001_D000-E004_I012_J000_D000 | 0101_A=W1 | _T=D_R= 1_ST=E1_SC=010101_J=01 | | 1 | 4 | 0 | | | | | |
| 2 | _E006_I006_J001_D000-E004_I012_J000_D000 | 0101_A=W1 | _T=D_R= 2vST=E1vSC=010101_J=01 | | 1 | 4 | 0 | 0 | | | | |
| | _E024_I024_J001_D000 | 0101_A=W1 | _T=F_R= 5_ST=F1_SC=0101_J=01 | 1 | 1 | 4 | 0 | 0 | 0 | 2 | 2 | |
| | _E024_I024_J001_D000 | 0101_A=W1 | _T=F_R= 5_ST=F1_SC=0101_J=01 | 1 | 2 | 3 | 0 | 0 | 1 | 2 | 3 | |
| | _E024_I024_J001_D000 | 0101_A=W1 | _T=F_R= 5_ST=F2_SC=0101_J=01 | 3 | 2 | 3 | 0 | 0 | 1 | 2 | 2 | |
| | _E024_I024_J001_D000 | 0101_A=W1 | _T=F_R= 5_ST=F2_SC=0101_J=01 | 3 | 2 | 3 | 0 | 2 | 3 | 3 | 3 | |
| | _E024_I024_J001_D000 | 0101_A=W1 | _T=F_R= 5_ST=F3_SC=0101_J=01 | 1 | 1 | 4 | 0 | 0 | 0 | 1 | 0 | |
| | _E024_I024_J001_D000 | 0101_A=W1 | _T=F_R= 5_ST=F3_SC=0101_J=01 | 5 | 4 | 1 | 0 | 3 | 3 | 3 | 3 | |
| 2 | _E024_I024_J002_D000 | 0102_A=W1 | _T=D_R= 2_ST=AD_SC=0102_J=01 | | 1 | 4 | 0 | 0 | | | | |

| JT01 | JT02 | JT03 | JT04 | JT05 | JT06 | REPEAT | SCHE_TYPE | SERIAL | TRUE_DAY | TYPE |
|---|---|---|---|---|---|---|---|---|---|---|
| 5.05 | 8.02 | 3.95 | 4.34 | | | 4 | C1 | 1862 | 2002/8/18 | S1 |
| 4.01 | 5.65 | 4.94 | 7.80 | | | 4 | C1 | 1318 | 2002/8/18 | S1 |
| 7.96 | 8.18 | 8.57 | 7.69 | | | 4 | C1 | 1730 | 2002/8/18 | S1 |
| 6.37 | 0.00 | 0.00 | 0.00 | | | 1 | D1 | 1520 | 2002/8/18 | W1 |
| 5.38 | 3.95 | 0.00 | 0.00 | | | 2 | D1 | 1058 | 2002/8/18 | W1 |
| 4.94 | 0.00 | 0.00 | 0.00 | | | 1 | E1 | 1212 | 2002/8/18 | W1 |
| 5.82 | 4.94 | 0.00 | 0.00 | | | 2 | E1 | 649 | 2002/8/18 | W1 |
| 5.55 | 5.66 | 5.05 | 4.67 | 6.70 | | 5 | F1 | 1373 | 2002/8/18 | W1 |
| 9.72 | 8.13 | 7.25 | 7.20 | 4.01 | | 5 | F1 | 620 | 2002/8/18 | W1 |
| 4.78 | 9.06 | 9.28 | 14.83 | 7.75 | | 5 | F2 | 474 | 2002/8/18 | W1 |
| 7.58 | 9.66 | 3.19 | 1.92 | 2.47 | | 5 | F2 | 279 | 2002/8/18 | W1 |
| 17.41 | 6.81 | 7.58 | 9.39 | 10.22 | | 5 | F3 | 849 | 2002/8/18 | W1 |
| 7.91 | 5.66 | 5.60 | 3.24 | 2.75 | | 5 | F3 | 35 | 2002/8/18 | W1 |
| 4.45 | 4.17 | 0.00 | 0.00 | 0.00 | 0.00 | 2 | AD | 1260 | 2002/8/19 | W1 |

EP 1 628 253 A1

# FIG.17

CHANGE IN FIRST ASSESSMENT VALUE
IN LEARNING TERM

EP 1 628 253 A1

FIG.18A

y=0.3648x+0.2519

LEARNER A

FIG.18B

y=0.2146x+0.3697

LEARNER B

FIG.18C

y=0.0673x+0.5826

LEARNER C

55

# FIG.19A

QUESTION (1)

Study

<?>

PLEASE PRESS KEY FOR ASSESSMENT

# FIG.19B

QUESTION (1)

Study

< □ >

ANSWER

学習, 勉強

ASSESSMENT? (A: EXCELLENT, B: GOOD, C: NOT GOOD, D: BAD)

# FIG.20

## (A) INTERVAL ONE WEEK CONDITION

| | | 1 | 2 | 3 | 4 | 5 | 6 |
|---|---|---|---|---|---|---|---|
| | | WEEK 1 | WEEK 2 | WEEK 3 | WEEK 4 | WEEK 5 | WEEK 6 |
| (A) INTERVAL ONE WEEK CONDITION | LEARNER X | 0.5 | 1 | 1.5 | 2 | 2.5 | 3 |
| | AVERAGE VALUE OF OTHER LEARNERS | 0.2 | 0.4 | 0.6 | 0.8 | 1 | 1.2 |

## (B) INTERVAL ONE MONTH CONDITION

| | | MONTH 1 | MONTH 2 | MONTH 3 | MONTH 4 | MONTH 5 | MONTH 6 |
|---|---|---|---|---|---|---|---|
| (B) INTERVAL ONE MONTH CONDITION | LEARNER X | ? | ? | ? | ? | ? | ? |
| | AVERAGE VALUE OF OTHER LEARNERS | 0.1 | 0.2 | 0.3 | 0.4 | 0.5 | 0.6 |

(A) INTERVAL ONE WEEK CONDITION

GRADIENT=0.5
GRADIENT=0.2

⬜ LEARNER X
▨ AVERAGE VALUE OF OTHER LEARNERS
— LINE SHAPE (LEARNER X)
— LINE SHAPE (AVERAGE VALUE OF OTHER LEARNERS)

WEEK 1  WEEK 3  WEEK 5
WEEK 2  WEEK 4  WEEK 6

(B) INTERVAL ONE MONTH CONDITION

GRADIENT=0.25
GRADIENT=0.1

⬜ LEARNER X
▨ AVERAGE VALUE OF OTHER LEARNERS
— LINE SHAPE (LEARNER X)
— LINE SHAPE (AVERAGE VALUE OF OTHER LEARNERS)

MONTH 1  MONTH 3  MONTH 5
MONTH 2  MONTH 4  MONTH 6

EP 1 628 253 A1

# FIG.21

```
        ( START )
             │
             ▼
```

┌─────────────────────────────────────────┐
│ COLLECT SCORES OF EACH LEANER IN VARIOUS  │─── S1
│ SCHEDULE CONDITION TO STORE IN DATA BASE  │
└─────────────────────────────────────────┘
             │
             ▼
┌─────────────────────────────────────────┐
│ OBTAIN LEARNING SCORE DATA OF SCORE PREDICTION │─── S2
│ TARGET LEARNER IN FIRST INTERVAL CONDITION │
└─────────────────────────────────────────┘
             │
             ▼
┌─────────────────────────────────────────┐
│ DETERMINE SECOND INTERVAL CONDITION       │─── S3
│ WHICH SCORE PREDICTION TARGET LEARNER     │
│ DESIRES FOR PREDICTION                     │
└─────────────────────────────────────────┘
             │
             ▼
┌─────────────────────────────────────────┐
│ EXTRACT SCORE DATA WHICH MATCHES FIRST INTERVAL │─── S4
│ CONDITION AND SCORE DATA WHICH MATCHES SECOND │
│ INTERVAL CONDITION IN SAME ATTRIBUTE CONDITION │
│ AND PRESENTATION CONDITION AS IN FIRST INTERVAL │
│ CONDITION RESPECTIVELY FROM DATABASE      │
└─────────────────────────────────────────┘
             │
             ▼
┌─────────────────────────────────────────┐
│ SET REGRESSION MODEL                      │─── S5
└─────────────────────────────────────────┘
             │
             ▼
┌─────────────────────────────────────────┐
│ PERFORM REGRESSION ANALYSIS IN USE        │─── S6
│ OF EXTRACTED DATA FROM DATABASE TO        │
│ DETERMINE FACTOR OF REGRESSION MODEL      │
└─────────────────────────────────────────┘
             │
             ▼
┌─────────────────────────────────────────┐
│ PREDICT CHANGE OF SCORE IN SECOND INTERVAL │─── S7
│ CONDITION ACCORDING TO DETERMINED FACTOR  │
│ AND LEARNING SCORE DATA OF SCORE PREDICTION │
│ TARGET LEARNER IN FIRST INTERVAL CONDITION │
└─────────────────────────────────────────┘
             │
             ▼
         ( END )

# FIG.22

SCHEDULE A1   1 1 1 0 1 0 1 1 1 0 1 0 1 1 1 ···

SCHEDULE A2   1 1 1 0 2 0 1 1 1 0 2 0 1 1 1 ···

SCHEDULE x   1 1 1 0 0 0 1 1 1 0 0 0 1 1 1 ···
E003_I006_J001_D000 (PRESENTATION CONDITION: 1)

SCHEDULE y   0 0 0 0 1 0 0 0 0 0 1 0 0 0 0 ···
E001_I006_J001_D004 (PRESENTATION CONDITION: 1)

SCHEDULE z   0 0 0 0 2 0 0 0 0 0 2 0 0 0 0 ···
E001_I006_J001_D004 (PRESENTATION CONDITION: 2)

EP 1 628 253 A1

# FIG.23

| PRESENTATION UNIT | 1 | 2 | 3 | 4 | 5 | 6 | 7 | 8 | 9 | 10 | 11 | 12 | 13 | 14 | 15 | ··· PRESENTATION CONDITION |

| EVENT | 1 | 2 | 3 | 4 | 5 | 6 | 7 | 8 | 9 | 10 | 11 | 12 | 13 | 14 | 15 | |
|---|---|---|---|---|---|---|---|---|---|---|---|---|---|---|---|---|
| EVENT 1 | 1 | 1 | 1 | 1 | 1 | 1 | 1 | 1 | 1 | 1 | 1 | 1 | 1 | 1 | 1 | ··· |
| EVENT 2 | 1 | 0 | 1 | 0 | 1 | 0 | 1 | 0 | 1 | 0 | 1 | 0 | 1 | 0 | 1 | ··· |
| EVENT 3 | 1 | 0 | 0 | 1 | 0 | 0 | 1 | 0 | 0 | 1 | 0 | 0 | 1 | 0 | 0 | ··· MALE OPERATOR |
| EVENT 4 | 1 | 0 | 0 | 1 | 0 | 0 | 1 | 0 | 0 | 1 | 0 | 0 | 1 | 0 | 0 | ··· FEMALE OPERATOR |

| EVENT | 1 | 2 | 3 | 4 | 5 | 6 | 7 | 8 | 9 | 10 | 11 | 12 | 13 | 14 | 15 | |
|---|---|---|---|---|---|---|---|---|---|---|---|---|---|---|---|---|
| EVENT 5 | 1 | 1 | 1 | 0 | 1 | 0 | 1 | 1 | 1 | 0 | 1 | 0 | 1 | 1 | 1 | ··· |
| EVENT 6 | 1 | 1 | 1 | 0 | 2 | 0 | 1 | 1 | 1 | 0 | 2 | 0 | 1 | 1 | 1 | ··· |

"1" IS PRESENTATION CONDITION OF COMMON DIRECT MAILS
"2" IS PRESENTATION CONDITION OF DIRECT MAILS WITH PRIZE

EP 1 628 253 A1

# FIG.24

**PRESENTATION UNIT**

**EVENT OF LEARNER X**

| | 1 | 2 | 3 | 4 | 5 | 6 | 7 | 8 | 9 | |
|---|---|---|---|---|---|---|---|---|---|---|
| APPLICATION EVENT | ... | ... | 0 | 0 | 0 | 0 | | | 1 | ← EXPECTATION |
| QUESTION EVENT | ... | ... | 1 | 0 | 0 | 1 | | | 0 | |
| DOCUMENT REQUEST EVENT | ... | ... | 0 | 0 | 1 | 0 | | | 0 | |
| DIRECT MAIL EVENT | ... | ... | 1 | 0 | 0 | 1 | ? | ? | 0 | |

**EVENT OF LEARNER A**

| | 1 | 2 | 3 | 4 | 5 | 6 | 7 | 8 | 9 |
|---|---|---|---|---|---|---|---|---|---|
| APPLICATION EVENT | ... | ... | 0 | 0 | 0 | 0 | | | 1 |
| QUESTION EVENT | ... | ... | 0 | 0 | 0 | 0 | | | 0 |
| DOCUMENT REQUEST EVENT | ... | ... | 0 | 1 | 1 | 0 | | | 0 |
| DIRECT MAIL EVENT | ... | ... | 1 | 0 | 1 | 0 | 0 | 1 | 0 |

SIMILARITY OF MATRIX IN HEAVY-LINE FRAME OF PERSON X AND PERSON A   2.0

**EVENT OF LEARNER B**

| | 1 | 2 | 3 | 4 | 5 | 6 | 7 | 8 | 9 |
|---|---|---|---|---|---|---|---|---|---|
| APPLICATION EVENT | ... | ... | 0 | 0 | 0 | 0 | | | 1 |
| QUESTION EVENT | ... | ... | 0 | 1 | 0 | 1 | | | 0 |
| DOCUMENT REQUEST EVENT | ... | ... | 0 | 1 | 0 | 0 | | | 0 |
| DIRECT MAIL EVENT | ... | ... | 1 | 0 | 0 | 1 | 1 | 1 | 0 |

SIMILARITY OF MATRIX IN HEAVY-LINE FRAME OF PERSON X AND PERSON B   3.0

**EVENT OF LEARNER C**

| | 1 | 2 | 3 | 4 | 5 | 6 | 7 | 8 | 9 |
|---|---|---|---|---|---|---|---|---|---|
| APPLICATION EVENT | ... | ... | 0 | 0 | 0 | 0 | | | 1 |
| QUESTION EVENT | ... | ... | 1 | 0 | 0 | 1 | | | 0 |
| DOCUMENT REQUEST EVENT | ... | ... | 0 | 0 | 1 | 0 | | | 0 |
| DIRECT MAIL EVENT | ... | ... | 1 | 0 | 0 | 1 | 1 | 0 | 0 |

SIMILARITY OF MATRIX IN HEAVY-LINE FRAME OF PERSON X AND PERSON C   5.0

☐ REGION OF HIGHEST SIMILARITY FOR EACH PERSON IN TIME SERIES, OR REGION IN WHICH SIMILARITY IS HIGHER THAN PREDETERMINED LEVEL (IN CASE THAT A PLURALITY OF SIMILARITIES ARE CONSIDERED). CALCULATION AND PREDICTION OF SIMILARITY MAY BE BASED ON CONSIDERABLE MATRIX OF PREDICTED PERSON IN ADDITION TO MATRIX OF EVENT.

EP 1 628 253 A1

# FIG.25

LEARNER'S TERMINAL

51

52

53

54

COMMUNICATION NETWORK

55

57

58

NAME OF SERVICE

ENGLISH WORD IN FIRST GRADE OF JUNIOR HIGH SCHOOL (DIFFICULTY: HIGH)

3

1E

RELATING OCCUPATION WEBSITES
XXXXX
XXXXX

QUALIFICATION APPLICATION WEBSITES
XXXXX
XXXXX

59

SCHEDULE TABLE

| DAY | CONTENT NUMBER | NUMBER OF TIMES |
|-----|----------------|-----------------|
| 1 | 101 | 2 |
| 1 | 102 | 1 |
| 1 | 103 | 6 |
| 2 | 105 | 2 |
| 2 | 106 | 1 |

61 INDIVIDUAL HISTORY

LIST CONTENT (DIFFICULTY IS CONTAINED)

60

62 TRANSMISSION LIST

| DAY | CONTENT NUMBER |
|-----|----------------|
| 1 | 101 |
| 1 | 102 |
| 1 | 101 |
| 1 | 103 |
| 1 | 103 |

EP 1 628 253 A1

# FIG.26

d40

┌─────────┐          d40                        ┌────────┐
│ LEARNER │───────▶ (PERSONAL REGISTRATION AS REQUIRED)───────▶│ CENTER │
└─────────┘                                     └────────┘

d43

┌──────────────────────────────────────────┐
│ - CONTENT WITH CONDITION                   │
│ - LEARNING SCHEDULE                        │
│ - REGISTRATION PROGRAM                     │
    REFER          │ - LEARNING PRESENTATION PROGRAM            │
│ - DATA TRANSMISSION PROGRAM                │
│ - EXPLANATION AND DISPLAY OF               │
    DOWNLOAD       │   SCHEDULE AND SCORE                       │
│                                            │
    d41            │                                            │
└──────────────────────────────────────────┘

GENERATING IDENTIFICATION
INFORMATION AND
TENTATIVE REGISTRATION
AFTER USER CONFIRMATION

d47

DATABASE REGION
RESERVATION,
STORAGE OF
ENVIRONMENTAL FOR
USAGE, REGISTRATION

INSTALL

d42   REQUEST FOR STARTING FROM USER
(PERSONAL REGISTRATION AS REQUIRED)

d45

d44   TRANSMIT IDENTIFICATION INFORMATION

TENTATIVE      d46   REQUEST FOR INFORMATION TRANSMISSION
REGISTRATION         (INSTALL INFORMATION, IDENTIFICATION INFORMATION)

d49            d48   TRANSMIT REGISTRATION INFORMATION (TERMINAL ID, ETC.)

REGISTRATION         COMPLETE REGISTRATION (STARTING) INFORMATION

READY TO START FOR USER

(LEARNING)   CONTINUE                              d50

EP 1 628 253 A1

# FIG.27

LEARNER · CENTER · SERVER FOR HOME PAGE · THIRD PERSON

LEARNING

d51 — TRANSMIT REACTION DATA

d52 — ANALYZE STORAGE OF DATA

d53 — OUTPUT ANALYSIS RESULT

d54 — NOTIFY URL FOR ANALYSIS RESULT BY E-MAIL OR TRANSMIT ANALYSIS RESULT ITSELF

d54 — NOTIFY URL

d55 — REFER TO OWN DATA OR DATA OF OTHERS

REFER TO HOME PAGE SHOWING RESULT

d55 — REFER

d58 — INFORMATION OF BEGINNING OF NEW SCHEDULE IN CASE OF SCHEDULE IN WHICH SCHEDULE CHANGES IN MID-COURSE

d59 — RESERVATION AND CHANGE OF DATABASE

TRANSMIT LEANING REACTION DATA OF NEW SCHEDULE

EP 1 628 253 A1

# FIG.28

$$y=0.3648x+0.2519$$

SELF ASSESSMENT VALUE

3.00
2.50
2.00
1.50
1.00
0.50
0.00

CYCLE (CYCLE UNIT: 1 MONTH)

1  2  3  4  5  6

YOU REACHED A PREDETERMINED LEANING ABILITY.
WE RECOMMEND TO APPLY QUALIFICATIONS
IN THE FOLLOWING WEBSITES.

××× QUALIFICATION  (AAA FOUNDATION)          http//www.aaa.or.jp

○○○ QUALIFICATION  (BBB ASSOCIATION)         http//www.bbb.or.jp

◆◆◆ QUALIFICATION  (CCC ACADEMIC SOCIETY)  http//www.ccc.or.jp

# FIG.29

EP 1 628 253 A1

LEANING SCORE RESULT WITH ONE WEEK INTERVALS

| WEEK 1 | WEEK 2 | WEEK 3 | WEEK 4 | WEEK 5 | WEEK 6 |
|--------|--------|--------|--------|--------|--------|
| 0.5 | 1 | 1.5 | 2 | 2.5 | 3 |

LEARNING SCORE PREDICTION WITH ONE MONTH INTERVALS

| MONTH 1 | MONTH 2 | MONTH 3 | MONTH 4 | MONTH 5 | MONTH 6 |
|---------|---------|---------|---------|---------|---------|
| 0.25 | 0.5 | 0.75 | 1 | 1.25 | 1.5 |

GRAPH OF ACHIEVEMENT RESULT OF LEARNING WITH ONE WEEK INTERVALS

GRADIENT=0.5

WEEK 1 WEEK 2 WEEK 3 WEEK 4 WEEK 5 WEEK 6

GRAPH OF LEARNING ACHIEVEMENT PREDICTION IN CASE OF ONE MONTH INTERVALS

GRADIENT=0.25

YOUR LEANING ABILITY REACHED ACHIEVEMENT LEVEL 3 AND REACHED A PREDETERMINED KNOWLEDGE LEVEL. JOB OFFERS FROM THE FOLLOWING COMPANIES AND UNIVERSITIES CAN BE ACQUIRED.

| ×××COMPANY | http//www.xxx.co.jp |
|-----------|---------------------|
| ○○○COMPANY | http//www.yyy.co.jp |
| △△△COMPANY | http//www.zzz.co.jp |
| ×××UNIVERSITY | http//www.sss.ac.jp |
| △△△UNIVERSITY | http//www.aaa.ac.jp |

# FIG.30

DATA BASE — 65

A

| USED WORD | VISITING RANK 1 | VISITING RANK 2 | .... |
|---|---|---|---|
| SEARCHING WORD a1 | SITE a11 | SITE a12 | .... |
| SEARCHING WORD a2 | SITE a21 | SITE a22 | .... |
| SEARCHING WORD a3 | SITE a31 | SITE a32 | .... |
| : | : | : | : |

B

| SEARCHING WORD b1 | SITE b11 | SITE b12 | .... |
|---|---|---|---|
| SEARCHING WORD b2 | SITE b21 | SITE b22 | .... |
| SEARCHING WORD b3 | SITE b31 | SITE b32 | .... |
| : | : | : | : |

C

| SEARCHING WORD c1 | SITE c11 | SITE c12 | .... |
|---|---|---|---|
| SEARCHING WORD c2 | SITE c21 | SITE c22 | .... |
| SEARCHING WORD c3 | SITE c31 | SITE c32 | .... |
| : | : | : | : |

D

| SEARCHING WORD d1 | SITE d11 | SITE d12 | .... |
|---|---|---|---|
| SEARCHING WORD d2 | SITE d21 | SITE d22 | .... |
| SEARCHING WORD d3 | SITE d31 | SITE d32 | .... |
| : | : | : | : |

E

| SEARCHING WORD e1 | SITE e11 | SITE e12 | .... |
|---|---|---|---|
| SEARCHING WORD e2 | SITE e21 | SITE e22 | .... |
| SEARCHING WORD e3 | SITE e31 | SITE e32 | .... |
| : | : | : | : |

# FIG.31

START

OBTAIN LEARNING ABILITY LEVEL
OF LEARNER — T1

OBTAIN SEARCHING WORD — T2

T3 SAME WORD IN DATABASE ? — NO → REGISTER SEARCHING WORD — T4 → DISPLAY ORDER OF SEARCH RESULT — T5 → END

YES

COMPARE WITH DATA REGISTERED IN VISITING RANK, DISPLAY REGISTERED SITE IN ORDER OF RANK, AND DISPLAY UNREGISTERED SITE IN ORDER OF SEARCH RESULT — T6

OBTAIN VISITED SITE — T7

T8 SAME SITE IN DATABASE? — NO → NEWLY REGISTER VISITED SITE — T9 → END

YES

COUNT UP NUMBER OF VISITING TIMES — T10

REARRANGE ORDER OF VISITED SITE RANK AND UPDATE DATABASE — T11

END

## INTERNATIONAL SEARCH REPORT

| International application No. |
| --- |
| PCT/JP2004/006487 |

A. CLASSIFICATION OF SUBJECT MATTER
Int.Cl⁷ G06F17/60

According to International Patent Classification (IPC) or to both national classification and IPC

B. FIELDS SEARCHED

Minimum documentation searched (classification system followed by classification symbols)
Int.Cl⁷ G06F17/60

Documentation searched other than minimum documentation to the extent that such documents are included in the fields searched
Jitsuyo Shinan Koho          1922-1996   Toroku Jitsuyo Shinan Koho   1994-2004
Kokai Jitsuyo Shinan Koho    1971-2004   Jitsuyo Shinan Toroku Koho   1996-2004

Electronic data base consulted during the international search (name of data base and, where practicable, search terms used)
JICST FILE(JOIS)

C. DOCUMENTS CONSIDERED TO BE RELEVANT

| Category* | Citation of document, with indication, where appropriate, of the relevant passages | Relevant to claim No. |
| --- | --- | --- |
| A | JP 2001-188462 A (Raningu Kabu Kabushiki Kaisha), 10 July, 2001 (10.07.01), Full text; Figs. 1 to 53 & US 6652283 B1          & WO 01/50439 A1 & EP 1118974 A1        & EP 1118975 A1 & EP 1120764 A1        & EP 1120765 A1 & EP 1120766 A1 | 1-14 |
| A | JP 11-15361 A (Yukio WATANABE), 22 January, 1999 (22.01.99), Full text; Figs. 1 to 7 (Family: none) | 1-14 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 15 June, 2004 (15.06.04) | 29 June, 2004 (29.06.04) |

| Name and mailing address of the ISA/ Japanese Patent Office | Authorized officer |
| --- | --- |
| Facsimile No. | Telephone No. |

Form PCT/ISA/210 (second sheet) (January 2004)

**INTERNATIONAL SEARCH REPORT**

International application No.

PCT/JP2004/006487

C (Continuation). DOCUMENTS CONSIDERED TO BE RELEVANT

| Category* | Citation of document, with indication, where appropriate, of the relevant passages | Relevant to claim No. |
|---|---|---|
| A | JP 2000-267554 A (Kabushiki Kaisha Gakushu Kankyo Kenkyusyo), 29 September, 2000 (29.09.00), Full text; Figs. 1 to 5 (Family: none) | 1-14 |
| Y | JP 2002-351916 A (be void Corp.), 06 December, 2002 (06.12.02), Full text; Figs. 1 to 21 (Family: none) | 14 |
| Y | JP 2003-99468 A (Nippon Telegraph And Telephone Corp.), 04 April, 2003 (04.04.03), Full text; Figs. 1 to 25 (Family: none) | 14 |
| P,A | WO 03/040978 A1 (Takafumi TERASAWA), 15 May, 2003 (15.05.03), Full text; Figs. 1 to 38 (Family: none) | 1-14 |

Form PCT/ISA/210 (continuation of second sheet) (January 2004)

## INTERNATIONAL SEARCH REPORT

| International application No. |
|---|
| PCT/JP2004/006487 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
There is no technical relationship between "the learning schedule evaluation display method" of claim 14 and the inventions of the other claims involving one or more of the same or corresponding "special technical feature".

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**        ☐ The additional search fees were accompanied by the applicant's protest.

☐ No protest accompanied the payment of additional search fees.

Form PCT/ISA/210 (continuation of first sheet (2)) (January 2004)